(19) Europäisches Patentamt / European Patent Office / Office européen des brevets

(11) **EP 4 550 845 A1**

(12) **EUROPEAN PATENT APPLICATION**
published in accordance with Art. 153(4) EPC

(43) Date of publication:
07.05.2025 Bulletin 2025/19

(21) Application number: 23831455.3

(22) Date of filing: 27.06.2023

(51) International Patent Classification (IPC):
**H04R 17/00** (2006.01)     **H01L 29/84** (2006.01)
**H10N 30/30** (2023.01)

(52) Cooperative Patent Classification (CPC):
**H04R 17/00; H10D 48/50; H10N 30/30**

(86) International application number:
**PCT/JP2023/023809**

(87) International publication number:
**WO 2024/005015 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.06.2022 JP 2022103281

(71) Applicant: Silicon & System Co., Limited
San Po Kong, Kowloon, Hong Kong 999077 (HK)

(72) Inventors:
• TADAKI Yoshitaka
  Musashimurayama-shi, Tokyo 208-0023 (JP)
• UMEMURA Shin-ichiro
  Sendai-shi, Miyagi 984-0053 (JP)

(74) Representative: Ipey
Apex House
Thomas Street
Trethomas
Caerphilly CF83 8DP (GB)

(54) **ACOUSTIC ELEMENT**

(57) The present invention comprises: a voltage generation unit that has a vibration body 22a1 and a fixed electric potential electrode 24 in contact with a reception surface of the vibration body 22a1, and that generates voltage on the output surface of the vibration body 22a1; and an impedance conversion element that sets a local section, of the output surface, located at a stress concentration site of the vibration body 22a1 as an electric potential generation site, and sets the electric potential in the electric potential generation site as a control voltage. The impedance conversion element has a substrate region 14 of a first conductivity type, and first and second main electrode regions 15a, 15b of a second conductivity type. The electric potential generation site is joined to the substrate region 14 between the first and second main electrode regions 15a, 15b, and an electric potential barrier, which is generated in a channel between the first and second main electrode regions 15a, 15b, and which controls the movement of carriers, is controlled with the electric potential in the electric potential generation site.

Fig. 2

## Description

### Technical Field

The present invention relates to an acoustic element utilizing the piezoelectric effect, and more particularly, to an acoustic element suitable for receiving purposes.

### Background Art

As disclosed in Non-patent Document 1 and Patent Document 1, the technology of forming a piezoelectric micromechanical ultrasonic transducer (PMUT) array within a single chip is known. However, Non-patent Document 1 only discloses the PMUT array. Additionally, in Patent Document 1, the first chip where the PMUT array is formed and the second chip where the integrated circuit is formed are bonded together through a bonding member called a bonding layer. Therefore, when using the PMUT as a receiving element, the distance between the PMUT and the amplifier inevitably becomes longer, which can deteriorate the signal-to-noise ratio (S/N ratio) due to the parasitic impedance of the wiring connecting them.

Non-patent Document 2 indicates that by connecting the PMUT to the gate of a Field Effect Transistor (FET) via wires, it is possible to achieve high sensitivity and broadband performance by improving the Signal-to-Noise Ratio (S/N ratio). However, the conclusion section (Conclusion) of Non-patent Document 2 points out that since the bandwidth has not been improved, further enhancing sensitivity and broadband performance remains an unresolved issue. To achieve a high-sensitivity and broadband ultrasonic receiver, what is important is not the macrostructure but the detailed layout inside acoustic components, such as which part of the PMUT and how to extract voltage. The invention described in Non-patent Document 2 only studies the separate structure where the PMUT and FET are connected as individual components through external wiring. Therefore, in the invention described in Non-patent Document 2, the microscopic stress distribution in the internal structure of the PMUT and the output voltage distribution in the internal structure related to the stress distribution are not considered. Furthermore, the invention described in Non-patent Document 2 does not study the structure that makes the PMUT itself broadband, the structure that makes the most effective use of the PMUT output, or the integrated structure required for broadband performance, including reducing the braking impedance.

Patent Document 2 and Patent Document 3 show a structure in which an FET serving as a preamplifier is formed on a substrate, and a PMUT directly connected to the gate of the FET is arranged directly above the gate of the FET. However, in both structures, there is a void or cavity between the PMUT and the FET gate, and the two are connected through long wiring (via). This is because in Patent Document 2 and Patent Document 3, both the PMUT and the FET are different components, and ultimately the PMUT must be integrated directly above the FET. In this case, especially due to the large braking impedance caused by the via, it is impossible to fully achieve high sensitivity and broadband performance of the ultrasonic receiver. In any case, when using these PMUT-based systems for ultrasonic reception, meeting high sensitivity, broadband, low output impedance, and other characteristics becomes a practical challenge. In addition, receiving sensors that utilize the piezoelectric effect, such as PMUTs, have very high impedance, which poses a matching problem with amplification circuits such as preamplifiers.

### Existing technical literature

### Patent Document

Patent Document 1: Specification of U.S. Patent No. 10,562,069

Patent Document 2: Japanese Patent Laid-Open Publication No. 2019-503095

Patent Document 3: Japanese Patent Laid-Open Publication No. 2020-535776

### Non-Patent Document

Non-patent Document 1: D. Jiao et al., "High Fill Factor Array of Piezoelectric Micromachined Ultrasonic Transducers with Large Quality Factor", Sensors and Materials, Vol. 32, No. 5, 2020, pp. 1785-1795.

Non-patent Document 2: Hiroki Makino et al., "Development of high-sensitive and wideband FET-based ultrasound receiver directly driven by piezoelectric effect", International Ultrasonics Symposium Proceedings, 2015.

## Summary of the Invention

### Technical Problem

The present invention is conceived in view of the aforementioned issues, with the objective of providing an acoustic element that can achieve high sensitivity and broadband performance, reduce output impedance, and is suitable for use in receiving sensors.

### Solution to Problem

To achieve the aforementioned objective, the acoustic element according to the first embodiment of the present invention comprises: (a) a voltage generating section that includes a vibrator and a fixed potential electrode in contact with the receiving surface of the vibrator. This voltage generating section generates a voltage through the piezoelectric effect on the output surface of the vibrator, which is opposite to the receiving surface (i.e., the surface on the other side of the receiving surface). (b) an impedance transformation element that operates using the potential of a specific localized area on the output surface of the stress concentration portion of the vibrator as a control voltage, with this localized area serving as a potential transfer region. The vibrator can be entirely composed of piezoelectric layers (piezoelectric bodies), or only a portion of the stress concentration portion can be composed of piezoelectric layers (piezoelectric bodies). That is, as long as the voltage generating section is configured with at least a piezoelectric layer (piezoelectric body) in the stress concentration portion of the vibrator, which has a continuous structure as a stress field, it can be implemented. Furthermore, even if the entire vibrator is composed of piezoelectric layers, it is possible to have a vibrator structure with a non-uniform piezoelectric effect that enhances the piezoelectric effect in the stress concentration portion by distributing the piezoelectric constant of the piezoelectric layers. Therefore, the impedance transformation element operates using the potential of a specific localized area of the piezoelectric layer located in the stress concentration portion as a potential transfer region, with the potential of this potential transfer region serving as the control voltage. In the acoustic element according to the first embodiment, the ultrasonic pressure applied to the vibrator is used as the output signal of the impedance transformation element.

### Advantageous Effects of Invention

According to the present invention, an acoustic element that achieves high sensitivity and broadband performance, reduces output impedance, and is suitable for reception can be provided.

### Brief Description of Drawings

Figure 1A is a schematic plan view illustrating the overall structure of an acoustic element according to a first embodiment of the present invention, which can constitute a unit (unit cell) of an acoustic element integrated circuit.

Figure 1B is an enlarged plan view of a portion of the acoustic element in Figure 1, showing the planar layout of an impedance conversion element through a voltage generation section.

Figure 2 is a schematic cross-sectional view illustrating the structure viewed from the direction of II-II in Figure 1B.

Figure 3A is an equivalent circuit diagram illustrating a model in which the gate terminal of a MIS transistor is connected to the output of a piezoelectric element.

Figure 3B is an equivalent circuit diagram of the acoustic element according to the first embodiment.

Figure 4A is a schematic cross-sectional view illustrating a parallel ring-type stress distribution enhancement structure of a simulation object.

Figure 4B is a cross-sectional view illustrating five potential transfer regions provided on the output surface of the vibrator of the stress distribution enhancement structure in Figure 4A.

Figure 4C is a diagram illustrating transient response characteristics in five potential transfer regions when aluminum nitride (AlN) is used in the stress distribution enhancement structure in Figure 4A, as a simulation result.

Figure 4D illustrates the transient response characteristics in five potential transfer regions when the diameter and thickness of the protrusions in the piezoelectric layer composed of AlN differ from those in Figure 4C.

Figure 4E depicts the frequency dependence of voltage sensitivity when using lead zirconate titanate (PZT) in the piezoelectric layer, with the aspect ratio of the central protrusion as a parameter.

Figure 4F shows the frequency dependence of voltage sensitivity when using PZT in the piezoelectric layer, with the aspect ratio of the central protrusion fixed at 1 and the diameter of the central protrusion as a parameter.

Figure 5A is a schematic cross-sectional view showing another type of parallel ring-shaped stress distribution enhancement structure.

Figure 5B is a cross-sectional view illustrating five potential transfer regions provided on the output surface of the vibrator of the stress distribution enhancement structure in Figure 5A.

Figure 5C presents simulation results when using PZT in the piezoelectric layer of the stress distribution enhancement structure in Figure 5A.

Figure 5D illustrates the frequency dependence of voltage sensitivity when using PZT, with the diameter of the protrusions in the piezoelectric layer of the stress distribution enhancement structure shown in Figure 5A as a parameter.

Figure 5E is a model cross-sectional view illustrating asymmetric vibrations when the piezoelectric layer of the single piezoelectric crystal structure bends upward and downward.

Figure 5F shows the stress in the XX direction (Figure 5F(a)), YY direction (Figure 5F(b)), and XY direction (Figure 5F(c)) when using PZT in the piezoelectric layer of the stress distribution enhancement structure in Figure 5A.

Figure 6A is a schematic cross-sectional view illustrating the arrangement of ideal electrodes for detecting minute potentials as a simulation object to verify the voltage distribution of a detailed stress distribution enhancement structure.

Figure 6B presents the simulated transient response when using PZT in the piezoelectric layer of the stress distribution enhancement structure with the ideal electrodes for detecting minute potentials shown in Figure 6A.

Figure 6C is an explanatory diagram of the voltage distribution obtained from simulations with the diameter of the protrusions in the central part of the vibration cavity as a parameter when using PZT in the piezoelectric layer of the stress distribution enhancement structure with the ideal electrodes for detecting minute potentials shown in Figure 6A.

Figure 7A is a schematic cross-sectional view illustrating a V-shaped stress distribution enhancement structure.

Figure 7B illustrates the simulated transient response when using PZT in the piezoelectric layer of the stress distribution enhancement structure shown in Figure 7A.

Figure 7C is a diagram illustrating the simulation results of transient response when using PZT in the piezoelectric layer of the stress distribution enhancement structure with different thicknesses compared to Figure 7B.

Figure 8A is a schematic cross-sectional view illustrating the A-shaped stress distribution enhancement structure.

Figure 8B is a diagram illustrating the simulation results of transient response when using PZT in the piezoelectric layer of the stress distribution enhancement structure shown in Figure 8A.

Figure 9A is a schematic cross-sectional view illustrating the M-shaped stress distribution enhancement structure.

Figure 9B is a diagram illustrating the simulation results of transient response when using PZT in the piezoelectric layer of the stress distribution enhancement structure shown in Figure 9A.

Figure 10A is a schematic cross-sectional view illustrating the W-shaped stress distribution enhancement structure.

Figure 10B is a diagram illustrating the simulation results of transient response when using PZT in the piezoelectric layer of the stress distribution enhancement structure shown in Figure 10A.

Figure 11A is a schematic cross-sectional view illustrating a flat disc-shaped common structure without enhanced stress distribution.

Figure 11B is a diagram illustrating the simulation results of transient response when using PZT in the piezoelectric layer of the flat disc-shaped common structure shown in Figure 11A.

Figure 11C is a diagram illustrating the simulation results of transient response when using AlN in the piezoelectric layer of the flat disc-shaped common structure shown in Figure 11A.

Figure 11D is an explanatory diagram illustrating the transient response when using AlN in the piezoelectric layer of the flat disc-shaped common structure shown in Figure 11A, with different film thicknesses compared to Figure 11C. Figure 12 is a diagram illustrating the frequency dependence of voltage sensitivity when using PZT in the piezoelectric layer with different shapes of stress distribution enhancement structures as parameters (Part 1).

Figure 13 is a diagram illustrating the frequency dependence of voltage sensitivity when using PZT in the piezoelectric layer with different shapes of stress distribution enhancement structures as parameters (Part 2).

Figure 14 is a schematic cross-sectional view illustrating the main part of an acoustic element according to a first variation of the first embodiment of the present invention, corresponding to the structure viewed from the II-II direction of Figure 2A.

Figure 15 is a schematic cross-sectional view illustrating the main part of an acoustic element according to a second variation of the first embodiment of the present invention, corresponding to the structure viewed from the II-II direction of Figure 2A.

Figure 16A is a process cross-sectional view illustrating the manufacturing method of the acoustic element according to the second variation of the first embodiment shown in Figure 15.

Figure 16B is a process cross-sectional view illustrating the manufacturing method of the acoustic element according to the second variation of the first embodiment, following the process of Figure 16A.

Figure 16C is a process cross-sectional view illustrating the manufacturing method of the acoustic element according to the second variation of the first embodiment, following the process of Figure 16B.

Figure 16D is a process cross-sectional view illustrating the manufacturing method of the acoustic element according to the second variation of the first embodiment, following the process of Figure 16C.

Figure 16E is a process cross-sectional view illustrating the manufacturing method of the acoustic element according to the second variation of the first embodiment, following the process of Figure 16D.

Figure 16F is a process cross-sectional view illustrating the manufacturing method of the acoustic element according to the second variation of the first embodiment, following the process of Figure 16E.

Figure 16G is a process cross-sectional view illustrating the manufacturing method of the acoustic element according to the second variation of the first embodiment, following the process of Figure 16F.

Figure 16H is a process cross-sectional view illustrating the manufacturing method of the acoustic element according to the second variation of the first embodiment, following the process of Figure 16G.

Figure 16I is a process cross-sectional view illustrating the manufacturing method of the acoustic element according to the second variation of the first embodiment, following the process of Figure 16H.

Figure 16J is a process cross-sectional view illustrating the manufacturing method of the acoustic element according to the second variation of the first embodiment, following the process of Figure 16I.

Figure 16K is a process cross-sectional view illustrating the manufacturing method of the acoustic element according to the second variation of the first embodiment, following the process of Figure 16J.

Figure 16L is a process cross-sectional view illustrating the manufacturing method of the acoustic element according to the second variation of the first embodiment, following the process of Figure 16K.

Figure 17 is an equivalent circuit diagram illustrating the technical idea of the acoustic element according to the second embodiment of the present invention in a model manner.

Figure 18A is a plan view focusing on the impedance conversion element, showing a part of the acoustic element according to the second embodiment through the voltage generation section.

Figure 18B is a cross-sectional view illustrating the structural outline viewed from the direction of XVIIIB-XVIIIB in Figure 18A.

Figure 18C is a cross-sectional view depicting the structural outline of an acoustic element according to a modified example of the second embodiment of the present invention (corresponding to the cross-sectional structure viewed from the direction of XVIIIB-XVIIIB in Figure 18A).

Figure 18D is a graph showing the frequency dependence of voltage sensitivity of the acoustic element according to the modified example of the second embodiment shown in Figure 18C, with the material used for the center column as a parameter.

Figure 19A is a process cross-sectional view illustrating the process of manufacturing the impedance conversion element side chip as a manufacturing method of the acoustic element according to the second embodiment.

Figure 19B is a process cross-sectional view of the manufacturing method of the acoustic element according to the second embodiment, illustrating the manufacturing process of the impedance conversion element side chip following Figure 19A.

Figure 19C is a process cross-sectional view of the manufacturing method of the acoustic element according to the second embodiment, illustrating the manufacturing process of the impedance conversion element side chip following Figure 19B.

Figure 19D is a process cross-sectional view of the acoustic element manufacturing method according to the second embodiment, illustrating the manufacturing process of the impedance conversion element side chip following Figure 19C.

Figure 19E is a process cross-sectional view of the acoustic element manufacturing method according to the second embodiment, illustrating the manufacturing process of the impedance conversion element side chip following Figure 19D.

Figure 19F is a process cross-sectional view of the acoustic element manufacturing method according to the second embodiment, illustrating the process flow for starting the manufacturing of a new voltage generation section side chip, which is different from the process for manufacturing the impedance conversion element side chip up to Figure 19E.

Figure 19G is a process cross-sectional view of the acoustic element manufacturing method according to the second embodiment, illustrating the manufacturing process of the voltage generation unit side chip after Figure 19F.

Figure 19H is a process cross-sectional view of the acoustic element manufacturing method according to the second embodiment, illustrating the manufacturing process of the voltage generation unit side chip after Figure 19G.

Figure 19I is a process cross-sectional view of the acoustic element manufacturing method according to the second embodiment, illustrating the manufacturing process of the voltage generation unit side chip after Figure 19H.

Figure 19J is a process cross-sectional view of the acoustic element manufacturing method according to the second embodiment, illustrating the manufacturing process of the voltage generation unit side chip after Figure 19I.

Figure 19K is a process cross-sectional view of the acoustic element manufacturing method according to the second embodiment, illustrating the direct bonding of the impedance conversion element side chip manufactured in the processes of Figures 19A to 19E and the voltage generation unit side chip manufactured in the processes of Figures 19F to 19J.

Figure 20 is an equivalent circuit diagram illustrating the technical idea of the acoustic element according to the third embodiment of the present invention in a model manner.

Figure 21A is a plan view focusing on the impedance conversion element and showing a part of the acoustic element according to the third embodiment enlarged by the voltage generation unit.

Figure 21B is a schematic cross-sectional view of the structure viewed from the direction of XXIB-XXIB in Figure 21A.

Figure 22 is an equivalent circuit diagram illustrating the technical idea of the acoustic element according to a modified example of the third embodiment of the present invention in a model manner.

Figure 23 is a schematic cross-sectional view of the structure of the acoustic element according to the modified example of the third embodiment.

Figure 24 is an equivalent circuit diagram illustrating the technical idea of the acoustic element according to the fourth embodiment of the present invention in a model manner.

Figure 25 is an equivalent circuit diagram illustrating the technical idea of the acoustic element according to the fifth embodiment of the present invention in a model manner.

Figure 26 is a schematic cross-sectional view of the structure of the acoustic element according to the fifth embodiment shown in Figure 25.

Figure 27 is a plan view illustrating an example of the planar layout of the impedance conversion element constituting the acoustic element according to another embodiment (illustrating the structure of the main part of the orthogonal complementary element circuit constituting the impedance conversion element by taking an example of the voltage generation unit located above it).

Figure 28B illustrates the operation of the positive complementary element circuit shown in Figure 28A, specifically describing the changes in the potential barrier of electrons in one main current as the saddle point of the potential distribution.

Figure 28C illustrates the changes in the potential barrier of holes in the other main current in the positive complementary element circuit shown in Figure 28A.

Figure 28D is an equivalent circuit diagram used to illustrate, in a model manner, an example of circuit configuration when the positive cross-component circuit shown in Figure 28A is used as an impedance transformation component.

Figure 29 is a plan layout diagram showing a modified example of the acoustic component shown in Figure 28A.

Figure 30 is a graph comparing the frequency dependence of voltage sensitivity when using AlN and PZT for the central protrusion, with the material of the residual plate-shaped portion being different from or the same as that of the central protrusion.

Figure 31 is a model diagram used to illustrate the stress asymmetry generated when a unimorph structure with a disc-shaped vibration cavity is bent up and down to form a convex surface.

**Description of Embodiments**

Hereinafter, with reference to the accompanying drawings, the acoustic elements of the first to fifth embodiments will be described as specific examples of the present invention. In the following description and drawings of the acoustic elements of the first to fifth embodiments, the same or similar parts are denoted by the same or similar reference numerals and are collectively explained. However, it should be noted that the drawings are schematic, and the relationship between thickness and planar dimensions, as well as the size ratios of various components, may differ from the actual situation. Therefore, specific thicknesses, dimensions, sizes, etc. should be judged more diversely based on the technical ideas comprehended in the following description. In addition, there are naturally parts with different dimensional relationships and proportions between the drawings.

Furthermore, the acoustic elements of the first to fifth embodiments shown below are examples illustrating the device structure, manufacturing method, and other aspects of the technical idea used in this invention. The technical idea of this invention does not limit the materials, shapes, structures, or configurations of the constituent elements, as well as the steps of the manufacturing method, to those shown in the first to fifth embodiments. That is, the technical idea of this invention is not limited to the descriptions of the acoustic elements of the first to fifth embodiments below, and various modifications can be made within the technical scope specified by the claims recorded in the patent claims.

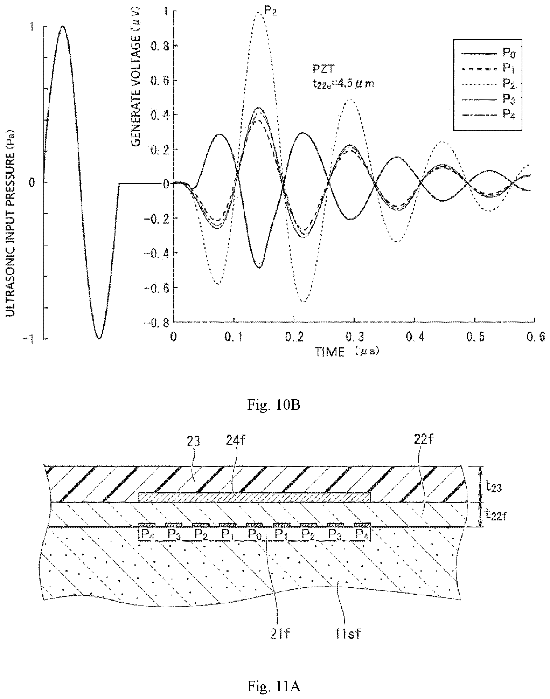

In traditional PMUTs, a bimorph-type structure is commonly employed, which involves forming piezoelectric layers on both sides of a fixed-potential electrode. In addition to the structure with two piezoelectric layers, a bimorph-type structure is also known, in which a piezoelectric layer is formed on one side of the fixed-potential electrode, and an elastic layer composed of a material with a different rigidity from the piezoelectric layer is formed on the other side. However, in the acoustic elements of the first to fifth embodiments shown below, for example, as shown in Figure 11A, the description is based on a voltage generation section with a unimorph-type (single-crystal type) structure composed of a vibrator 22f consisting of a single piezoelectric layer and a fixed-potential electrode 24a in contact with the receiving surface of the vibrator 22f. That is, in the description of the acoustic elements of the first to fifth embodiments, the main focus is on the voltage generation section of the unimorph-type structure and the receiving element composed of an impedance transformation element that operates using the potential of a specific part (local) of the voltage generation section as a control voltage. However, the description of the unimorph-type structure is for convenience only, and is not intended to limit the scope of application of the present invention to the unimorph-type structure. A bimorph-type structure is also possible.

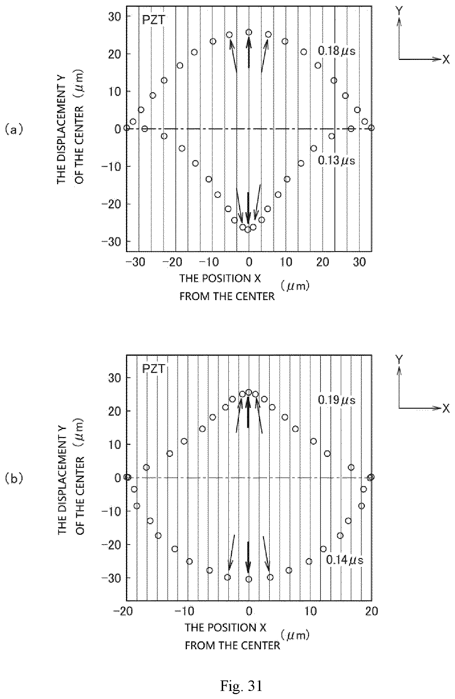

The structure of the flat disc-type vibrating cavity shown in Figure 11A is a conventionally known structure from the perspective of focusing on the vibrating cavity. However, to the inventor's knowledge, examples of constructing a flat disc-type vibrating cavity like Figure 11A for a unimorph structure are not common. For the thin flat disc-type vibrating cavity 21f shown in Figure 11A, as shown in Figure 31, consider the vibration of the vibrator 22f composed of a flat piezoelectric layer bending on the upper and lower sides along the normal direction of the disc (Y direction in Figure 31). As shown in Figure 31, when the flat vibrator 22f bends on the upper side to form an upward convex surface and bends on the lower side to form a downward convex surface, mutually asymmetric vibrations with different intervals will occur. Figure 31 is a model diagram assuming that the vibrator 22f is flat in the horizontal direction (X direction in Figure 31) in a no-load state.

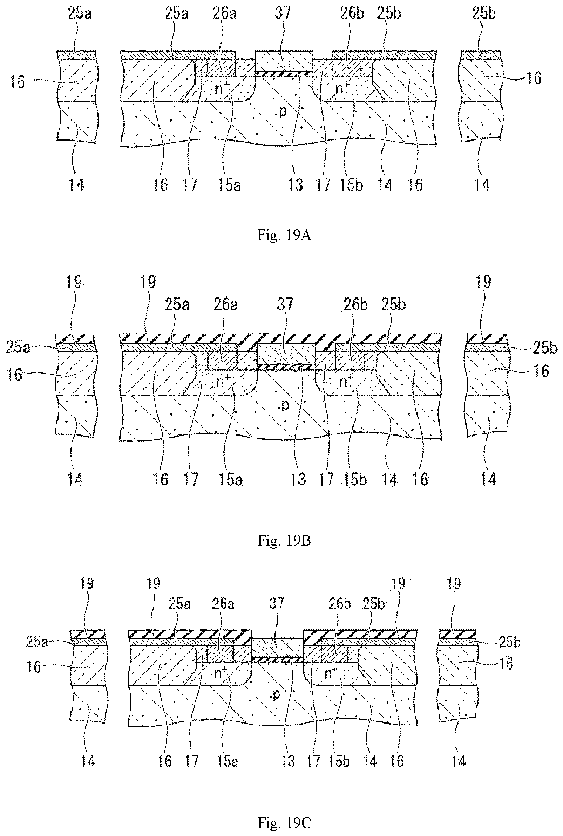

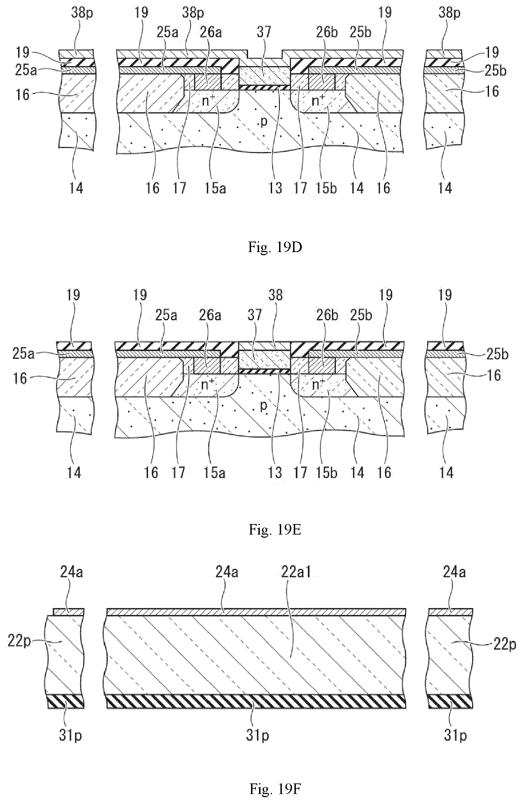

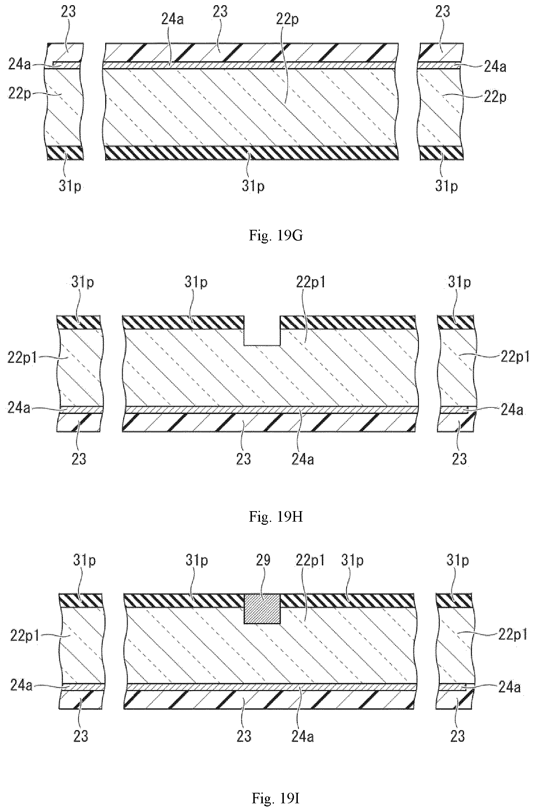

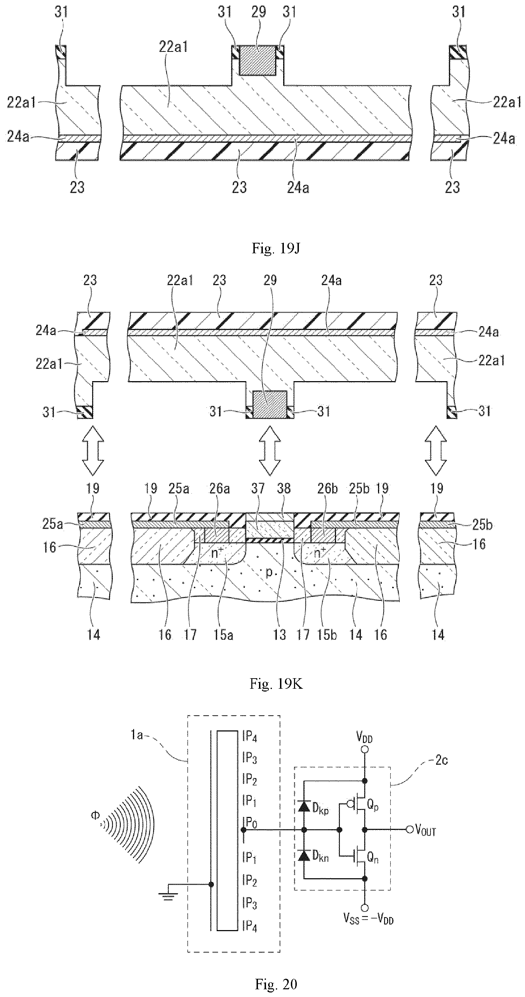

Figure 31(a) depicts the displacement diagram of the vibrator 22f composed of PZT when a disc-shaped vibrating cavity 21f with a diameter of $66\mu m$ is formed in the X direction. In Figure 31(a), 19 circles, arranged at equal intervals of approximately $3.7\mu m$ in the X direction under a no-load condition, represent the displacement levels of the circles in the Y direction at positions varying from the center along the X direction. In the scenario depicted in Figure 31(a), when the vibrator 22f bends upward, the spacing between the circles at the center of the vibrator 22f tends to expand in the X direction. Conversely, when the vibrator 22f bends downward, the spacing between the circles at the center tends to contract in the X direction, indicating uneven strain in the vibrator 22f, and consequently, uneven stress within it. The shape of the circles arrangement in Figure 31(a) when the vibrator 22f bends downward represents the displacement positions of each oval after $0.13\mu s$ has elapsed since the arrival of the ultrasonic pulse, while the shape when the vibrator 22f bends upward represents the displacement positions of each oval after $0.18\mu s$ has elapsed.

Figure 31(b) illustrates a case where a disc-shaped vibrating cavity 21f with a diameter of $40\mu m$ is formed in the X direction. The unloaded state of the vibrator 22f, which is composed of lead zirconate titanate ($PbZr_xTi_{1-x}O_3$: PZT), is modeled as 19 circles arranged at equal intervals of approximately $2.2\mu m$ in the X direction. In the model depicted in Figure 31(b), when the plate-shaped vibrator 22f bends upward to form a curved surface, the spacing between the circles in the center of the vibrator 22f narrows in the X direction. Conversely, when the plate-shaped vibrator 22f bends downward to form a curved surface, the spacing between the circles in the center of the vibrator 22f widens in the X direction. The shape of the circles arrangement in Figure 31(b) when the vibrator 22f bends downward represents the displacement positions of each oval after $0.14\mu s$ has elapsed since the arrival of the ultrasonic pulse, while the shape of the circles arrangement when the vibrator 22f bends upward represents the displacement positions of each oval after $0.19\mu s$ has elapsed since the arrival of the ultrasonic pulse. In the case of Figure 31(b), it is also evident that the strain of the vibrator 22f is uneven, resulting in uneven stress within the vibrator 22f.

In the unimorph structure, due to the uneven strain and stress of the vibrator 22f, which constitutes the voltage generation part, a higher voltage is generated at a specific location on the output surface (the lower main surface in Figure 11A) opposite to the receiving surface of the vibrator 22f (the surface on the other side of the receiving surface). This feature is characterized by the in-plane non-uniformity of the generated voltage. The "specific location" on the output surface of the vibrator 22f corresponds to the region where the stress of the vibrator 22f is concentrated. This specific location within the surface defines the potential transfer area of the acoustic element according to the first to fifth embodiments. The impedance conversion element operates with the potential of the potential transfer area as the control voltage, and the ultrasonic pressure applied to the piezoelectric layer is used as the output signal of the impedance conversion element. This output signal is used as the output signal of the acoustic element according to the first to fifth embodiments.

When the impedance transforming element is composed of a single active element, the "first main electrode region" of the active element refers to the semiconductor region that becomes either the source region or the drain region in an electric field effect transistor (FET), static induction transistor (SIT), high electron mobility transistor (HEMT), or a new transistor structure equivalent to these. In a bipolar junction transistor (BJT), insulated gate bipolar transistor (IGBT), or a semiconductor element of a new structure equivalent to these, it refers to the semiconductor region that becomes either the emitter region or the collector region. Additionally, in a thyristor such as a MIS-controlled static induction thyristor (SI thyristor) or a semiconductor element of a new structure equivalent to these, it refers to the semiconductor region that becomes either the anode region or the cathode region. The "second main electrode region" in FETs, SITs, HEMTs, etc., refers to the semiconductor region that becomes either the source region or the drain region outside the first main electrode region. In BJTs, IGBTs, etc., it refers to the region that becomes either the emitter region or the collector region outside the first main electrode region. In SI thyristors, etc., it refers to the semiconductor region that becomes either the anode region or the cathode region outside the first main electrode region.

In this way, when the impedance transforming element is composed of a single active element, if the "first main electrode region" is the source region, the "second main electrode region" is the drain region, and the "main current" flows between the first main electrode region 15a and the second main electrode region 15b. If the "first main electrode region" is the emitter region, the "second main electrode region" is the collector region. If the "first main electrode region" is the anode region, the "second main electrode region" is the cathode region. In cases such as MISFETs, if the bias relationship is exchanged, the functions of the "first main electrode region" and the "second main electrode region" may be interchangeable. When the impedance transforming element is composed of multiple active elements, such as in a CMOS-type circuit configuration or differential amplifier, for each of the multiple active elements, a pair of first main electrode region 15a and second main electrode region 15b, a pair of third main electrode region 15d and fourth main electrode region 15c, and so on are sequentially defined. For example, in the CMOS-type circuit configuration described in the third embodiment, the "third main electrode region" refers to the semiconductor region that becomes either the source region or drain region in FETs, SITs, HEMTs, etc., and the "fourth main electrode region" refers to the semiconductor region that becomes either the drain region or source region paired with the third main electrode region in FETs, SITs, HEMTs, etc.

In addition, the terms "upper", "lower", "up", "down", and the directional definitions using "up" and "down" in the following description are solely for the convenience of explanation and do not limit the technical idea of the present invention. For instance, if the object is rotated by 90°, the up and down will be converted to left and right reading, and if rotated by 180°, the up and down will be reversed. Furthermore, in the following description, the case where the first conductivity type is p-type and the second conductivity type is n-type is taken as an example for explanation. However, the opposite conductivity type relationship can also be chosen, that is, setting the first conductivity type as n-type and the second conductivity type as p-type. The first conductivity type and the second conductivity type do not necessarily have to be commonly defined in the following first to fifth embodiments. For example, in the descriptions of the first to fourth embodiments regarding MIS-type transistors (hereinafter referred to as "MIS transistors"), the first conductivity type is defined as p-type and the second conductivity type is defined as n-type, but in the description of the fifth embodiment regarding junction transistors, the first conductivity type is set as n-type and the second conductivity type is set as p-type. Within the descriptions of each embodiment, as long as the definitions of the first conductivity type and the second conductivity type are common, it is sufficient. Additionally, within the descriptions of each embodiment, the opposite conductivity type relationship can also be chosen.

Similarly, in the descriptions of the first to fourth embodiments, the first main electrode region is described as the drain region and the second main electrode region is described as the source region. However, in the descriptions of the second to fifth embodiments, the definition of the first main electrode region as the source region and the second main electrode region as the drain region is easier to understand. Within the descriptions of each embodiment, as long as the definitions of the first main electrode region and the second main electrode region are common, it is sufficient. Additionally, within the descriptions of each embodiment, the definition relationship of the first main electrode region and the second main electrode region can also be selected inversely. Furthermore, the "+" and "-" appended after "n" and "p" respectively indicate semiconductor regions with relatively higher or lower impurity density compared to semiconductor regions without appending "+" and "-". Additionally, the "--" appended after "n" and "p" indicates a high-resistivity semiconductor region very close to the intrinsic semiconductor (i-layer). However, even if semiconductor regions with the same "+" or "-" appendage, or semiconductor regions without appending "+" and "-", do not necessarily mean that their respective impurity densities are strictly the same.

## First Embodiment

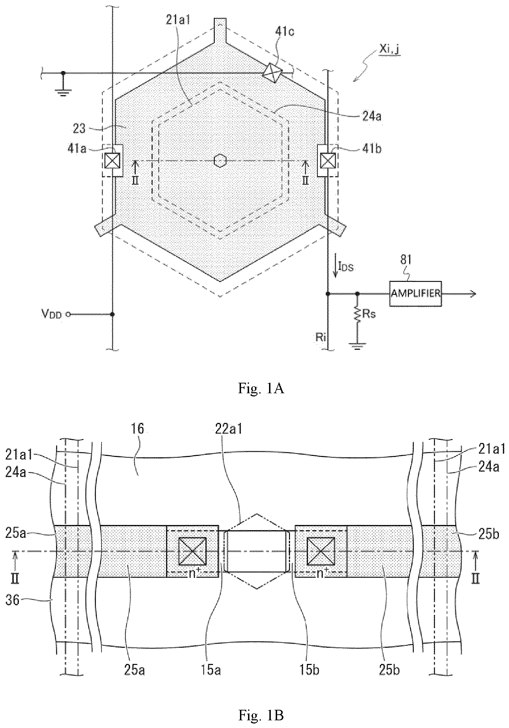

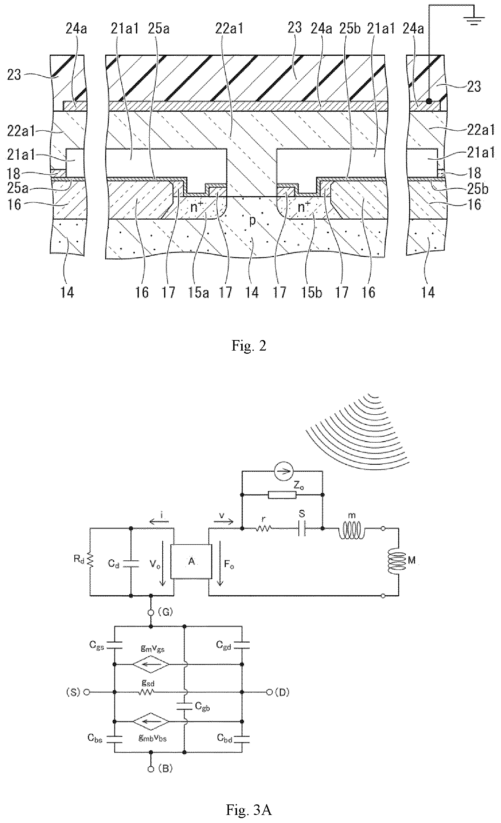

The regular hexagonal unit cell $X_{i,j}$ (although not shown in the figure) shown in Figure 1A, together with adjacent regular hexagonal unit cells $X_{(i-1),\ (j+2)}$, ..., $X_{(i-1),\ (j+1)}$, $X_{i,\ (j+1)}$, $X_{(i+1),\ (j+1)}$, ..., $X_{(i-1),\ j}$, $X_{(i+1),\ j}$, ..., $X_{i,\ (j-1)}$, $X_{(i+1),\ (j-1)}$, ..., is arranged in a two-dimensional matrix and serves as a unit element capable of forming an acoustic element integrated circuit pattern. That is, as shown in Figure 1A, Figure 1B, and Figure 2, the acoustic element of the first embodiment of the present invention includes voltage generating sections (22a1, 24a) that generate non-uniform voltages through piezoelectric effect, and impedance transforming elements (14, 15a, 15b) that operate with the potential of specific parts (local) of the voltage generating sections (22a1, 24a) as a control voltage. As can be seen from the following description, the acoustic element of the first embodiment can improve reception sensitivity and is therefore suitable for receiving elements. The unit cells $X_{i,j}$ shown in Figure 1A can be arranged on the same plane (the same curved surface) to form a two-dimensional matrix.

In Figure 1A, the case where the planar pattern is a regular hexagon is illustrated. However, the planar pattern of the voltage generating sections (22a1, 24a) is not limited to a regular hexagon. Various planar patterns such as a regular octagon, regular dodecagon, and regular icosahedron can also be adopted. Considering the corner rounding in the lithography process during manufacturing, the regular icosahedron on the mask level will have a shape closer to the actual shape after the manufacturing process. However, from the perspective of suppressing harmonics generated during the drum-like vibration of the voltage generating sections (22a1, 24a), regular hexagons and higher-order regular polygons are preferred. Additionally, as the vibrating body 22a1, wurtzite compound semiconductors such as aluminum nitride (AlN), gallium nitride (GaN), zinc oxide (ZnO), and cadmium sulfide (CdS) belong to the hexagonal crystal system and have good compatibility with the shape of a regular hexagon (perovskite structures such as PZT belong to the cubic crystal system).

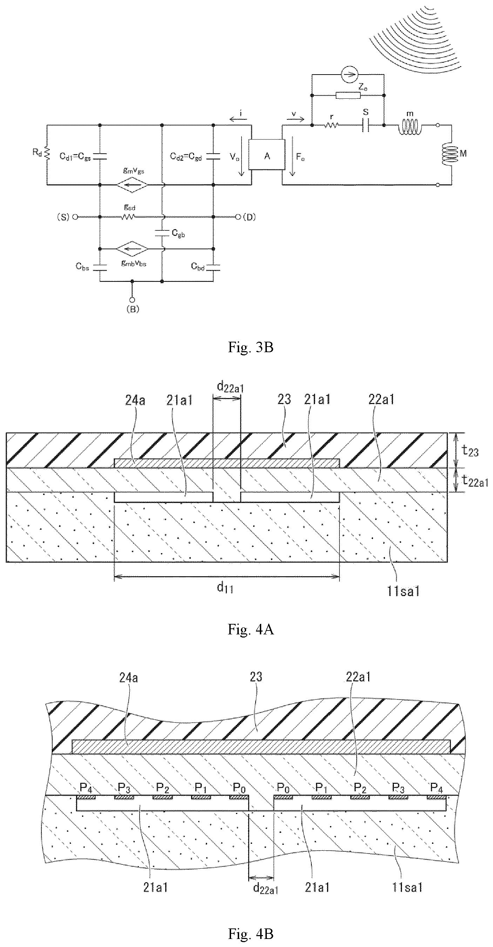

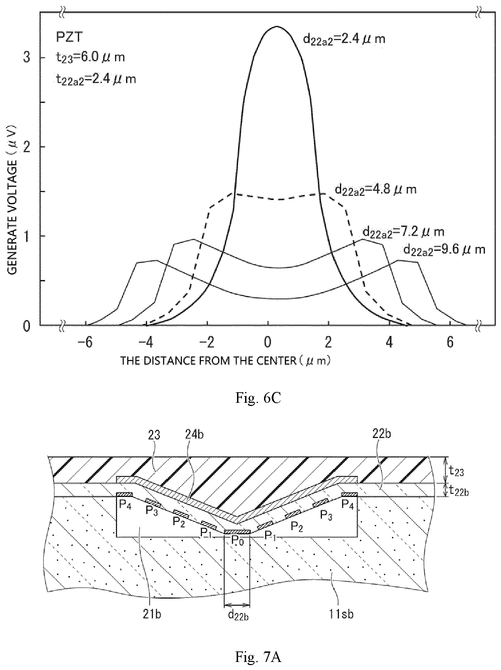

As can be seen from the cross-sectional view in Figure 2, the voltage generating section (22a1, 24a) features a unimorph structure, comprising a vibrator 22a1 and a fixed potential electrode 24a in contact with the receiving surface (the upper main surface in Figure 2) of the vibrator 22a1. This unimorph voltage generating section (22a1, 24a) generates a higher voltage at a specific part of the output surface (the lower main surface in Figure 2) opposite to the receiving surface of the vibrator 22a1 (the surface on the other side of the receiving surface) due to the piezoelectric effect, exhibiting a voltage distribution with unevenly generated voltage as shown in Figure 6C. In Figure 6C, the horizontal axis represents the distance from the center, but the "specific part" of the output surface of the vibrator 22a1 refers to, for example, the potential transfer area corresponding to the stress concentration area of the vibrator 22a1, which is located inside the area marked as $P_0$ in Figure 4B. As shown in Figure 2, the vibrator 22a1 can be entirely composed of piezoelectric layers, or only a portion corresponding to the stress concentration area can be composed of piezoelectric layers, with the remaining part being non-piezoelectric layers. For instance, only the columnar portion constituting the central protrusion can be composed of piezoelectric layers, while the remaining plate-like portion and peripheral areas can be non-piezoelectric layers. That is, as long as the voltage generating section is configured with at least a piezoelectric layer at the stress concentration area of the vibrator 22a1, it is sufficient. Therefore, the impedance transforming elements (14, 15a, 15b) operate by using a specific local part of the piezoelectric layer located at least at the stress concentration area as a potential transfer area, and operate with the potential of this potential transfer area as the control voltage.

The impedance transformation elements (14, 15a, 15b) operate with the potential of the potential transfer area located in the downward protrusion on the output surface side of the vibrator 22a1 in the central part of Figure 2 as the control voltage. That is, the output voltage of the voltage generation section (22a1, 24a) generated by the ultrasonic pressure applied to the vibrator 22a1 is used as the input signal for the impedance transformation elements (14, 15a, 15b). Then, the output signal converted by the impedance transformation elements (14, 15a, 15b) becomes the output signal of the receiving element $X_{i,j}$ The downward protruding convex part on the output surface side of the vibrator 22a1 is indicated by a dashed line in Figure 1A, and the regular hexagonal shape is indicated by a double-dot dashed line in Figure 1B, representing a regular hexagonal prism-shaped convex part. As shown in Figure 2, the convex part arranged in a stepped structure at the central part of the output surface side of the vibrator 22a1 is surrounded by a parallel ring-shaped vibration cavity 21a1 in a centrally symmetric manner. As can be understood from the plan view of Figure 1A, the ring-shaped surface constituting the vibration cavity 21a1 has a topological structure with a regular hexagonal planar pattern. In the cross-sectional view of Figure 2, the vibration cavity 21a1 is located on both sides of the central downward protrusion. However, in reality, the two vibration cavities 21a1 located on both sides of the central protrusion are continuous and integrated structures on the front and rear sides of the paper surface.

As shown in Figure 1A, on the outer side of the outer wall (indicated by dashed lines) of the hexagonal vibration cavity 21a1, the dashed lines defining the outline of the hexagonal fixed potential electrode 24a pattern are set to surround the planar pattern of the vibration cavity 21a1. Corresponding to Figure 1A, on the left and right sides of Figure 1B, the positions of the outer inner wall of the vibration cavity 21a1 and the outer circumferential position of the fixed potential electrode 24a are indicated by double-dot dashed lines. The planar patterns of the ring surface constituting the vibration cavity 21a1 and the planar pattern of the convex portion located at the center of the ring surface are hexagonal, which is due to the geometric similarity requirement caused by the shape of the unit cell $X_{i,j}$ shown in Figure 1A being hexagonal. For example, if the shape of the unit cell $X_{i,j}$ is octagonal, dodecagonal, icosahedral, circular, etc., it is ideal to adopt similar shapes such as octagonal, dodecagonal, icosahedral, circular, etc. for the planar patterns of the outermost circumference of the ring surface and the convex portion located at the center of the ring surface.

The impedance conversion element (14, 15a, 15b) of the acoustic element according to the first embodiment, as shown in Figures 1B and 2, is an active element comprising a base region 14 formed by a first conductive type (p-type) semiconductor region, and a first main electrode region 15a and a second main electrode region 15b, which are formed by a second conductive type ($n^+$-type) semiconductor region and are arranged separately on top of the base region 14. As shown in Figure 2, the upper surface of the base region 14 between the first main electrode region 15a and the second main electrode region 15b is bonded (heterojunction) to the potential transfer region (located at a central position in Figure 2) of the vibrator 22a1. For example, by using GaN with a bandgap width of 3.4-3.5eV as the base region 14 and AlN with a bandgap width of 5-6.2eV as the vibrator 22a1, an AlN/GaN heterojunction is formed, thereby constituting a heterojunction field-effect transistor (heterojunction FET). Both GaN and AlN have a wurtzite crystal structure, with the lattice constant of GaN in the a-axis direction being 0.318nm and that of AlN being 0.311nm, resulting in a lattice mismatch of approximately 2.4%, indicating good compatibility as a heterojunction.

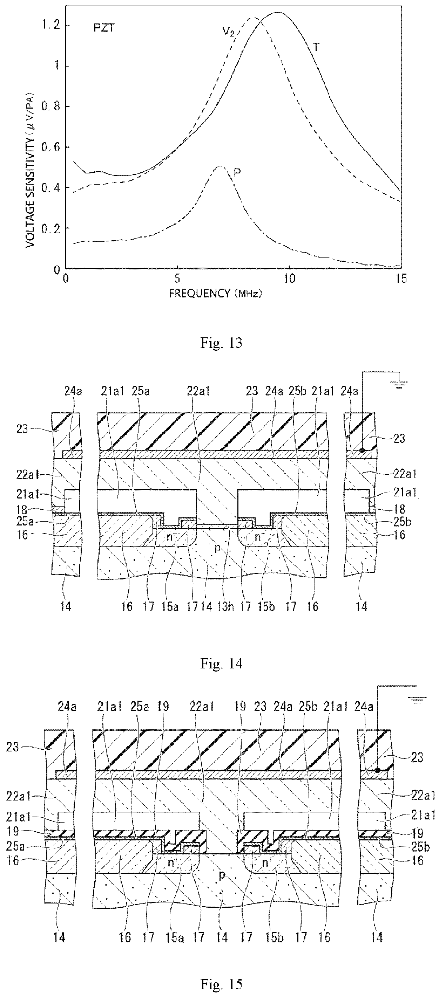

When epitaxially growing AlN (with a longer bond length) on the GaN surface with a c-axis oriented facet, due to the difference in lattice constants between the two, AlN will undergo tensile strain, and internal piezoelectric polarization will be applied to AlN. GaN is also a polar crystal, thus exhibiting piezoelectric polarization. Due to the effects of these two types of piezoelectric polarization, positive fixed charges will be generated at the AlN/GaN interface, and a two-dimensional electron gas will form at the interface. In the case where the substrate region 14 is composed of a GaN substrate, the first main electrode region 15a and the second main electrode region 15b of the impedance transformation element (14, 15a, 15b) can also be composed of GaN. Even in the case where the substrate region 14 is composed of a Si substrate, as shown in Figure 14, AlN can be epitaxially grown on the buffer layer 13h by using the buffer layer 13h. Additionally, if defects at the heterojunction interface are not considered, AlN can also be directly epitaxially grown on a Si substrate.

Around the periphery of the body region 14, the element isolation insulating film 16 is arranged in a frame shape to define the range of the active region. In the cross-sectional view of Figure 2, the element isolation insulating film 16 is located on both sides of the active region, but the element isolation insulating film 16 on both sides of the active region is a continuous integrated structure on both the front and back sides of the paper. Inside the active region pattern surrounded by the element isolation insulating film 16, the range (region) of the upper surface of the body region 14 is defined. Above the upper surface (surface) of the active region surrounded by the element isolation insulating film 16, the first main electrode region 15a and the second main electrode region 15b are arranged. Inside the rectangular body region 14 sandwiched between the first main electrode region 15a and the second main electrode region 15b, a channel for carrier flow is formed near the heterojunction interface of the body region 14. In the center of Figure 1B, the range of the regular hexagonal potential transfer region is indicated by a two-dot chain line. The regular hexagonal potential transfer region, defined as the convex portion on the output surface side of the vibrating body 22a1, is arranged above the channel near the heterojunction interface to enable selective electrostatic induction effects to be locally imparted to the channel. The channel is formed near the heterojunction interface due to changes in surface potential distribution in the depth direction caused by differences in work functions of the materials constituting the heterojunction, resulting in bending of the energy band for carrier accumulation. In the case of an AlN/GaN heterojunction, when it is desired to accumulate two-dimensional electron clouds at the energy band bending point, it is desirable to set GaN as an i-type and AlN as an n-type, bending the energy band at the conduction band edge of GaN below the Fermi level.

Then, through the n-p-n structure between the first main electrode region 15a and the second main electrode region 15b, a potential barrier that controls carrier movement is formed in the channel. Within the hexagonal region indicated by the double-dotted line, a selective electrostatic induction effect occurs within a depth ranging from the heterojunction to the Debye length. As a result, the height of the potential barrier generated between the first main electrode region 15a and the second main electrode region 15b is controlled by the potential of the potential transfer region of the vibrating body 22a1. The potential of the base region 14 can be set to a fixed potential such as ground potential. This operation is similar to that of a conventional heterojunction FET, but differs from it in that there is no gate electrode. In the structure shown in Figure 2, if the fixed potential electrode 24a is grounded, the Fermi level in the band diagram becomes 0V at the position of the fixed potential electrode 24a. When an ultrasonic wave is input, the Fermi level inside the vibrating body 22a1, especially near the heterojunction interface, vibrates. When the Fermi level at the heterojunction interface vibrates, the height of the potential barrier of the n-p-n structure changes. In the case of the impedance conversion element (14, 15a, 15b) of the acoustic element according to the first embodiment, as shown in the equivalent circuit of Figure 3B, the vibrating body 22a1 itself functions as a gate dielectric layer of a conventional MIS transistor. Moreover, although there is no gate electrode structure, the voltage across the first braking capacitor $_{Cd1}$ ($=_{Cgs}$) and the second braking capacitor $_{Cd2}$ ($=C_{gd}$) shown in Figure 3B, etc., specifies the gate voltage for the local region, namely, the channel.

Since the acoustic element according to the first embodiment does not have a gate electrode, there is no need to connect the PMUT as a single element and the FET as a single element through external wiring, as described in Non-Patent Document 2. Therefore, the acoustic element according to the first embodiment essentially does not have a floating impedance problem. Moreover, since the voltage generation sections (22a1, 24a) adopt a stress enhancement structure as shown in Figures 4A to 6C, achieving high sensitivity and broadband performance, the acoustic element according to the first embodiment can achieve high sensitivity and broadband performance. In particular, by selecting a specific position where the voltage generated on the output surface of the vibrator 22a1 is the highest as the potential transfer region and driving the active elements of the impedance conversion elements (14, 15a, 15b), it is easy to achieve high sensitivity.

As shown in Figure 2, an interlayer insulating film 17 is provided on the first main electrode region 15a and the second main electrode region 15b. Through contact holes opened in the interlayer insulating film 17, the first main electrode region 15a is connected to a first main electrode wiring 25a, and the second main electrode region 15b is connected to a second main electrode wiring 25b. In Figure 1B, the rectangular area indicated by dashed lines below the first main electrode wiring 25a and the second main electrode wiring 25b is hidden, and the first main electrode region 15a and the second main electrode region 15b of the active element are arranged opposite each other with their short sides separated.

On the upper right diagonal side of the hexagon forming the outer perimeter of the fixed potential electrode 24a, a third contact plug 41c connected to a first power source is arranged. The third contact plug 41c is connected to the fixed potential electrode 24a. In Figure 1A, the first power source is exemplified as being at ground potential (GND), but it is not limited to ground potential (GND); any fixed potential will do. Additionally, two rectangular grooves (cuts) are provided as planar patterns on the outer perimeter of the hexagon forming the fixed potential electrode 24a. In these two grooves, a first contact plug 41a connected to a second power source $V_{DD}$ and a second contact plug 41b connected to a signal wiring $R_i$ are arranged, respectively. Specifically, the first contact plug 41a is arranged inside the groove provided on the left vertical side of the hexagonal planar pattern forming the outer perimeter of the fixed potential electrode 24a, and the second contact plug 41b is arranged inside the groove provided on the right vertical side. The first contact plug 41a is connected to a first main electrode wiring 25a, and the second contact plug 41b is connected to a second main electrode wiring 25b. The signal wiring $R_i$ is connected to an amplifier 81 through an output resistor $R_s$. If the first main electrode region 15a is regarded as the drain region and the second main electrode region 15b is regarded as the source region, the circuit shown in Figure 1A is an example of a source-grounded circuit form.

The upper section of Figure 3A illustrates the equivalent circuit of the piezoelectric element functioning as the voltage generating sections (22a1, 24a) depicted in Figure 2. The "A" enclosed in a square at the left center of the upper section, representing an ideal transformer, is referred to as the "force coefficient", corresponding to the amplification ratio of the transformer. The force coefficient A represents the conversion coefficient between the force $F_o$ of the mechanical system and the voltage $V_o$ of the electrical system,

$$F_o = AV_o \qquad \ldots\ldots (1)$$

Connect the mechanical system circuit on the right side of the previous paragraph with the electrical system circuit on the left side of the previous paragraph. The magnitude of the force coefficient A depends on the d-constant and e-constant of the piezoelectric material. That is, the force coefficient A depends on the structure, the electromechanical coupling coefficient of the piezoelectric material, etc., but it only serves as a conversion ratio. As shown in equation (1), the larger the force coefficient A, the higher the conversion efficiency of electrical and mechanical energy.

The equivalent circuit of the mechanical system shown on the right side of the upper section of Figure 3A is composed of an ideal transformer connected in series to the force coefficient A, with the mechanical loss resistance (equivalent mechanical resistance) r, equivalent mass (m+M), and equivalent compliance s connected in series. The equivalent compliance s is the reciprocal of the equivalent stiffness c (s=1/c). The equivalent mass M corresponds to the part that generates the force of the mechanical system and is the mass component that contributes to the input of ultrasonic waves. The equivalent mass m is the inherent mass component in the piezoelectric element, excluding the equivalent mass M. Moreover, at the mechanical loss resistance r and equivalent compliance s that constitute the series circuit, a current source with an internal resistance $Z_0$ that is almost infinite and a vibration source that vibrates due to the input of ultrasonic waves are connected. The equivalent circuit of the electrical system shown on the left side of the upper section is represented by a braking capacitor $C_d$ and a braking resistor (dielectric loss resistance) $R_d$ connected in parallel to the ideal transformer of the force coefficient A.

The lower segment of Figure 3A illustrates the small-signal equivalent circuit of a MIS transistor (insulated gate transistor) featuring a gate insulating film (gate oxide film) structure. Heterojunction FETs and HEMTs are also types of MIS transistors. The connection node where the upper and lower circuits of Figure 3A are connected is denoted as the gate terminal G of the MIS transistor. The gate terminal G corresponds to the gate electrode situated on the gate insulating film. On the left side of the lower segment, the terminal corresponding to the first main electrode region 15a, serving as an impedance transformation element (14, 15a, 15b), is labeled as the drain terminal D of the MIS transistor. On the right side of the lower segment, the terminal corresponding to the second main electrode region 15b is labeled as the source terminal S of the MIS transistor. The bottom segment of Figure 3A depicts the substrate terminal B of the MIS transistor. A gate-source capacitance $C_{gs}$ is indicated between the gate terminal G and the source terminal S, a gate-drain capacitance $C_{gd}$ is depicted between the gate terminal G and the drain terminal D, and a gate-substrate capacitance $C_{gb}$ is shown between the gate terminal G and the substrate terminal B.

Between the substrate terminal B and the source terminal S, a substrate-source capacitance $C_{bs}$ is shown. Between the substrate terminal B and the drain terminal D, a substrate-drain capacitance $C_{bd}$ is shown. Between the source terminal S and the drain terminal D, a source-drain conductance $g_{sd}=1/r_{sd}$ ($=\Delta I_{DS}/\Delta V_{DS}$) is shown. Additionally, between the source terminal S and the drain terminal D, a current source $g_m v_{gs}$ and a current source $g_{mb} v_{bs}$ are connected in parallel. $g_m$ represents the gate mutual conductance $\Delta I_{DS}/\Delta V_{GS}$, while $g_{mb}$ represents the substrate mutual conductance $\Delta I_{DS}/\Delta V_{BS}$. The gate-source capacitance $C_{gs}$ and gate-drain capacitance $C_{gd}$ of the MIS transistor small-signal equivalent circuit shown in the lower part of Figure 3A correspond to the gate insulating film capacitance of the MIS transistor. A portion of the gate-substrate capacitance $C_{gb}$ also corresponds to a portion of the gate insulating film capacitance.

However, the impedance conversion elements (14, 15a, 15b) shown in Figure 2 do not have a structure where a gate insulating film exists directly below the voltage generation sections (22a1, 24a). Therefore, Figure 3A does not represent the equivalent circuit of the acoustic element according to the first embodiment. In the acoustic element according to the first embodiment, the vibrator 22a1 serves as the gate insulating film of the MIS transistor. Corresponding to the structure of the impedance conversion elements (14, 15a, 15b) connected to the voltage generation sections (22a1, 24a) in Figure 2, the equivalent circuit of the acoustic element according to the first embodiment, where the vibrator 22a1 itself functions as the gate insulating film, is shown in Figure 3B.

On the left side of Figure 3B, the gate-source capacitance $C_{gs}$ and the gate-drain capacitance $C_{gd}$ form a trapezoidal circuit in the electrical system equivalent circuit of the voltage generation section (22a1, 24a), which is connected in parallel with the ideal transformer of the force coefficient A and the braking resistor $R_d$. Specifically, the gate-source capacitance $C_{gs}$ functions as the first braking capacitor $C_{d1}$ ($C_{gs}=C_{d1}$), while the gate-drain capacitance $C_{gd}$ functions as the second braking capacitor $C_{d2}$ ($C_{gd}=C_{d2}$). A portion of the gate-substrate capacitance $C_{gb}$ also functions as a braking capacitor for the voltage generation section (22a1, 24a). Additionally, the potential barrier height generated in the channel defined between the first main electrode region 15a and the second main electrode region 15b, which controls the movement of carriers, is controlled by the potential of the vibrating body 22a1 through the first braking capacitor $C_{d1}$ ($=C_{gs}$), the second braking capacitor $C_{d2}$ ($=C_{gd}$), and a portion of the gate-substrate capacitance $C_{gb}$.

Piezoelectric constants exist in d-form (strain·charge form), e-form (stress·charge form), g-form (strain·electric field form), and h-form (stress·electric field form). For each form, the basic linear piezoelectric equation is given, and they are used differently according to their applications. The basic linear piezoelectric equation expressed in d-form is:

$$D_i = d_{i\alpha}T_\alpha + \varepsilon_{ij}^T E_j \qquad \ldots\ldots(2a)$$

$$S_\alpha = s_{\alpha\beta}^E T_\beta + d_{i\alpha}E_i \qquad \ldots\ldots(2b)$$

$$\alpha,\ \beta = xx,\ yy,\ zz,\ \ldots\ldots,\ xy \qquad \ldots\ldots(2c)$$

$$i,\ j = x,\ y,\ z \qquad \ldots\ldots(2d)$$

Among them, $D_i$ represents the electric flux density (C/m²), $T_\alpha$ denotes the stress (N/m²), $S_\alpha$ signifies the strain (unit-free), and $E_i$ stands for the electric field (V/m). Furthermore, $d_{i\alpha}$ indicates the piezoelectric d constant (C/N), $s_{\alpha\beta}^E$ represents the elastic compliance under a constant electric field (m²/N), and $\varepsilon_{ij}^T$ signifies the dielectric constant under a constant stress (pF/m). The subscripts defined in equations (2c) and (2d) represent directions. It should be noted that the Y direction (longitudinal direction) in Figure 31, which has already been explained, corresponds to the z direction used in equations (2a) and (2d), while the X direction (horizontal direction) in Figure 31 corresponds to the x or y direction used in equations (2a) and (2d). The superscripts on the second term on the right side of equation (2a) and the first term on the right side of equation (2b) represent conditions. The coefficient with the superscript E represents the value measured under a constant electric field condition, while the coefficient with the superscript T represents the value measured under a constant stress condition.

On the other hand, the piezoelectric fundamental equation can be expressed in the form of e:

$$D_i = e_{i\alpha}S_\alpha + \varepsilon_{ij}^S E_j \qquad \ldots\ldots(3a)$$

$$T_\alpha = c_{\alpha\beta}^E S_\beta - e_{i\alpha}E_i \qquad \ldots\ldots(3b)$$

Where, $e_{i\alpha}$ is the piezoelectric e-constant (C/m$^2$), $c_{\alpha\beta}^E$ is the elastic stiffness under constant electric field (N/m$^2$), and $\varepsilon_{ij}^S$ is the dielectric constant under constant strain (pF/m). The subscripts indicate the directions defined in equations (2c) and (2d). The superscripts of the second term on the right side of equation (3a) and the first term on the right side of equation (3b) indicate the conditions. The coefficient with the superscript E represents the value measured under constant electric field conditions, while the coefficient with the superscript S represents the value measured under constant strain conditions. Equations (2a) and (3a) represent the direct piezoelectric effect, while equations (2b) and (3b) represent the inverse piezoelectric effect. In an ideal single-crystal piezoelectric material with polarization direction aligned with the z-direction, due to the isotropy of the material, the number of independent components in the elastic compliance tensor and other tensors can be reduced.

For example, the e-form linear piezoelectric basic equation (3a) of AlN can be expressed as:

Equation 1

$$\begin{bmatrix} Dx \\ Dy \\ Dz \end{bmatrix} = \begin{bmatrix} 0 & 0 & 0 & 0 & -0.45 & 0 \\ 0 & 0 & 0 & -0.45 & 0 & 0 \\ -0.58 & -0.58 & 1.55 & 0 & 0 & 0 \end{bmatrix} \begin{bmatrix} Sxx \\ Syy \\ Szz \\ Syz \\ Szx \\ Sxy \end{bmatrix} + 8.85 \begin{bmatrix} 9.04 & 0 & 0 \\ 0 & 9.04 & 0 \\ 0 & 0 & 10.7 \end{bmatrix} \begin{bmatrix} Ex \\ Ey \\ Ez \end{bmatrix} \qquad \ldots\ldots$$

Assuming that the piezoelectric e-constant $e_{i\alpha}$ is small, the second term on the right side of the basic linear piezoelectric equation (3b) is omitted. Under the condition of electric flux density $D_x = D_y = D_z = 0$ (open circuit) at the end faces of the piezoelectric film, the basic linear piezoelectric equation (3b) for AlN as the piezoelectric film can be simplified to:

Equation 2

$$\begin{bmatrix} Dx \\ Dy \\ Dz \end{bmatrix} = \begin{bmatrix} 0 & 0 & 0 & 0 & -0.45 & 0 \\ 0 & 0 & 0 & -0.45 & 0 & 0 \\ -0.58 & -0.58 & 1.55 & 0 & 0 & 0 \end{bmatrix} \begin{bmatrix} Sxx \\ Syy \\ Szz \\ Syz \\ Szx \\ Sxy \end{bmatrix} + 8.85 \begin{bmatrix} 9.04 & 0 & 0 \\ 0 & 9.04 & 0 \\ 0 & 0 & 10.7 \end{bmatrix} \begin{bmatrix} Ex \\ Ey \\ Ez \end{bmatrix} \qquad \ldots\ldots$$

When AlN serves as the piezoelectric film, and when the electric flux density $D_i$ is set to 0 in equations (4a) and (4b), the electric fields $E_x$, $E_y$, $E_z$ corresponding to the stress $T_\alpha$ response are as follows:

Equation 3

$$
\begin{bmatrix} Ex \\ Ey \\ Ez \end{bmatrix} = 10^{10} \begin{bmatrix} 0 & 0 & 0 & 0 & 0.56 & 0 \\ 0 & 0 & 0 & 0.56 & 0 & 0 \\ 0.61 & 0.61 & -1.64 & 0 & 0 & 0 \end{bmatrix} \begin{bmatrix} Sxx \\ Syy \\ Szz \\ Syz \\ Szx \\ Sxy \end{bmatrix} = \begin{bmatrix} 0 & 0 & 0 & 0 & 0.047 & 0 \\ 0 & 0 & 0 & 0.047 & 0 & 0 \\ 0.025 & 0.025 & -0.052 & 0 & 0 & 0 \end{bmatrix} \begin{bmatrix} Txx \\ Tyy \\ Tzz \\ Tyz \\ Tzx \\ Txy \end{bmatrix} \quad \cdots\cdots \quad (
$$

The piezoelectric electromotive force can be calculated from the electric fields $E_x$, $E_y$, and $E_z$.

PZT is categorized into various commercialized materials based on its composition, such as PZT-4, PZT-5, PZT-5A, PZT-5H, PZT-8, etc. Among them, as a soft PZT with a large piezoelectric constant, we focus on PZT-5H, which is commonly used in receiving probes, etc. The e-form linear piezoelectric basic equation (3a) of PZT-5H can be expressed as:

$$
\begin{bmatrix} Dx \\ Dy \\ Dz \end{bmatrix} = \begin{bmatrix} 0 & 0 & 0 & 0 & 17.0 & 0 \\ 0 & 0 & 0 & 17.0 & 0 & 0 \\ -6.5 & -6.5 & 23.3 & 0 & 0 & 0 \end{bmatrix} \begin{bmatrix} Sxx \\ Syy \\ Szz \\ Syz \\ Szx \\ Sxy \end{bmatrix} + 8.85 \begin{bmatrix} 1700 & 0 & 0 \\ 0 & 1700 & 0 \\ 0 & 0 & 1470 \end{bmatrix} \begin{bmatrix} Ex \\ Ey \\ Ez \end{bmatrix} \quad \cdots\cdots \quad (
$$

The second term on the right side of equation (3b) is omitted. Furthermore, under the condition of electric flux density $D_x = D_y = D_z = 0$ (open circuit) at the end face of the piezoelectric film, the linear piezoelectric basic equation (3b) for PZT-5H as a piezoelectric film can be simplified to:

Equation 5

$$
\begin{bmatrix} Txx \\ Tyy \\ Tzz \\ Tyz \\ Tzx \\ Txy \end{bmatrix} = 10^{10} \begin{bmatrix} 13.05 & 8.35 & 7.31 & 0 & 0 & 0 \\ 8.35 & 13.05 & 7.31 & 0 & 0 & 0 \\ 7.31 & 7.31 & 15.91 & 0 & 0 & 0 \\ 0 & 0 & 0 & 4.22 & 0 & 0 \\ 0 & 0 & 0 & 0 & 4.22 & 0 \\ 0 & 0 & 0 & 0 & 0 & 2.35 \end{bmatrix} \begin{bmatrix} Sxx \\ Syy \\ Szz \\ Syz \\ Szx \\ Sxy \end{bmatrix} \quad \cdots\cdots \quad (
$$

When PZT-5H is used as the piezoelectric film, and the electric flux density $D_i$ is set to 0 in equations (4a) and (4b), the electric fields $E_x$, $E_y$, $E_z$ corresponding to the stress $T_\alpha$ response are as follows:

Equation 6

$$\begin{bmatrix} Ex \\ Ey \\ Ez \end{bmatrix} = 10^{10} \begin{bmatrix} 0 & 0 & 0 & 0 & -1.13 & 0 \\ 0 & 0 & 0 & -1.13 & 0 & 0 \\ 0.50 & 0.50 & -1.79 & 0 & 0 & 0 \end{bmatrix} \begin{bmatrix} Sxx \\ Syy \\ Szz \\ Syz \\ Szx \\ Sxy \end{bmatrix} = \begin{bmatrix} 0 & 0 & 0 & 0 & -0.027 & 0 \\ 0 & 0 & 0 & -0.027 & 0 & 0 \\ 0.009 & 0.009 & -0.020 & 0 & 0 & 0 \end{bmatrix} \begin{bmatrix} Txx \\ Tyy \\ Tzz \\ Tyz \\ Tzx \\ Txy \end{bmatrix} \quad \cdots\cdots \; ($$

The piezoelectric electromotive force can be calculated from the electric fields $E_x$, $E_y$, $E_z$ in equation (5c). However, by comparing equations (4c) and (5c), it can be determined that when the electric flux density $D_i$ is equal to zero, there is almost no significant difference in the piezoelectric electromotive force corresponding to the stress response between the pyroelectric material AlN and the ferroelectric material PZT-5H.

As shown in Equation (6) below, dielectrics include piezoelectric materials, piezoelectric materials include pyroelectric materials (polar crystals), and pyroelectric materials include ferroelectric materials. For the vibrator 22a1 of the voltage generating section (22a1, 24a) of the acoustic element according to the first embodiment, as long as it has a continuous structure as a stress field, the material constituting at least a part of the stress concentration region of the vibrator 22a1 is a piezoelectric material, and the remaining part can be a non-piezoelectric material.

$$\text{Dielectric} \ni \text{Piezoelectric} \ni \text{Pyroelectric (polar crystal)} \ni \text{Ferroelectric} \dots\dots (6)$$

Crystals are categorized into 32 crystal groups based on the symmetry of their crystal structures, among which 21 lack symmetry. One of these crystal point groups (cubic point group O-432) lacks piezoelectricity due to another type of symmetry, but the remaining 20 crystal point groups exhibit piezoelectricity. Among piezoelectric materials as a subset of dielectrics, notable piezoelectric materials include quartz ($SiO_2$), lanthanum gallium silicate ($La_3Ga_5SiO_{14}$), and gallium phosphate ($GaPO_4$). Additionally, although also dependent on crystallinity, materials such as alumina ($Al_2O_3$) in the corundum-type oxide, titanium dioxide ($TiO_2$) in the rutile-type oxide, magnesium oxide (MgO) in the rock salt-type oxide, hafnium oxide ($HfO_2$) in the fluorite-type oxide, and zirconium oxide ($ZrO_2$) can be used as materials constituting at least a portion of the vibrating body 22a1, specifically as materials for stress concentration areas of the vibrating body 22a1.

That is, as shown in Figure 2, the entire structure of the vibrating body 22a1 can be composed entirely of piezoelectric materials belonging to 20 crystal point groups, or only the downward protrusion (stress concentration site) in the center can be composed of piezoelectric materials belonging to 20 crystal point groups, while the remaining plate-like portions can be composed of non-piezoelectric layers belonging to the remaining 12 crystal point groups among the 32 types. That is, as long as it has a continuous structure as a stress field, the voltage generating part (22a1, 24a) can be configured such that at least the piezoelectric layer is provided in the stress concentration site of the stress field formed by the vibrating body 22a1. Therefore, the impedance conversion elements (14, 15a, 15b) of the acoustic element according to the first embodiment can at least use a specific part of the piezoelectric layer provided in the downward protrusion (stress concentration site) as a potential transfer region, and operate with the potential of this potential transfer region as a control voltage.

Ternary compounds such as hafnium aluminate ($HfAlO_x$) and hafnium silicate ($HfSi_xO_y$) can also be used as materials for at least the stress concentration site of the vibrating body 22a1. That is, oxides containing any of strontium (Sr), aluminum (Al), magnesium (Mg), yttrium (Y), hafnium (Hf), zirconium (Zr), tantalum (Ta), and bismuth (Bi), or silicon nitrides containing these elements, can be used as materials for at least the stress concentration site of the vibrating body 22a1. Semiconductors with a zincblende structure, such as gallium arsenide (GaAs), gallium phosphide (GaP), zinc sulfide (ZnS), zinc telluride (ZnTe), zinc selenide (ZnSe), and cadmium telluride (CdTe), as well as wurtzite-type semiconductors such as AlN, GaN, CdS, ZnO, and cadmium selenide (CdSe), also exhibit piezoelectricity and can therefore be used as materials for at least the stress concentration site of the vibrating body 22a1. On the other hand, single-element semiconductors with a diamond structure (point symmetry group $O_h=m3m$), such as silicon (Si), germanium (Ge), and diamond (C), cannot exhibit piezoelectricity and therefore cannot be used as materials for the stress concentration site of the vibrating body 22a1, but can be used as materials for the remaining plate-like portions outside the stress concentration site.

Pyroelectric materials, as shown in formula (6), are a subset of piezoelectric materials. In piezoelectric materials, pyroelectricity often occurs when the material is polarized and the temperature changes. Among the 20 crystal groups with piezoelectricity, 10 crystal point groups exhibit pyroelectricity, also known as "polar crystals". Specifically, according to the Scherzky notation, the crystal point groups of triclinic $C_1$, monoclinic $C_S$, $C_2$, orthorhombic $C_2V$, tetragonal $C_4$, $C_4V$, trigonal $C_3$, $C_3V$, hexagonal $C_6$, and $C_6V$ exhibit pyroelectricity. The crystal point group of wurtzite structure is hexagonal $C_6V$

Pyroelectric semiconductors such as AlN, GaN, ZnO, and CdS are wurtzite-type compounds. Hexagonal silicon carbide (SiC) is also a pyroelectric material. AlN and GaN exhibit piezoelectricity in specific directions of the crystal, but the crystal structure slightly changes when Sc is added, making ions easier to move in that direction, thus improving piezoelectricity. For example, the piezoelectricity of $Sc_xAl_{1-x}N$ increases with the increase of Sc concentration x, and when x is around 43%, it exhibits very large piezoelectricity comparable to that of $LiTaO_3$. Tourmaline $((Ca,Na)X_3Al_6(BO_3)_3Si_6O_{18}(OH,F)4$; X=Mg, Fe, Mn, Li, Al) also exhibits pyroelectricity.

Ferroelectrics, as shown in formula (6), are a subset of pyroelectric materials, and those pyroelectric materials whose spontaneous polarization direction changes when an external electric field is applied are ferroelectrics. Piezoelectric and pyroelectric materials are supported by the symmetry of their crystal structures, but the definition of the symmetry of the crystal structure of ferroelectrics is ambiguous. In addition to PZT, ferroelectrics also include perovskite-type oxides such as $HfO_2$, hafnium zirconium oxide $(Hf_{1-x}Zr_xO_2)$, barium titanate $(BaTiO_3)$, strontium titanate $(SrTiO_3)$, magnesium titanate $(MgTiO_3)$, calcium titanate $(CaTiO_3)$, bismuth titanate $(Bi_3Ti_3O_{12})$, lead titanate $(PbTiO_3)$, lead zirconate $(PbZrO_3)$, barium strontium titanate $(BaSrTiO_3)$, strontium ruthenate $(SrRuO_3)$, strontium bismuth tantalum titanate $(SrBi_2Ta_2O_9)$, bismuth layered structure ferroelectrics (BLSF), polyvinylidene fluoride (PVDF), and rochelle salt $(NaKC_4H_3O_6 \cdot 4H_2O)$.

## Research on Stress Distribution and Structural Reinforcement

In existing PMUT technologies such as the invention described in Non-patent Document 2, no research has been conducted on new internal structures and geometries for achieving high sensitivity and broadband performance of PMUTs themselves. The acoustic element according to the first embodiment is designed by considering the structure of the voltage generating sections (22a1, 24a) that exhibit a non-uniform potential distribution with different potentials at positions on the output surface side of the vibrating body 22a1, thereby achieving high sensitivity and broadband performance. For example, considering the non-uniform potential distribution, it is possible to adopt a composite structure in which a piezoelectric layer is only arranged at stress concentration sites to achieve high sensitivity and broadband performance. As shown in equations (2a) to (5c), in order to generate a position-dependent potential distribution, it is preferable to adopt a "stress distribution reinforcement structure" that generates a non-uniform potential distribution inside the vibrating body 22a1.

Although it has been explained using Figure 31, even in the case of using a previously known flat disk-type vibrating cavity, when the vibrating body 22f bends upward to form an upward convex surface, and bends downward to form a downward convex surface, the spacing between circles is different, resulting in asymmetric vibrations. As for which piezoelectric layer and shape of vibrating cavity are more ideal for generating a stress distribution reinforcement structure that relies on position-dependent potential distribution, simulations were conducted using the "Piezoelectric Wave Analysis Software PZFlex" originally developed by Weidlinger Associates in the United States. By simulating the transient response of voltage generation in various stress distribution reinforcement structures, we explored which structure can serve as a new structure that achieves high sensitivity and broadband through piezoelectric effect. Then, specific candidate locations were selected as potential transfer areas, and specific locations with higher voltage generation were explored microscopically in various stress distribution reinforcement structures, so that at least in this potential transfer area, a piezoelectric layer can be configured.

## Parallel Truss Type

Firstly, we simulated the voltage generation at various positions in the stress distribution reinforcement structure with a parallel truss-type vibration cavity 21a1 around the central protrusion as shown in Figure 4A, and studied the voltage distribution on the output surface, serving as the basis for high sensitivity and broadband performance. "Parallel truss-type" refers to a three-dimensional structure where the main surfaces (upper and lower) corresponding to the space constituting the truss are parallel to each other. The parallel truss-type vibration cavity 21a1 is based on a structure where a vibration body 22a1 with a cylindrical downward protrusion at the central part of the output surface (lower surface) is inserted into a silicon substrate $11_{sa1}$ with a cylindrical recess of approximately $d_{11}$ ($=2r_{11}$) in diameter. On the cross-section, the rectangular space surrounding the downward protrusion constitutes a continuous parallel truss in the depth direction of the paper. As shown in the plan views of Figure 1A and Figure 1B, the acoustic element according to the first embodiment is a parallel truss-type vibration cavity 21a1 with a hexagonal planar pattern. The structure shown in Figure 1A and other figures is a structure where a vibration body 22a1 with a regular hexagonal prism protrusion is inserted into the central part of the vibration cavity 21a1, which is different from the axisymmetric three-dimensional shape used for simplification in the simulation in terms of geometric planar pattern. However, whether the planar pattern is circular or hexagonal does not have a significant impact on the simulation results of voltage distribution generated by piezoelectric effect in principle.

Let $t_{22a1}$ be the thickness of the flat plate-shaped portion of the vibrating body 22a1 excluding the central

protrusion, and $d_{22a1}$ be the diameter of the central protrusion. A fixed potential electrode 24a at ground potential is arranged on the top surface of the vibrating body 22a1. A fixed potential electrode protective film 23 made of epoxy resin, which functions as a matching layer, is arranged with a thickness $t_{23}$ on the fixed potential electrode 24a and on the vibrating body 22a1 where the fixed potential electrode 24a is not present. In the simulation, to verify the voltage distribution generated below the vibrating body 22a1 due to the piezoelectric effect, as shown in Figure 4B, five ideal electrodes for potential detection (represented by diagonal rectangles in Figure 4B, but with a thickness of zero) are arranged. Then, according to the arrangement of the five ideal electrodes for potential detection shown in Table 1, the individual names of the potential transfer areas are defined as the central area $P_0$, the first peripheral area $P_1$, ..., and the fourth peripheral area $P_4$, numbered sequentially from the inside along the direction of the division reference radius $r_{11} = (d_{11} - d_{22a1}) / 2$ (outward).

Table 1

| Table 1 (Definition of The Case of Figure 4B) | | | |
|---|---|---|---|
| **The Individual Names of Potential Transfer Zones** | **The Position in The Radial Direction Inside The Cavity ($d_{11}-d_{22a1}=2r_{11}$)** | **The Individual Names of The Generated Voltages** | **The Types of Lines on The Drawing** |
| **The Central Region $P_0$** | $d_{22a1}/2 \sim (1/9)r_{11}+d_{22a1}/2$ | **The Central Voltage $V_{P0}$** | **Thick Solid Line** |
| **The First Peripheral Region $P_1$** | $(2/9)r_{11}+d_{22a1}/2 \sim (3/9)r_{11}+d_{22a1}/2$ | **The First Peripheral Voltage $V_{P1}$** | **Thick Dashed Line** |
| **The Second Peripheral Region $P_2$** | $(4/9)r_{11}+d_{22a1}/2 \sim (5/9)r_{11}+d_{22a1}/2$ | **The Second Peripheral Voltage $V_{P2}$** | **Thin Dashed Line** |
| **The Third Peripheral Region $P_3$** | $(6/9)r_{11}+d_{22a1}/2 \sim (7/9)r_{11}+d_{22a1}/2$ | **The Third Peripheral Voltage $V_{P3}$** | **Thin Solid Line** |
| **The Fourth Peripheral Region $P_4$** | $(8/9)r_{11}+d_{22a1}/2 \sim r_{11}$ | **The Fourth Peripheral Voltage $V_{P4}$** | **Dashed-Dotted Line** |

The line width and spacing along the radial direction outside the central region $P_0$ are the same, and the four concentric circular zones (regions) surrounded by the same spacing are the first peripheral region $P_1$, the second peripheral region $P_2$, the third peripheral region $P_3$, and the fourth peripheral region $P_4$. Due to the same line width and spacing, the division reference radius $r_{11}$ of the vibration cavity 21a1 is defined as $(d_{11}-d_{22a1})/2$, which is divided into nine equal parts, thus defining the positions of the central region $P_0$, the first peripheral region $P_1$, ..., and the fourth peripheral region $P_4$ along the radial direction. That is, as shown in Figure 4B, the ideal electrode for potential detection in the central region $P_0$ is a circular region surrounding the central downward protrusion. Therefore, with the radius of the central downward protrusion being $d_{22a1}/2$, the central region $P_0$ is defined as a circular region (region) with a certain line width from the radial position $d_{22a1}/2$ to the radial position $(1/9)r_{11} + d_{22a1}/2$.

Similarly, as defined in Table 1, the first peripheral region $P_1$ is defined as a ring-shaped region with a certain line width extending from the radius position $(2/9)r_{11}+d_{22a1}/2$ to the radius position $(3/9)r_{11}+d_{22a1}/2$. The second peripheral region $P_2$ is defined as a ring-shaped region with a certain line width extending from the radius position $(4/9)r_{11}+d_{22a1}/2$ to the radius position $(5/9)r_{11}+d_{22a1}/2$. The third peripheral region $P_3$ is defined as a ring-shaped region with a certain line width extending from the radius position $(6/9)r_{11}+d_{22a1}/2$ to the radius position $(7/9)r_{11}+d_{22a1}/2$. The fourth peripheral region $P_4$ is defined as the region extending from the radius position $(8/9)r_{11}+d_{22a1}/2$ to the outermost circumference (radius position $r_{11}$).

In the simulation, the five ideal electrodes for potential detection, respectively configured in the central region $P_0$, the first peripheral region $P_1$, ..., and the fourth peripheral region $P_4$, are all virtual electrodes that are electrically open-circuited (open), have a thickness of zero, and have a contact resistance of zero with the vibrating body 22a1. In the central region $P_0$, the first peripheral region $P_1$, ..., and the fourth peripheral region $P_4$, which serve as open-state potential transmission areas, the transient response of the generated voltage due to the piezoelectric effect is verified, and the voltage distribution on the output surface of the vibrating body 22a1 is studied. On the output surface of the vibrating body 22a1, the radial electric field inside the ideal electrodes for potential detection in each of the central region $P_0$, the first peripheral region $P_1$, ..., and the fourth peripheral region $P_4$ is short-circuited. Additionally, in Figure 4B, the outer circumference of the ideal electrode for potential detection in the fourth peripheral region $P_4$ is in contact with the silicon substrate $_{11sa1}$, but the silicon substrate $_{11sa1}$ is semi-insulating (high resistivity). In the simulation, it is assumed that the ideal electrode for potential detection in the fourth peripheral region $P_4$ is in an electrically floating state.

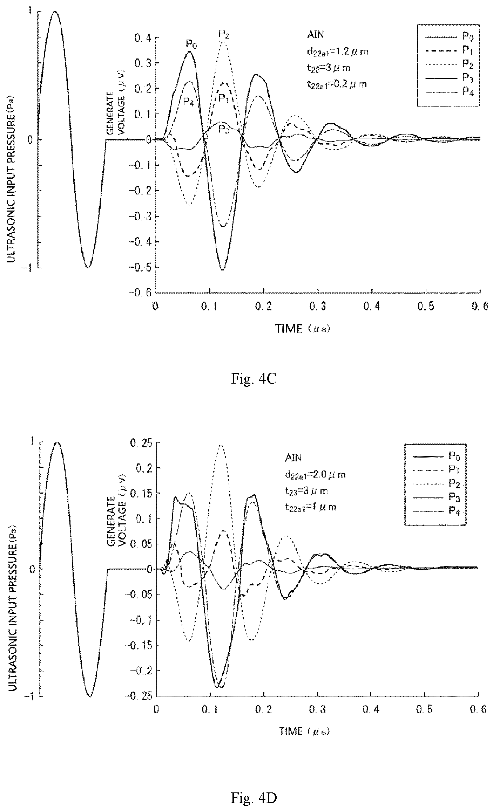

Figure 4C illustrates the transient response of voltage generation during ultrasonic wave reception, using parameters such as the central region $P_0$, the first peripheral region $P_1$, ..., and the fourth peripheral region $P_4$. This simulation is conducted under the conditions where AlN is used throughout the entire vibrator 22a1, and the diameter $d_{22a1}$ of the central protrusion in the parallel truss-type vibrational cavity 21a1 of the voltage generating section (22a1, 24a) is set to 1.2μm. Additionally, the thickness $t_{22a1}$ of the vibrator 22a1 outside the central protrusion is set to 0.2μm, and the thickness $t_{23}$ of the fixed potential electrode protective film 23 is set to 3μm. As shown in the legend of the line types in the upper right corner of Figure 4C, the thick solid line represents the transient response of the central voltage $V_{P0}$ generated in the central region $P_0$. In Figure 4C, the thick dashed line represents the first peripheral voltage $V_{P1}$ generated in the first peripheral region $P_1$, the thin dashed line represents the second peripheral voltage $V_{P2}$ generated in the second peripheral region $P_2$, the thin solid line represents the third peripheral voltage $V_{P3}$ generated in the third peripheral region $P_3$, and the dashed-dotted line represents the fourth peripheral voltage $V_{4P}$ generated in the fourth peripheral region $P_4$. When a single-emission sine wave ultrasonic wave with a maximum vibration amplitude of ±1Pa is input to the voltage generating section (22a1, 24a), the pulse response voltage signals generated by the piezoelectric effect in the central region $P_0$, the first peripheral region $P_1$, ..., and the fourth peripheral region $P_4$ exhibit a transient response where the second vibration amplitude is the largest near approximately 0.13μs, and subsequent vibrations are attenuated.

Specifically, in the case where the fixed potential electrode 24a shown in Figures 4A and 4B is connected to the ground potential (GND), as shown in Figure 4C, a transient response exhibiting positive and negative directional vibrations centered around the ground potential (GND=0V) is observed. The central voltage $V_{P0}$ indicated by the thick solid line in Figure 4C reaches a peak amplitude of approximately +0.34μV for the first vibration near a time point of approximately 0.06μs after the input of the ultrasonic pulse, while the peak amplitude for the second vibration near a time point of approximately 0.13μs reaches approximately -0.52μV, reaching the maximum amplitude value. Subsequently, the peak amplitude for the third vibration near a time point of approximately 0.19μs reaches approximately +0.25μV, and the peak amplitude for the fourth vibration near a time point of approximately 0.26μs decays to approximately -0. 13 μV.

Unlike Figure 4B, if the ideal electrode for detecting the potential of the central region $P_0$ is arranged in an island shape at the lower end of the central downward protrusion (only regarding the position definition, corresponding to the case where the diameter of the central protrusion remains unchanged in Table 1 and $d_{22a1}/2=0$), the central voltage $V_{P0}$ increases to approximately twice the value shown in Figure 4C (the illustration is omitted). This can be considered as a result of the mutual enhancement of the piezoelectric electromotive force generated by the lateral compression and stretching of the film near the central downward protrusion of the vibrating body 22a1 and the piezoelectric electromotive force generated by the longitudinal compression and stretching along the central downward protrusion.

The second peripheral voltage $V_{P2}$, represented by the thin dashed line in Figure 4C, reaches its peak amplitude of approximately -0.26μV during the first vibration near the time point after approximately 0.06μs of ultrasonic pulse input, while the peak amplitude of the second vibration near the time point after approximately 0.13μs is approximately +0.38μV, reaching the maximum amplitude value. However, the absolute value of the amplitude of the second peripheral voltage $V_{P2}$, $|V_{P2}|$, is less than the absolute value of the amplitude of the central voltage $V_{P0}$, $|V_{P0}|$, and the central voltage $V_{P0}$ and the second peripheral voltage $V_{P2}$ exhibit an inverse correlation. Subsequently, the third vibration amplitude of the second peripheral voltage $V_{P2}$, which generates voltage in the second peripheral region $_{P2}$ and reaches its peak near the time point after approximately 0.19μs, is approximately -0.18μV, and the fourth vibration amplitude, which reaches its peak near the time point after approximately 0.26μs, decays to approximately +0.09μV. Due to the decreasing peak amplitude of vibrations after the fifth time, further explanations are omitted.

In Figure 4C, the fourth peripheral voltage $V_{P4}$, represented by a dashed-dotted line, reaches its peak amplitude of approximately +0.25μV during its first oscillation near a time of approximately 0.06μs. Meanwhile, the amplitude of its second oscillation, which peaks near a time of approximately 0.13μs, is approximately -0.32μV, reaching its maximum amplitude. The absolute value of the amplitude of the fourth peripheral voltage $V_{P4}$, denoted as $|V_{P4}|$, is smaller than the absolute values of the central voltage $V_{P0}$ and the second peripheral voltage $V_{P2}$, denoted as $|V_{P0}|$ and $|V_{P2}|$, respectively, making it the third largest value. The fourth peripheral voltage $V_{P4}$ exhibits an inverse correlation with the second peripheral voltage $V_{P2}$ and a positive correlation with the central voltage $V_{P0}$. Subsequently, the third oscillation of the fourth peripheral voltage $V_{P4}$, which peaks near a time of approximately 0.19μs, has an amplitude of approximately +0.17μV. The fourth oscillation, which peaks near a time of approximately 0.26μs, attenuates to an amplitude of approximately -0.08μV.

In Figure 4C, the absolute value $|V_{P1}|$ of the amplitude exhibited by the transient response vibration of the first peripheral voltage $V_{P1}$, represented by the thick dashed line, is smaller than the absolute value $|V_{P4}|$ of the fourth peripheral voltage $V_{P4}$, ranking as the fourth largest value. The first peripheral voltage $V_{P1}$ vibrates in phase with the second peripheral voltage $V_{P2}$, and in anti-phase with the central voltage $V_{P0}$ and the fourth peripheral voltage $V_{P4}$. The absolute value $|V_{P3}|$ of the amplitude exhibited by the transient response vibration of the third peripheral voltage $V_{P3}$, represented by the thin solid line in Figure 4C, is smaller than the absolute value $|V_{P1}|$ of the first peripheral voltage $V_{P1}$, ranking as the fifth largest value and also the smallest value. The third peripheral voltage $V_{P3}$ vibrates in phase with the first peripheral voltage $V_{P1}$ and the second peripheral voltage $V_{P2}$, and in anti-phase with the central voltage $V_{P0}$ and the fourth peripheral voltage $V_{P4}$.

That is, on the output surface of the vibrator 22a1 in the voltage generation section (22a1, 24a) shown in Figures 4A and 4B, the potential relationship generated by the piezoelectric effect is:

$$|V_{P0}| > |V_{P2}| > |V_{P4}| > |V_{P1}| > |V_{P3}| \ldots\ldots (7),$$

exhibiting a non-uniform potential distribution that varies with position. Figure 4C illustrates the relationship between the generated voltages when the first power source shown in Figure 1A is connected to the ground potential (GND), namely, the central voltage $V_{P0}$, the first peripheral voltage $V_{P1}$, the second peripheral voltage $V_{P2}$, the third peripheral voltage $V_{P3}$, and the fourth peripheral voltage $V_{P4}$. Unlike the circuit connection shown in Figure 1A, if the first power source is connected to a bias voltage $V_{bias} > 0$, the central voltage $V_{P0}$, the first peripheral voltage $V_{P1}$, ..., and the fourth peripheral voltage $V_{P4}$ generated by the voltage generation section (22a1, 24a) will form a vibration waveform that oscillates around the bias Voltage $V_{bias}$, which is different from 0V. That is, by selecting $V_{bias}$ with the highest amplification factor of the impedance conversion elements (14, 15a, 15b) and connecting the first power source to $V_{bias}$, the sensitivity of the acoustic element according to the first embodiment can be improved.

Figure 4D, similar to Figure 4C, depicts the transient response of voltage generated during ultrasonic reception when using AlN for the vibrator 22a1 in the voltage generation sections (22a1, 24a) of Figures 4A and 4B. In this case, the diameter $d_{22a1}$ of the central protrusion in the parallel truss-type vibrational cavity 21a1 of the voltage generation sections (22a1, 24a) is set to 2.0$\mu$m, which is larger than that in Figure 4C. The positions of the central region $P_0$, the first peripheral region $P_1$, ..., and the fourth peripheral region $P_4$, which are defined in Figure 4B, are used as parameters for the simulation. The positions of the central region $P_0$, the first peripheral region $P_1$, ..., and the fourth peripheral region $P_4$ in the potential transfer area are shown in Table 1. The thickness $t_{22a1}$ of the vibrator 22a1 excluding the central protrusion is set to 1$\mu$m, which is thicker than that in Figure 4C. The thickness $t_{23}$ of the fixed potential electrode protective film 23 is set to 3$\mu$m, which is the same as in Figure 4C.

The central voltage $V_{P0}$ of the vibrator 22a1, represented by the thick solid line in Figure 4D, reaches its peak near the time point after approximately 0.03$\mu$s following the input of the ultrasonic pulse, with a first vibration amplitude of approximately +0.14$\mu$V. Subsequently, it reaches its peak near the time point after approximately 0.13$\mu$s, with a second vibration amplitude of approximately -0.24$\mu$V, reaching its maximum amplitude value. In the case of Figure 4C, the first vibration amplitude of the central voltage $V_{P0}$ near the time point after approximately 0.06$\mu$s following the input of the ultrasonic pulse is approximately +0.34$\mu$V, and the second vibration amplitude near the time point after approximately 0.13$\mu$s is approximately 0.52$\mu$V. Therefore, the vibration amplitude of the central voltage $V_{P0}$ shown in Figure 4D is smaller than that in Figure 4C. Moreover, the first vibration, which reaches its peak near the time point after approximately 0.03 $\mu$s following the pulse input, exhibits a gradually decaying waveform distortion around 0.06$\mu$s, rather than a single sine wave waveform, which is different from the sine wave vibration with a peak at 0.06$\mu$s in Figure 4C. The third vibration amplitude of the central voltage $V_{P0}$, which reaches its peak near the time point after approximately 0.19$\mu$s, is approximately +0.15$\mu$V, and the fourth vibration amplitude, which reaches its peak near the time point after approximately 0.26$\mu$s, decays to approximately -0.06$\mu$V. Waveform distortion was also observed in the third and fourth vibrations.

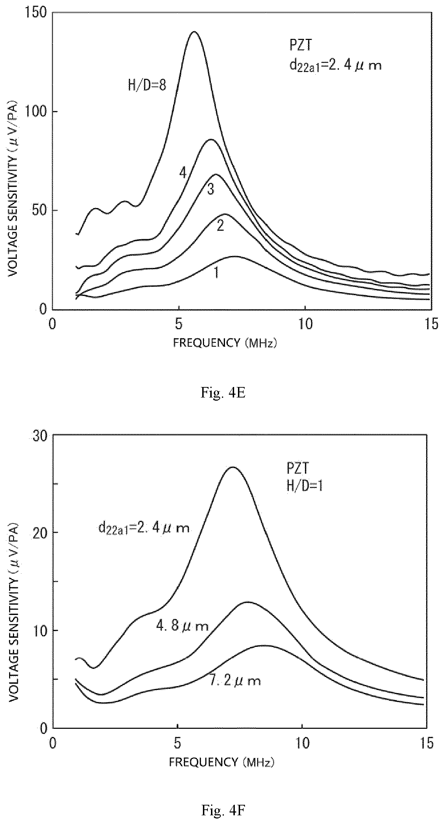

Additionally, although not shown in the diagram, if the ideal electrode for detecting the potential of the central region $P_0$ is arranged in an island shape at the lower end of the central downward protrusion (focusing only on the position definition, corresponding to the case where the protrusion diameter remains unchanged in Table 1 and $d_{22a1}/2=0$), the central voltage $V_{P0}$ increases to about twice the value shown in Figure 4D, which is the same as the case in Figure 4C. This can be attributed to the mutual enhancement of piezoelectric electromotive force generated by lateral compression and stretching of the film near the central downward protrusion of the vibrating body 22a1, and piezoelectric electromotive force generated by longitudinal compression and stretching along the central downward protrusion (the increase in longitudinal piezoelectric effect of the central protrusion will be explained later using Figure 4E and Figure 4F).

The second peripheral voltage $V_{P2}$, represented by the thin dashed line in Figure 4D, reaches its peak amplitude of approximately -0.14$\mu$V during the first vibration near the time point after approximately 0.06$\mu$s of ultrasonic pulse input, while the peak amplitude of the second vibration near the time point after approximately 0.13$\mu$s is approximately +0.24$\mu$V, reaching the maximum amplitude value. As shown in Figure 4D, the central voltage $V_{P0}$ and the second peripheral voltage $V_{P2}$ exhibit an inverse correlation, but the absolute value $|V_{P2}|$ of the second peripheral voltage $V_{P2}$ is roughly the same as the absolute value $|V_{P0}|$ of the central voltage $V_{P0}$. Subsequently, the third vibration amplitude of the second peripheral voltage $V_{P2}$, which reaches its peak near the time point after approximately 0.19$\mu$s, is approximately - 0.14$\mu$V, and the fourth vibration amplitude, which reaches its peak near the time point after approximately 0.26$\mu$s, decays to approximately +0.06$\mu$V.

In Figure 4D, the fourth peripheral voltage $V_{P4}$, represented by a dashed-dotted line near the outer wall (side wall) of the vibrating cavity 21a1 and located furthest from the central protrusion, reaches its peak near the first vibration amplitude of approximately +0.15$\mu$V after approximately 0.06$\mu$s. This amplitude is slightly larger than the first vibration amplitude of the central voltage $V_{P0}$, which is +0.14$\mu$V. Relative to the first vibration amplitude, the second vibration amplitude, which peaks near the time of approximately 0.13$\mu$s, is approximately -0.24$\mu$V, reaching its maximum

amplitude, which is roughly the same as the second vibration amplitude of the central voltage $V_{P0}$. Therefore, the absolute value of the amplitude of the fourth peripheral voltage $V_{P4}$, $|V_{P4}|$, is roughly the same as the absolute value of the central voltage $V_{P0}$, $|V_{P0}|$, and the absolute value of the second peripheral voltage $V_{P2}$, $|V_{P2}|$. The fourth peripheral voltage $V_{P4}$ and the second peripheral voltage $V_{P2}$ exhibit an inverse correlation, while they exhibit a positive correlation with the central voltage $V_{P0}$. Subsequently, the third vibration amplitude of the fourth peripheral voltage $V_{P4}$, which peaks near the time of approximately 0.19$\mu$s, is approximately +0.13V, slightly smaller than that of the central voltage $V_{P0}$. The fourth vibration amplitude, which peaks near the time of approximately 0.26$\mu$s, decays to approximately -0.06$\mu$V.

The transient response of the first peripheral voltage $V_{P1}$, represented by the thick dashed line in Figure 4D, vibrates positively to approximately +0.05$\mu$V near the time point after approximately 0.03$\mu$s following the input of the ultrasonic pulse, serving as the first vibration peak. Subsequently, it vibrates negatively to approximately -0.03 $\mu$V near the time point after approximately 0.06$\mu$s, serving as the second vibration peak. The first peripheral voltage $V_{P1}$ exhibits a unique vibration waveform that is different from the central voltage $V_{P0}$, the second peripheral voltage $V_{P2}$, and the fourth peripheral voltage $V_{P4}$. Moreover, the transient response behavior of the first peripheral voltage $V_{P1}$ is also different from that shown in Figure 4C. The transient response behavior of the first peripheral voltage $V_{P1}$ in Figure 4D is similar to that shown in Figure 4C in that it increases to approximately +0.07$\mu$V near the time point of approximately 0.06$\mu$s, but differs in that it is the third vibration peak in Figure 4D, whereas it is the second vibration peak in Figure 4C. The absolute value of the amplitude $|V_{P1}|$ exhibited by the transient response vibration of the first peripheral voltage $V_{P1}$ is the fourth smallest value among the absolute values $|V_{P0}|$, $|V_{P2}|$, and $|V_{P4}|$ of the central voltage $V_{P0}$, the second peripheral voltage $V_{P2}$, and the fourth peripheral voltage $V_{P4}$. Except for the first vibration peak near the time point of approximately 0.03$\mu$s, the first peripheral voltage $V_{P1}$ vibrates in phase with the second peripheral voltage $V_{P2}$. Except for the first vibration peak, the first peripheral voltage $V_{P1}$ vibrates in antiphase with the central voltage $V_{P0}$ and the fourth peripheral voltage $V_{P4}$.

Additionally, in Figure 4D, the absolute value of the amplitude exhibited by the transient response vibration of the third peripheral voltage $V_{P3}$, represented by the thin solid line, is smaller than that of the first peripheral voltage $V_{P1}$, ranking fifth and being the smallest value. The third peripheral voltage $V_{P3}$ vibrates in anti-phase with the first peripheral region $P_1$, the first peripheral voltage $V_{P1}$, and the second peripheral voltage $V_{P2}$, which is different from the transient response shown in Figure 4C. Similarly, the third peripheral voltage $V_{P3}$ vibrates in phase with the central voltage $V_{P0}$ and the fourth peripheral voltage $V_{P4}$, which is also different from the transient response shown in Figure 4C. That is, when the diameter $d_{22a1}$ of the protrusion in the central part of the vibration cavity 21a1 is larger than that in Figure 4C, and the thickness $t_{22a1}$ of the vibrating body 22a1 is thicker than that in Figure 4C, the potential relationship generated by the piezoelectric effect on the output surface of the vibrating body 22a1 is:

$$|V_{P0}| \approx |V_{P2}| \approx |V_{P4}| \ \ldots\ldots \ (8a)$$

$$|V_{P0}|, |V_{P2}|, |V_{P4}| > |V_{P1}| > |V_{P3}| \ \ldots\ldots \ (8b)$$

exhibiting a non-uniform potential distribution with position dependence.

Figure 4E illustrates the sensitivity frequency dependence of the central voltage $V_{P0}$ in the central region $P_0$, detected by an ideal electrode for potential detection positioned directly beneath the central protrusion, when the entire vibrating body 22a1 is made of PZT. The thickness $t_{22a1}$ of the flat plate-shaped portion of the vibrating body 22a1, excluding the central protrusion, is set to 2.4$\mu$m. The diameter $d_{22a1}$ of the central protrusion shown in Figure 4B is redefined as diameter D, and set to D=2.4$\mu$m=$t_{22a1}$, indicating the frequency dependence of voltage sensitivity when varying the aspect ratio (=H/D) corresponding to the height H of the central protrusion. As shown in Figure 4E, when the aspect ratio H/D=1, a sensitivity curve with a peak frequency of 7.3MHz is exhibited within the 5-10MHz frequency band range where ultrasonic waves are received. When the aspect ratio H/D=1, the maximum voltage sensitivity of the central voltage $V_{P0}$ is approximately 26.4$\mu$V/Pa. Compared to when the aspect ratio H/D=1, when the aspect ratio H/D=2, that is, the height increases, the peak frequency of the sensitivity curve shifts slightly towards the low-frequency side, and the relative bandwidth narrows. The maximum voltage sensitivity of the central voltage $V_{P0}$ is approximately 47.7$\mu$V/Pa, and the maximum voltage sensitivity increases by approximately 1.8 times, indicating an enhancement in longitudinal piezoelectric effect with an increase in aspect ratio H/D.

When the aspect ratio H/D is 3 and the height is further increased, the peak frequency of the sensitivity curve is 6.5MHz, slightly shifted towards the lower frequency side compared to the aspect ratio H/D=2, with the bandwidth further slightly narrowed. The maximum voltage sensitivity of the central voltage $V_{P0}$ is approximately 68.2$\mu$V/Pa. At the aspect ratio H/D=3, the maximum voltage sensitivity increases to approximately 2.6 times that of the aspect ratio H/D=1, indicating an enhancement in longitudinal piezoelectric effect with an increase in aspect ratio H/D. Furthermore, when the aspect ratio H/D is 4 and the height is further increased, the peak frequency of the sensitivity curve is 6.3 MHz, slightly shifted towards the lower frequency side compared to the aspect ratio H/D=3, with the bandwidth further slightly narrowed. The maximum voltage sensitivity of the central voltage $V_{P0}$ is approximately 85.5$\mu$V/Pa. At the aspect ratio H/D=4, the maximum voltage sensitivity increases to approximately 3.2 times that of the aspect ratio H/D=1, indicating an enhancement in longitudinal piezoelectric effect with an increase in aspect ratio H/D. Furthermore, when the aspect ratio H/D is 8 and the height is further increased, the sensitivity curve shifts towards the lower frequency side compared to the aspect ratio H/D=4, with the bandwidth further slightly narrowed. The maximum voltage sensitivity of the central voltage $V_{P0}$ is approximately 139.5 $\mu$V/Pa. At the aspect ratio H/D=8, the maximum voltage sensitivity increases to approximately 5.3 times that of the aspect ratio H/D=1, indicating an enhancement in longitudinal piezoelectric effect with an increase in aspect ratio H/D.

Figure 4F, similar to Figure 4E, illustrates the sensitivity frequency dependency of the central voltage $V_{P0}$ detected directly beneath the central protrusion when the entire vibrating body 22a1 is made of PZT. In Figure 4E, the frequency dependency of voltage sensitivity is shown when varying the aspect ratio (=H/D) of the central protrusion height H corresponding to a constant diameter D=2.4$\mu$m. Conversely, Figure 4F demonstrates the frequency dependency of voltage sensitivity when changing the diameter D=$d_{22a1}$ with a constant aspect ratio H/D=1. In Figure 4F, the thickness $t_{22a1}$ of the flat plate-shaped portion of the vibrating body 22a1 outside the central protrusion is also maintained at 2.4$\mu$m (constant). The sensitivity curve for a diameter $d_{22a1}$=2.4$\mu$m in Figure 4F is identical to the sensitivity curve for an aspect ratio H/D=1 in Figure 4E, with a maximum voltage sensitivity of approximately 26.4$\mu$V/Pa at the peak frequency of 7.3MHz for the central voltage $V_{P0}$.

Compared to when the diameter $d_{22a1}$ is 2.4$\mu$m, when the diameter $d_{22a1}$ is increased to 4.8$\mu$m, resulting in a thicker central protrusion, the sensitivity curve shifts slightly towards the high-frequency side to a peak frequency of 7.8MHz, and the bandwidth widens. At a diameter $d_{22a1}$ of 4.8$\mu$m, the maximum voltage sensitivity of the central voltage $V_{P0}$ is approximately 12.8$\mu$V/Pa, which is reduced to about 0.48 times that at a diameter $d_{22a1}$ of 2.4$\mu$m. It can be observed that the longitudinal piezoelectric effect decreases relatively with the increase in diameter $d_{22a1}$. Furthermore, when the diameter $d_{22a1}$ is increased to 7.2$\mu$m, resulting in a thicker central protrusion, the peak frequency shifts to 8.6MHz, and the sensitivity curve further shifts towards the higher-frequency side compared to when the diameter $d_{22a1}$ is 4.8$\mu$m, with the bandwidth also slightly widening further. At a diameter $d_{22a1}$ of 7.2$\mu$m, the maximum voltage sensitivity of the central voltage $V_{P0}$ decreases to approximately 8.3$\mu$V/Pa. Therefore, at a diameter $d_{22a1}$ of 7.2$\mu$m, the maximum voltage sensitivity is about 0.31 times that at a diameter $d_{22a1}$ of 2.4$\mu$m, indicating a relative decrease in the longitudinal piezoelectric effect with the increase in diameter $d_{22a1}$ of the central protrusion.

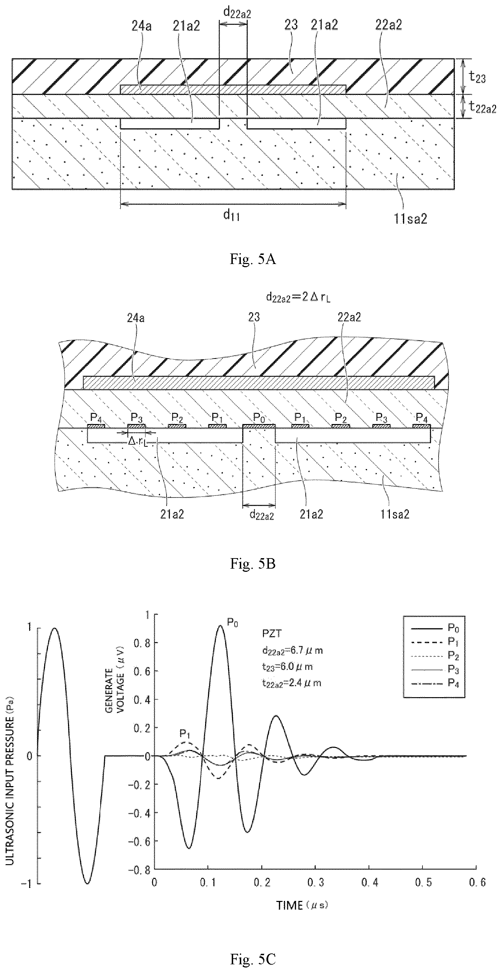

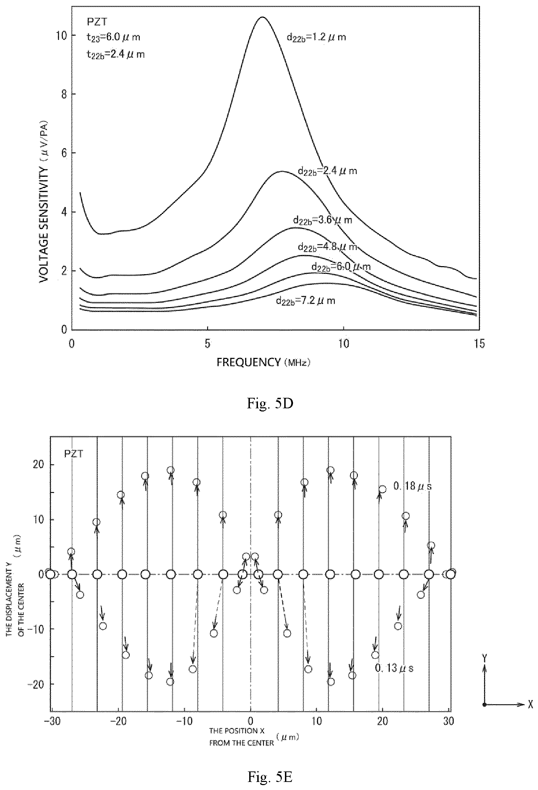

The stress distribution reinforcement structure of the parallel annular type can be constructed either with the downward protrusion on the output surface side of the vibrator as the center, or with the upward protrusion on the silicon substrate side as the center. Unlike Figure 4A, as shown in Figure 5A, the protrusion in the central part of the vibration cavity is the upward protrusion of a portion of the silicon substrate $11_{sa2}$. The numerical simulation results are shown in Figures 5C and 5D. Due to the upward protrusion as a stepped structure in the central part of the silicon substrate $11_{sa2}$ with a cylindrical recess, the vibrator 22a2 is inserted onto the silicon substrate $11_{sa2}$, thereby forming a parallel annular type vibration cavity 21a2 around the upward protrusion in the central part made of silicon. A fixed potential electrode 24a connected to a ground potential is arranged on the upper surface of the vibrator 22a2. On the fixed potential electrode 24a and on the vibrator 22a2 without the fixed potential electrode 24a, a fixed potential electrode protective film 23 made of epoxy resin is arranged.

In the case of Figure 5B, as shown in Table 2, for the positions $P_0$, $P_1$, ..., $P_4$ numbered sequentially from the center along the radius $r_{11}$ (=$d_{11}$/2) direction (outward) according to the arrangement of five potential detection ideal electrodes, the individual names of the potential transfer areas are defined as the central area $P_0$, the first peripheral area $P_1$, ..., the fourth peripheral area $P_4$. Unlike the definition in the case of Figure 4B shown in Table 1, the potential detection ideal electrode in the central potential transfer area (central area) $P_0$ is a circular island-shaped area.

Table 2

| Table 2 (General Definition) | | | |
|---|---|---|---|
| The Individual Names of Potential Transfer Zones | The Position in The Radial Direction Inside The Cavity ($d_{11}$=2$r_{11}$) | The Individual Names of The Generated Voltages | The Types of Lines on The Drawing |
| The Central Region $P_0$ | 0~(1/9)$r_{11}$ | The Central Voltage $V_{P0}$ | Thick Solid Line |
| The First Peripheral Region $P_1$ | (2/9)$r_{11}$~(3/9)$r_{11}$ | The First Peripheral Voltage $V_{P1}$ | Thick Dashed Line |
| The Second Peripheral Region $P_2$ | (4/9)$r_{11}$~(5/9)$r_{11}$ | The Second Peripheral Voltage $V_{P2}$ | Thin Dashed Line |
| The Third Peripheral Region $P_3$ | (6/9)$r_{11}$~(7/9)$r_{11}$ | The Third Peripheral Voltage $V_{P3}$ | Thin Solid Line |

(continued)

| Table 2 (General Definition) | | | |
|---|---|---|---|
| The Individual Names of Potential Transfer Zones | The Position in The Radial Direction Inside The Cavity $(d_{11}=2r_{11})$ | The Individual Names of The Generated Voltages | The Types of Lines on The Drawing |
| The Fourth Peripheral Region $P_4$ | $(8/9)r_{11}{\sim}r_{11}$ | The Fourth Peripheral Voltage $V_{P4}$ | Dashed-Dotted Line |

The outer side of the central region $P_0$ has the same line width and spacing width along the radial direction, and the four first peripheral regions $P_1$, second peripheral region $P_2$, third peripheral region $P_3$, and fourth peripheral region $P_4$ enclosed by the same spacing are concentric circular rings (regions). Due to the same line width and spacing width, the radius $r_{11}$ ($=d_{11}/2$) of the vibration cavity 21a1 is divided into 9 parts, defining the positions of the central region $P_0$, first peripheral region $P_1$, ... , and fourth peripheral region $P_4$ along the radius. That is, as defined in Table 2, the radius $r_{11}=d_{11}/2$ of the vibration cavity 21a1, the central region $P_0$ is defined as a circular region (region) with a certain line width from the center to the radius position $(1/9)r_{11}$. Similarly, as defined in Table 2, the first peripheral region $P_1$ is defined as a circular region with a certain line width from the radius position $(2/9)r_{11}$ to the radius position $(3/9)r_{11}$. The second peripheral region $P_2$ is defined as a circular region with a certain line width from the radius position $(4/9)r_{11}$ to the radius position $(5/9)r_{11}$, and the third peripheral region $P_3$ is defined as a circular region with a certain line width from the radius position $(6/9)r_{11}$ to the radius position $(7/9)r_{11}$. Furthermore, the fourth peripheral region $P_4$ is defined as the region from the radius position $(8/9)$ $r_{11}$ to the outermost circumference (radius position $r_{11}$).

For convenience, in Figure 5B, the structure is illustrated as five potential detection ideal electrodes embedded in the lower surface of the vibrating body 22a2. However, in the simulation, the thickness of the potential detection ideal electrodes is zero. Therefore, as shown in Figure 5B, the surface embedded in the vibrating body 22a2 is still a plate-like structure protruding from the surface of the vibrating body 22a1 as shown in Figure 4B, which does not bring any essential difference. The line width and spacing width along the radial direction outside the central region $P_0$ are the same, and the four first peripheral regions $P_1$, second peripheral region $P_2$, third peripheral region $P_4$, and fourth peripheral region $P_4$ surrounded by the same spacing are concentric circular rings. Additionally, as mentioned in the case of Figure 4B, in Figure 5B, the outer circumference of the potential detection ideal electrode in the fourth peripheral region $P_4$ is in contact with the silicon substrate $11_{sa2}$. In the simulation, it is assumed that the silicon substrate $11_{sa2}$ is semi-insulating, and the potential detection ideal electrode in the fourth peripheral region $P_4$ is in an electrically floating state. Similarly, the entire lower surface of the potential detection ideal electrode in the central region $P_0$ is in contact with the upward protruding upper end of the silicon substrate $11_{sa2}$, but assuming that the silicon substrate $11_{sa2}$ is semi-insulating, the potential detection ideal electrode in the central region $P_0$ is in an electrically floating state.

Due to the same line width and spacing width, in the arrangement shown in Figure 5B, the radius $r_{11}$ ($=d_{11}/2$) of the vibrating cavity 21a1 is divided into 9 parts by the first peripheral region $P_1$, ..., the fourth peripheral region $P_4$, etc. Therefore, the line width $\Delta r_L=r_{11}/9$ of each of the first peripheral region $P_1$, ..., the fourth peripheral region $P_4$ is constant. The diameter $d_{22a2}$ of the upward protrusion in the central part of the vibrating cavity 21a2 is $2\Delta r_L$. That is, the positions of the central region $P_0$, the first peripheral region $P_1$, ..., the fourth peripheral region $P_4$ are determined, as defined in Table 2. The transient response of the central voltage $V_{P0}$, the first peripheral voltage $V_{P1}$, ..., the fourth peripheral voltage $V_{4P}$ generated by the central region $P_0$, the first peripheral region $P_1$, ..., the fourth peripheral region $P_4$, respectively, is shown in Figure 5C.

Figure 5C presents the simulation results when PZT is used throughout the entire vibrating body 22a2. It illustrates the transient responses of the central voltage $V_{P0}$, the first peripheral voltage $V_{P1}$, ..., and the fourth peripheral voltage $V_{4P}$, which are generated during ultrasonic reception when the protrusion diameter $d_{22a2}$ in the central part of the parallel ring-shaped vibrational cavity 21a2 in the voltage generating section (22a2, 24a) is set to $d_{22a2}=2\Delta r_L=6.7\mu m$. This simulation considers a vibrating body 22a2 with a thickness $t_{22a2}=2.4\mu m$ and a fixed potential electrode protective film 23 with a thickness $t_{23}=6\mu m$. As indicated in the legend at the top right corner of Figure 5C, the thick solid line represents the transient response of the central voltage $V_{P0}$. In Figure 5C, the thick dashed line represents the first peripheral voltage $V_{P1}$, the thin dashed line represents the second peripheral voltage $V_{P2}$, the thin solid line represents the third peripheral voltage $V_{P3}$, and the dashed-dotted line represents the fourth peripheral voltage $V_{P4}$. When an ultrasonic wave consisting of a single pulse sine wave with a maximum pressure amplitude of $\pm 1Pa$ is input to the voltage generating section (22a2, 24a), pulse response voltage signals generated by the piezoelectric effect in the central region $P_0$, the second peripheral region $P_1$, ..., and the fourth peripheral region $P_4$ exhibit transient responses. The second vibration amplitude is the largest near approximately $0.13\mu s$, and the third and subsequent vibrations are decaying vibrations.

Specifically, the central voltage $V_{P0}$ shown in Figure 5C reaches its peak near the time point after approximately $0.06\mu s$ of ultrasonic pulse input, with a first vibration amplitude of approximately $-0.62\mu V$. In contrast, the second vibration reaches its peak near the time point after approximately 0.13μs, with an amplitude of approximately +0.92μV, reaching its maximum amplitude value. Subsequently, the third vibration reaches its peak near the time point after approximately 0.19μs, with an amplitude of approximately -0.55μV, and the fourth vibration reaches its peak near the time point after approximately 0.26μs, with an amplitude decaying to approximately +0.33μV The first peripheral voltage $V_{P1}$ shown in Figure 5C reaches its peak near the time point after approximately 0.06μs of ultrasonic pulse input, with a first vibration amplitude of approximately +0.13μV. In contrast, the second vibration reaches its peak near the time point after approximately 0.13μs, with an amplitude of approximately -0.18μV, reaching its maximum amplitude value. However, the absolute value of the amplitude $|V_{P1}|$ of the first peripheral voltage $V_{P1}$ is less than the absolute value of the amplitude $|V_{P0}|$ of the central voltage $V_{P0}$, and the central voltage $V_{P0}$ and the first peripheral voltage $V_{P1}$ exhibit an anti-phase relationship. Subsequently, the third vibration of the first peripheral voltage $V_{P1}$ reaches its peak near the time point after approximately 0.19μs, with an amplitude of approximately +0.12μV, and the fourth vibration reaches its peak near the time point after approximately 0.26μs, with an amplitude decaying to approximately -0.03μV. Due to the decrease in peak vibration amplitude, explanations for the fifth and subsequent times are omitted.

In Figure 5C, the fourth peripheral voltage $V_{P4}$, represented by a dashed-dotted line, reaches its peak near a time of approximately 0.06μs, with a first vibration amplitude of approximately +0.06μV. In contrast, the second vibration, which peaks near a time of approximately 0.13μs, has an amplitude of approximately -0.09μV, reaching its maximum amplitude value. The absolute amplitude of the fourth peripheral voltage $V_{P4}$, $|V_{P4}|$, is smaller than the absolute amplitude of the central voltage $V_{P0}$, $|V_{P0}|$, and the absolute amplitude of the first peripheral voltage $V_{P1}$, $|V_{P1}|$, making it the third smallest value. The first peripheral voltage $V_{P1}$, the third peripheral voltage $V_{P3}$, and the fourth peripheral voltage $V_{P4}$ have an anti-phase relationship with the central voltage $V_{P0}$ and the second peripheral voltage $V_{P2}$, while the central voltage $V_{P0}$ and the second peripheral voltage $V_{P2}$ have a phase relationship. Subsequently, the third vibration amplitude of the fourth peripheral voltage $V_{P4}$, which peaks near a time of approximately 0.19μs, is approximately +0.03μV, and the fourth vibration amplitude, which peaks near a time of approximately 0.26μs, decays to approximately -0.01μV.

In Figure 5C, the transient response vibration of the third peripheral voltage $V_{P3}$, represented by the thin solid line, exhibits an amplitude absolute value $|V_{P3}|$ that is roughly the same as the absolute value $|V_{P4}|$ of the fourth peripheral voltage $V_{P4}$, but slightly smaller overall, making it the fourth smallest value. The third peripheral voltage $V_{P3}$ vibrates in phase with the first peripheral voltage $V_{P1}$ and the fourth peripheral voltage $V_{P4}$. The third peripheral voltage $V_{P3}$ vibrates out of phase with the central voltage $V_{P0}$ and the second peripheral voltage $V_{P2}$. Additionally, the transient response vibration of the second peripheral voltage $V_{P2}$, represented by the thin dashed line in Figure 5C, exhibits an amplitude absolute value $|V_{P2}|$ that is smaller than the absolute value $|V_{P3}|$ of the third peripheral voltage $V_{P3}$ and the absolute value $|V_{P4}|$ of the fourth peripheral voltage $V_{P4}$, making it the smallest fifth value. The second peripheral voltage $V_{P2}$ vibrates in phase with the central voltage $V_{P0}$, and vibrates out of phase with the first peripheral voltage $V_{P1}$, the third peripheral voltage $V_{P3}$, and the fourth peripheral voltage $V_{P4}$. That is, the potential relationship generated by the piezoelectric effect on the output surface of the vibrator 22a2 of the voltage generating section (22a2, 24a) in Figures 5A and 5B exhibits position-dependent potential distribution with a magnitude relationship as follows:

$$|V_{P0}|>|V_{P1}|>|V_{P4}|>|V_{P3}|>|V_{P2}| \quad ……(9)$$

Figure 5D, similar to Figure 5C, presents the simulation results of the frequency dependence of voltage sensitivity (μV/Pa) when using PZT for the vibrator 22a2 in the voltage generation section (22a2, 24a) depicted in Figures 5A and 5B. In the simulation, the thickness $t_{22b}$ of the vibrator 22a2 is set to 2.4μm, the thickness $t_{23}$ of the fixed potential electrode protective film 23 on the vibrator 22a2 is set to 6μm, and the diameter $d_{22b}$ of the protrusion in the central part of the parallel annular vibration cavity of the voltage generation section is used as a parameter.

As shown in Figure 5D, within the receiving frequency range of 5MHz to 10MHz, when the protrusion diameter $d_{22b}$ is set to 1.2μm (reference value), the maximum voltage sensitivity is approximately 10.6μV/Pa, which is the maximum value among the parameters used in the simulation. Within the same frequency range, when the protrusion diameter $d_{22b}$ is doubled to 2.4μm, the maximum voltage sensitivity decreases to approximately 5.4μV/Pa, which is roughly half of the original value. When the protrusion diameter $d_{22b}$ is tripled to 3.6μm, the maximum voltage sensitivity drops to approximately 3.3μV/Pa, which is about one-third of the original value. When the protrusion diameter $d_{22b}$ is quadrupled to 4.8μm, the maximum voltage sensitivity decreases to approximately 2.5μV/Pa, which is roughly one-fourth of the original value. When the protrusion diameter $d_{22b}$ is quintupled to 6.0μm, the maximum voltage sensitivity is approximately 2.0μV/Pa, which is about one-fifth of the original value. Finally, when the protrusion diameter $d_{22b}$ is sextupled to 7.2μm, the maximum voltage sensitivity is approximately 1.7μV/Pa, which is roughly one-sixth of the original value. In other words, as can be seen from Figure 5D, the larger the protrusion diameter $d_{22b}$ in the central part of the parallel annular vibration cavity 21a2 of the voltage generating section (22a2, 24a), the lower the maximum voltage sensitivity.

The voltage generating sections (22a2, 24a) shown in Figures 5A and 5B are located at the protrusion in the central part. The vibration of the vibrating body 22a2 in the up-down direction (Y direction in Figure 5E) is fixed relative to the silicon substrate $11_{sa2}$. With this central part fixed, the vibrating body 22a2 located above the toroidal vibration cavity 21a2 appears wing-like as shown in Figure 5E, vibrating as an upwardly convex curved surface and a downwardly convex curved surface on both sides of the central protrusion. Figure 5E illustrates the displacement inside the upwardly convex curved surface and the displacement inside the downwardly convex curved surface, which are asymmetric to each other. Figure 5E is a model diagram used to explain the displacement and stress inside the vibrating body 22a2. In a no-deflection, no-load state, it is assumed that the vibrating body 22a2 constitutes a flat plane in the horizontal direction (X direction in Figure 5E). The figure represents a model where, in the no-load state with a flat arrangement, 18 circles are arranged at equal intervals of approximately $3.7\mu$m in the X direction, and these circles are connected and arranged laterally through an elastic body (spring).

It should be noted that the Y direction used in Figure 5E corresponds to the z direction in equations (2a) to (5c), and the X direction in Figure 5E corresponds to the x or y direction in equations (2a) to (5c). In the stress model shown in Figure 5E, the structure of the voltage generating section (22a2, 24a) shown in Figure 5A and Figure 5B, where the vibrating body 22a2 is fixed at the protrusion in the central part, constitutes a toroidal vibrating cavity 21a2 with a diameter $d_{11}=66\mu$m. Figure 5E illustrates the internal displacement of the vibrating body 22a2 in a vibrating state when PZT is used in the vibrating body 22a2, based on the structure shown in Figure 5A and Figure 5B. The lower part of Figure 5E shows the arrangement of the circles when the vibrating body 22a2 deflects downward as two downward-convex curves, as well as the displacement position of each circle after $0.13\mu$s has elapsed since the arrival of the ultrasonic pulse. On the other hand, the upper part shows the arrangement of the circles when the vibrating body 22a2 deflects upward as two upward-convex curves, as well as the displacement position of each circle after $0.18\mu$s has elapsed since the arrival of the ultrasonic pulse. It represents the displacement degrees in the X and Y directions of the circles arranged at equal intervals in the X direction under no-load conditions, due to the vibration of the vibrating body 22a2.

In the scenario depicted in Figure 5E, on both sides of the fixed position in the central part, when the vibrating body 22a2 flexes upward with a convex shape, the interval between circles near the fixed position in the central part tends to decrease in the X direction. Conversely, when the vibrating body 22a2 flexes downward with a convex shape, the interval between circles near the fixed position in the central part tends to increase in the X direction. Therefore, the change in the interval between circles of the vibrating body 22a2 is asymmetric when flexing upward and downward. Consequently, it can be observed that the internal stress of the vibrating body 22a2 is also uneven.

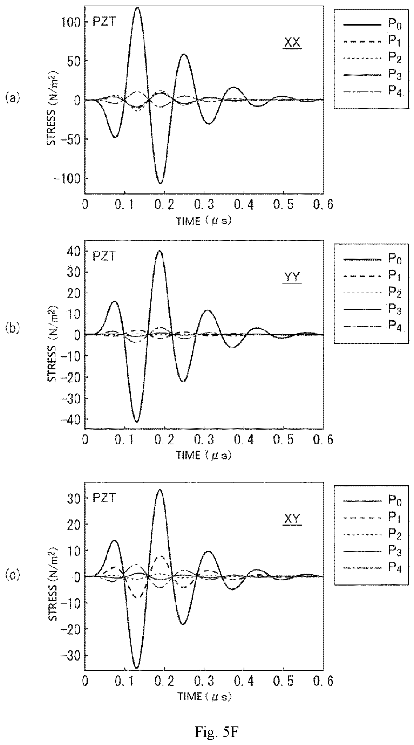

In the case where the vibrator 22a2 in Figures 5A and 5B uses PZT, Figure 5F(a) shows the stress variation in the XX direction, Figure 5F(b) shows the stress variation in the YY direction, and Figure 5F(c) shows the stress variation in the XY direction. The X and Y directions used in Figures 5F(a) to 5F(c) are the same as those defined in Figure 5E. As shown in the legend of the line types in the upper right corner of each of Figures 5F(a) to 5F(c), the thick solid line represents the transient response of the central stress $T_{P0}$ generated in the central region $P_0$. In Figures 5F(a) to 5F(c), the thick dashed line represents the transient response of the first peripheral stress $T_{P1}$ generated in the first peripheral region $P_1$, the thin dashed line represents the transient response of the second peripheral stress $T_{P2}$ generated in the second peripheral region $P_2$, the thin solid line represents the transient response of the third peripheral stress $T_{P3}$ generated in the third peripheral region $P_3$, and the dashed-dotted line represents the transient response of the fourth peripheral stress $T_{4P}$ generated in the fourth peripheral region $P_4$. As shown on the left side of Figure 5C, when an ultrasonic wave composed of a single pulse sine wave with a maximum $\pm1$Pa vibration amplitude is input to the voltage generating section (22a2, 24a), the central stress $T_{P0}$ in the XX direction, the first peripheral stress $T_{P1}$, ..., and the fourth peripheral stress $T_{4P}$ generated in the vibrator 22a2 corresponding to the central region $P_0$, the first peripheral region $P_1$, ..., and the fourth peripheral region $P_4$ exhibit transient responses, with the second vibration amplitude being the maximum near approximately $0.13\mu$s, and decaying vibrations after the third time.

Taking the central stress $T_{P0}$ in the XX direction indicated by the thick solid line in Figure 5F(a) as an example, the first vibration amplitude reaching its peak near the time point after approximately $0.06\mu$s of ultrasonic pulse input is approximately -50N/m². In contrast, the second vibration amplitude reaching its peak near the time point after approximately $0.13\mu$s is approximately +120N/m², reaching the maximum amplitude value. Subsequently, the third vibration amplitude reaching its peak near the time point after approximately $0.19\mu$s is approximately -110N/m², the fourth vibration amplitude reaching its peak near the time point after approximately $0.26\mu$s is approximately +60N/m², the fifth vibration amplitude reaching its peak near the time point after approximately $0.31\mu$s is approximately -40N/m², and the sixth vibration amplitude reaching its peak near the time point after approximately $0.37\mu$s attenuates to approximately +20N/m². The other first peripheral stress $T_{P1}$, ..., fourth peripheral stress $T_{4P}$ also exhibit the same trend. According to Figure 5F(a), among the central stress $T_{P0}$, first peripheral stress $T_{P1}$, ..., fourth peripheral stress $T_{4P}$ generated in the vibrating body 22a2 in the XX direction, the central stress $T_{P0}$ is the largest.

As shown in Figure 5F(b), the stress (N/m²) generated by the vibrating body 22a2 in the YY direction also exhibits a maximum amplitude of the second vibration near approximately $0.13\mu$s, followed by a transient response of decaying vibration after the third time. Taking the central stress $T_{P0}$ in the YY direction represented by the thick solid line as an example, the first vibration amplitude reaching a peak near approximately $0.06\mu$s after the input of the ultrasonic pulse is approximately +15N/m². In contrast, the second vibration amplitude reaching a peak near approximately $0.13\mu$s is approximately -42N/m², reaching the maximum amplitude value. Subsequently, the third vibration amplitude reaching a peak near approximately $0.19\mu s$ is approximately $+39N/m^2$, the fourth vibration amplitude reaching a peak near approximately $0.26\mu s$ is approximately $-22N/m^2$, the fifth vibration amplitude reaching a peak near approximately $0.31\mu s$ is approximately $+12N/m^2$, and the sixth vibration amplitude reaching a peak near approximately $0.37\mu s$ decays to approximately $-8N/m^2$. The other first peripheral stress $T_{P1}$, ..., fourth peripheral stress $T_{4P}$ also exhibit the same trend. According to Figure 5F(b), among the central stress $T_{P0}$, first peripheral stress $T_{P1}$, ..., fourth peripheral stress $T_{4P}$ generated in the vibrating body 22a2 in the YY direction, the central stress $T_{P0}$ is the largest, similar to the XX direction.

Similarly, when an ultrasonic pulse composed of sine waves is input to the voltage generating section (22a2, 24a), the central stress $T_{P0}$ in the XY direction, the first peripheral stress $T_{P1}$, ..., and the fourth peripheral stress $T_{4P}$ generated in the vibrating body 22a2 corresponding to the central region $P_0$, the first peripheral region $P_1$, ..., and the fourth peripheral region $P_4$, respectively, exhibit a transient response with the second vibration amplitude being the largest near approximately $0.13\mu s$, followed by decaying vibrations after the third time, as shown in Figure 5F(c). Taking the central stress $T_{P0}$ in the XY direction represented by the thick solid line in Figure 5F(c) as an example, the first vibration amplitude reaching a peak near approximately $0.06\mu s$ after the input of the ultrasonic pulse is approximately $+12N/m^2$, compared to which, the second vibration amplitude reaching a peak near approximately $0.13\mu s$ is approximately $-35N/m^2$, reaching the maximum amplitude value. Subsequently, the third vibration amplitude reaching a peak near approximately $0.19\mu s$ is approximately $+32N/m^2$, the fourth vibration amplitude reaching a peak near approximately $0.26\mu s$ is approximately $-20N/m^2$, the fifth vibration amplitude reaching a peak near approximately $0.31\mu s$ is approximately $+11N/m^2$, and the sixth vibration amplitude reaching a peak near approximately $0.37\mu s$ decays to approximately $-7N/m^2$. The other first peripheral stress $T_{P1}$, ..., and fourth peripheral stress $T_{4P}$ also exhibit the same trend. According to Figure 5F(c), among the stresses generated in the vibrating body 22a2 in the XY direction, the central stress $T_{P0}$ is the largest, similar to the XX direction and YY direction.

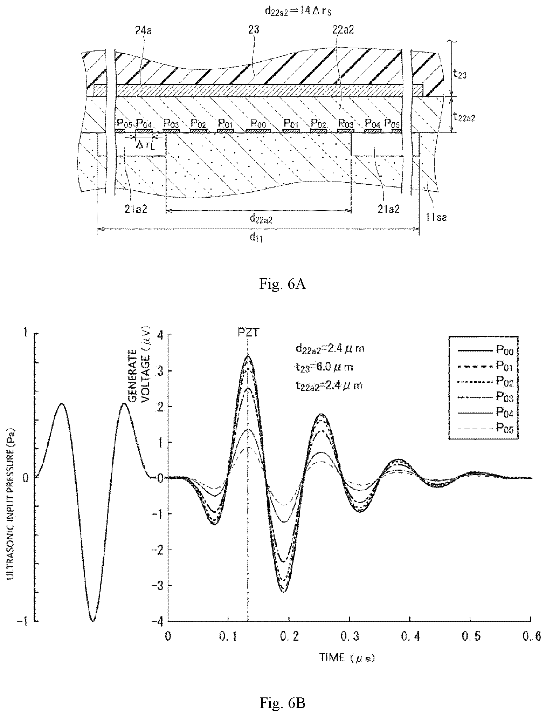

Next, the central part of Figure 5B is enlarged, as shown in Figure 6A. The central region $P_0$ of Figure 5B is subdivided into a subdivided central region $P_{00}$, a first subdivided peripheral region $P_{01}$, a second subdivided peripheral region $P_{02}$, and a third subdivided peripheral region $P_{03}$. The minute potential distribution of the voltage generated at the central protrusion and its vicinity in Figure 5B is verified. The subdivided central region $P_{00}$ is located at the center of the central protrusion. Surrounding the subdivided central region $P_{00}$ at the center, the first subdivided peripheral region $P_{01}$, the second subdivided peripheral region $P_{02}$, and the third subdivided peripheral region $P_{03}$ are located around it. In Figure 6A, more refined potential detection ideal electrodes are arranged at the positions of the subdivided central region $P_{00}$, the first subdivided peripheral region $P_{01}$, the second subdivided peripheral region $P_{02}$, and the third subdivided peripheral region $P_{03}$, respectively, compared to the situation in Figure 5B. The silicon substrate $11_{sa}$ is inserted with a vibrating body 22a2, and a parallel ring-shaped vibrating cavity 21a2 is arranged around the protrusion in the central part. The structure of the vibrating body 22a2, which is equipped with a fixed potential electrode 24a and a fixed potential electrode protective film 23, is the same as that in Figure 5B.

The positions of the first, second, and third subdivided peripheral areas $P_{01}$, $P_{02}$, and $P_{03}$ outside the ideal electrode for potential detection are surrounded by three concentric rings of ideal electrodes for potential detection. The ideal electrodes for potential detection in the first, second, and third subdivided peripheral areas $P_{01}$, $P_{02}$, and $P_{03}$ are arranged with the same line width $\Delta r_L$ and spacing width $\Delta r_S$ in the radial direction ($\Delta r_L = \Delta r_S$), and are spaced at the same interval. Since the line width and spacing width of the ideal electrodes for potential detection are the same, the ideal electrodes for potential detection divide the radius $r_{22a2}$ of the central protrusion ($=d_{22a2}/2$) into seven parts, defining the positions of the subdivided central area $P_{00}$, the first subdivided peripheral area $P_{01}$, the second subdivided peripheral area $P_{02}$, and the third subdivided peripheral area $P_{03}$ along the radius. Therefore, the diameter $d_{22a2}$ of the protrusion in the central part of the vibrating cavity is approximately equal to the outer circumferential diameter $14\Delta r_S$ of the ideal electrode $P_{03}$ for potential detection arranged in the third subdivided peripheral area $P_{03}$ ($14\Delta r_S = d_{22a2}$). Furthermore, setting the radius of the central protrusion as $r_{22a2} = d_{22a2}/2$, the subdivided central area $P_{00}$ is defined as an area where a ring-shaped ideal electrode for potential detection with a certain line width is arranged from the center to a radial position of $(1/7)r_{22a2}$.

Similarly, the first subdivided peripheral area $P_{01}$ is defined as: a region where an annular potential detection ideal electrode with a certain line width is arranged from the radius position $(2/7)r_{22a2}$ to the radius position $(3/7)r_{22a2}$. The second subdivided peripheral area $P_{02}$ is defined as: a region where an annular potential detection ideal electrode with a certain line width is arranged from the radius position $(4/7)r_{22a2}$ to the radius position $(5/7)r_{22a2}$. The third subdivided peripheral area $P_{03}$ is defined as: a region where an annular potential detection ideal electrode with a certain line width is arranged from the radius position $(6/7)r_{22a2}$ to the radius position $(7/7)r_{22a2}$. Additionally, the fourth subdivided peripheral area $P_{04}$ is defined as: a region where an annular potential detection ideal electrode with a certain line width is arranged on the vibration cavity 21a2 outside the central protrusion from the radius position $(8/7)r_{22a2}$ to the radius position $(9/7)r_{22a2}$. Furthermore, the fifth subdivided peripheral area $P_{03}$ is defined as: a region where an annular potential detection ideal electrode with a certain line width is arranged on the vibration cavity 21a2 outside the central protrusion from the radius position $(10/7)r_{22a2}$ to the radius position $(11/7)r_{22a2}$.

In the simulation, it is assumed that the six ideal potential detection electrodes, respectively positioned in the

central region $P_{00}$, the first peripheral region $P_{01}$, ..., and the fifth peripheral region $P_{05}$, are all in an electrically open state (open circuit). On the output surface of the vibrating body 22a2, the radial electric field within the ideal potential detection electrodes located in each of the central region $P_{00}$, the first peripheral region $P_{01}$, ..., and the fifth peripheral region $P_{05}$ is short-circuited by the ideal potential detection electrodes.

Figure 6B illustrates the transient response of voltage generated during ultrasonic reception when the diameter of the protrusion $d_{22a2}$ in the central part of the parallel annular vibration cavity 21a2 of the voltage generating unit (22a2, 24a) is set to 2.4μm, in the case where the entire vibrator 22a2 is made of PZT. The diagram uses the positions of the potential transfer areas, namely the central region $P_{00}$, the first peripheral region $P_{01}$, ..., and the fifth peripheral region $P_{05}$, as parameters. This scenario assumes that the thickness $t_{22a2}$ of the vibrator 22a2 excluding the central protrusion is 2.4μm, and the thickness $t_{0203}$ of the fixed potential electrode protective film 23 is 6.0μm. As shown in the legend of the line types in the upper right corner of Figure 6B, the thick solid line represents the transient response of the voltage generated in the central region $P_{00}$, namely the central region voltage $V_{P00}$. In Figure 6B, the thick dashed line represents the voltage generated in the first peripheral region $P_{01}$, namely the first peripheral region voltage $V_{P01}$, the dotted line represents the voltage generated in the second peripheral region $P_{02}$, namely the second peripheral region voltage $V_{P02}$, the dashed-dotted line represents the voltage generated in the third peripheral region $P_{03}$, namely the third peripheral region voltage $V_{P03}$, the thin solid line represents the voltage generated in the fourth peripheral region $P_{04}$, namely the fourth peripheral region voltage $V_{P04}$, and the thin dashed line represents the voltage generated in the fifth peripheral region $P_{05}$, namely the fifth peripheral region voltage $V_{P05}$.

As shown on the left side of Figure 6B, when an ultrasonic wave consisting of a 1.5-cycle sine wave vibrating asymmetrically at 0.3Pa on the positive side and 1Pa on the negative side is input to the voltage generation section (22a2, 24a), the voltage signals generated in the subdivided central region $P_{00}$, the first subdivided peripheral region $P_{01}$, ..., and the fifth subdivided peripheral region $P_{05}$ exhibit a transient response where the amplitude of the second vibration reaches its maximum near approximately 0.13μs, and the third and subsequent vibrations are damped.

Specifically, in Figure 6B, the first subdivided central voltage $V_{P00}$ in the first subdivided central region $P_{00}$ of the central part of the vibrating body 22a2, represented by the thick solid line, reaches a peak near the time point after approximately 0.06μs following the input of the ultrasonic pulse, with a first vibration amplitude of approximately -1.3μV. In contrast, the second vibration amplitude, which peaks near the time point after approximately 0.13μs, is approximately +3.5μV, reaching the maximum amplitude value. Subsequently, the third vibration amplitude, which peaks near the time point after approximately 0.19μs, is approximately -3.2μV, and the fourth vibration amplitude, which peaks near the time point after approximately 0.26μs, decays to approximately +1.8μV. The first subdivided peripheral voltage $V_{P01}$ in the first subdivided peripheral region $P_{01}$, represented by the thick dashed line in Figure 6B, reaches a peak near the time point after approximately 0.06μs following the input of the ultrasonic pulse, with a first vibration amplitude of approximately -1.2μV. In contrast, the second vibration amplitude, which peaks near the time point after approximately 0.13μs, is approximately +3.4μV, reaching the maximum amplitude value. However, the absolute value of the amplitude $|V_{P01}|$ of the first subdivided peripheral voltage $V_{P01}$ is less than the absolute value of the amplitude $|V_{P00}|$ of the subdivided central voltage $V_{P00}$. Subsequently, the third vibration amplitude of the first subdivided peripheral voltage $V_{P01}$, which peaks near the time point after approximately 0.19μs, is approximately -3.1μV, and the fourth vibration amplitude, which peaks near the time point after approximately 0.26μs, decays to approximately +1.7μV. Due to the decrease in peak vibration amplitude, explanations for the fifth and subsequent times are omitted.

In Figure 6B, the absolute value of the amplitude $|V_{P02}|$ exhibited by the transient response vibration of the second segmented peripheral voltage $V_{P02}$ in the second segmented peripheral region $P_{02}$, indicated by the dashed line, is slightly smaller than the absolute value $|V_{P01}|$ of the first segmented peripheral voltage $V_{P01}$ in the first segmented peripheral region $P_{01}$, ranking third. Additionally, the absolute value of the amplitude $|V_{P03}|$ exhibited by the transient response vibration of the third segmented peripheral voltage $V_{P03}$ in the third segmented peripheral region $P_{03}$, indicated by the dashed-dotted line, is slightly smaller than the absolute value $|V_{P02}|$ of the second segmented peripheral voltage $V_{P02}$, ranking fourth. Furthermore, the absolute value of the amplitude $|V_{P04}|$ exhibited by the transient response vibration of the fourth segmented peripheral voltage $V_{P04}$ in the fourth segmented peripheral region $P_{04}$, indicated by the thin solid line, is slightly smaller than the absolute value $|V_{P03}|$ of the third segmented peripheral voltage $V_{P03}$, ranking fifth.

Furthermore, in Figure 6B, the fifth subdivided peripheral voltage $V_{P05}$ in the fifth subdivided peripheral region $P_{05}$, indicated by the thin dashed line, reaches its peak near the time after approximately 0.06μs, with a first vibration amplitude of approximately -0.2μV. Subsequently, it reaches its peak near the time after approximately 0.13μs, with a second vibration amplitude of approximately +0.6μV, reaching its maximum amplitude value. The absolute value of the amplitude $|V_{P05}|$ of the fifth subdivided peripheral voltage $V_{P05}$ is smaller than the absolute values $|V_{P00}|$ to $|V_{P04}|$ of the subdivided central voltage $V_{P00}$ to the fourth subdivided peripheral voltage $V_{P04}$, representing the smallest value. It should be noted that the subdivided central voltage $V_{P00}$ to the fifth subdivided peripheral voltage $V_{P05}$ are all in the same phase relationship. Afterwards, the third vibration amplitude of the fifth subdivided peripheral voltage $V_{P05}$, which reaches its peak near the time after approximately 0.19μs, is approximately -0.4μV. The fourth vibration amplitude, which reaches its peak near the time after approximately 0.26μs, decays to approximately +0.2μV. That is, the potential relationship generated by the piezoelectric effect on the output surface of the vibrator 22a2 of the voltage generating section (22a2, 24a) is as follows:

$$|V_{P00}|>|V_{P01}|>|V_{P02}|>|V_{P03}|>|V_{P04}|>|V_{P05}| \quad \ldots\ldots(10)$$

It presents a potential distribution with position-dependent magnitude relationships.

Figure 6C illustrates the relationship between the voltage ($\mu$V) generated on the vibrating body 22a2 and the generation position ($\mu$m) measured from the center, with the diameter $d_{22a2}$ of the central protrusion of the vibrating cavity 21a2 as a parameter, when using PZT for the vibrating body 22a2. In this case, the thickness $t_{22a2}$ of the vibrating body 22a2 is $t_{22a2}$=2.4$\mu$m, and the thickness $t_{23}$ of the fixed potential electrode protective film 23 is $t_{23}$=6$\mu$m. As shown in Figure 6C, the curve representing the voltage position dependence is symmetrical about the center of the voltage generating section (22a2, 24a), and it can be seen that the smaller the diameter $d_{22a2}$ of the central protrusion of the vibrating cavity 21a2, the greater the generated voltage. Specifically, when the protrusion diameter $d_{22a2}$ is $d_{22a2}$=2.4$\mu$m (reference value), the maximum generated voltage is approximately 3.2$\mu$V, which is the largest among the parameters used in the simulation. Additionally, when the protrusion diameter $d_{22a2}$ is $d_{22a2}$=4.8$\mu$m, which is twice the reference value, the maximum generated voltage is approximately 1.5$\mu$V, which is reduced by approximately half; when the protrusion diameter $d_{22a2}$ is $d_{22a2}$=7.2$\mu$m, which is three times the reference value, the maximum generated voltage is approximately 1.0$\mu$V, which is reduced to approximately one-third; when the protrusion diameter $d_{22a2}$ is $d_{22a2}$=9.6$\mu$m, which is four times the reference value, the maximum generated voltage is approximately 0.8$\mu$V, which is reduced to approximately one-fourth. That is, as can be seen from Figure 6C, the larger the diameter $d_{22a2}$ of the central protrusion of the vibrating cavity 21a2, the smaller the maximum generated voltage.

**V-shaped (inclined annular surface)**

Next, the voltage distribution on the output surface of the stress distribution reinforcement structure with a V-shaped cross-sectional structure, as shown in Figure 7A, was studied for different positions on the vibrator 22b constituting the voltage generation section (22b, 24b). This research serves as the foundation for enhancing sensitivity and broadening bandwidth. The vibrator 22b is arranged on the recessed portion of the silicon substrate $11_{sb}$, with a fixed potential electrode 24b grounded arranged on the vibrator 22b. A fixed potential electrode protective film 23 made of resin is arranged on the fixed potential electrode 24b. The vibrator 22b takes on a conical shape tapering downwards on the recessed portion of the silicon substrate $11_{sb}$. Specifically, as shown in Figure 7A, due to the V-shaped cross-sectional shape, the lower tip of the V-shape contacts the bottom surface of the recessed portion of the silicon substrate $11_{sb}$. Therefore, in the space formed by the recessed portion, inclined toroidal vibration cavities 21b with two triangular cross-sections are provided on both sides of the V-shaped cutting area. "Inclined toroidal" refers to the cross-sectional structure of the space constituting the toroid, which is a three-dimensional structure with one main surface inclined relative to the other, as shown in Figure 7A. In the simulation, using the same definition as in Table 2, an ideal electrode for potential detection was arranged in the central region $P_0$ at the lower tip position of the V-shape, and around the central region $P_0$, four concentric circular rings of the first peripheral region $P_1$, ..., the fourth peripheral region $P_4$ surrounding the central region $P_0$ were arranged along the shape of the V-shape.

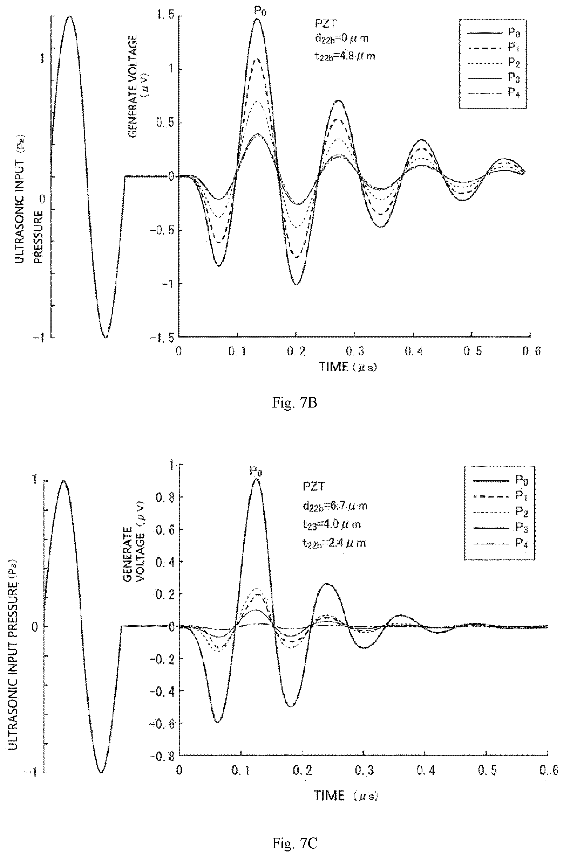

Figure 7B presents the simulation results when PZT is used throughout the entire vibrating body 22b. When the silicon substrate $11_{sb}$ makes point contact with the vibrating body 22b in the central part of the vibrating cavity 21b (assuming a contact width $d_{22b}$=0$\mu$m), a transient response of voltage generation occurs. This response is displayed with parameters indicating the positions of the potential transfer areas, namely the central region $P_0$, the first peripheral region $P_1$, ..., and the fourth peripheral region $P_4$. In this case, the thickness $t_{22b}$ of the vibrating body 22b is set to 4.8$\mu$m, and the thickness $t_{23}$ of the fixed potential electrode protective film 23 is set to 6$\mu$m. When a single-frequency sine wave with a maximum vibration amplitude of $\pm$1Pa is input to the voltage generating sections (22b, 24b) as shown on the left side of Figure 7B, pulse responses are generated in the potential transfer areas, namely the central region $P_0$, the first peripheral region $P_1$, ..., and the fourth peripheral region $P_4$. These responses exhibit a transient response where the second vibration amplitude reaches its maximum near approximately 0.13$\mu$s, and subsequent amplitudes decay.

Specifically, the transient response of the central voltage $V_{P0}$ in the central region $P_0$, represented by the thick solid line in Figure 7B, shows a first vibration amplitude of approximately -0.8$\mu$V after about 0.06$\mu$s following the input of the ultrasonic pulse. In contrast, the second vibration amplitude, which reaches its peak after about 0.13$\mu$s, is approximately +1.5$\mu$V, reaching its maximum amplitude value. Subsequently, the third vibration amplitude, which peaks after about 0.19$\mu$s, is approximately -1.2$\mu$V, and the fourth vibration amplitude, which peaks after about 0.26$\mu$s, decays to approximately +0.7$\mu$V. The transient response of the first peripheral voltage $V_{P1}$, represented by the thick dashed line in Figure 7B, shows a first vibration amplitude of approximately -0.6$\mu$V after about 0.06$\mu$s following the pulse input. In comparison, the second vibration amplitude, which reaches its peak after about 0.13$\mu$s, is approximately +1.2$\mu$V, reaching its maximum amplitude value. However, the absolute amplitude value $|V_{P1}|$ of the first peripheral voltage

$V_{P1}$ is smaller than the absolute amplitude value $|V_{P0}|$ of the central voltage $V_{P0}$. Subsequently, the third vibration amplitude of the first peripheral voltage $V_{P1}$, which peaks after about $0.19\mu s$, is approximately $-0.7\mu V$, and the fourth vibration amplitude, which peaks after about $0.26\mu s$, decays to approximately $+0.6\mu V$. The peak amplitudes of the vibrations after the fifth time decrease, so further explanations are omitted.

In Figure 7B, the absolute amplitude $|V_{P2}|$ of the second peripheral voltage $V_{P2}$, represented by the dashed line, is slightly smaller than the absolute amplitude $|V_{P1}|$ of the first peripheral voltage $V_{P1}$, ranking as the third value. Additionally, the absolute amplitude $|V_{P3}|$ of the third peripheral voltage $V_{P3}$, depicted by the thin solid line in Figure 7B, is slightly smaller than the absolute amplitude $|V_{P2}|$ of the second peripheral voltage $V_{P2}$, ranking as the fourth value.

Moreover, the transient response of the fourth peripheral voltage $V_{P4}$, represented by the dashed-dotted line in Figure 7B, exhibits a first vibration amplitude of approximately $0.2\mu V$ after approximately $0.06\mu s$. In contrast, the second vibration amplitude, which reaches its peak after approximately $0.13\mu s$, is approximately $+0.4\mu V$, reaching the maximum amplitude value. However, the absolute amplitude value $|V_{P4}|$ of the fourth peripheral voltage $V_{P4}$ is smaller than the absolute amplitude values $|V_{P0}|$ to $|V_{P2}|$ of the central voltage $V_{P0}$ to the third peripheral voltage $V_{P3}$, representing the smallest value. It should be noted that the central voltage $V_{P0}$ to the fourth peripheral voltage $V_{P4}$ are all in the same phase relationship. Therefore, the relationship between the absolute values of the potentials generated on the output surface of the vibrating body 22b is as follows:

$$|V_{P0}|>|V_{P1}|>|V_{P2}|>|V_{P3}|>|V_{P4}| \qquad \ldots\ldots(11)$$

Exhibit a potential distribution with position-dependent magnitude relationships.

Figure 7C is similar to Figure 7B, showing the simulation results when PZT is used in the vibrating body 22b of Figure 7A. Assuming a contact width $d_{22b}=6.7\mu m$ between the silicon substrate $11_{sb}$ and the vibrating body 22b in the central part of the vibrating cavity 21b, the transient response of the generated voltage is displayed with the positions of the potential transfer regions, namely the central region $P_0$, the first peripheral region $P_1$, ..., and the fourth peripheral region $P_4$, as parameters. At this time, the thickness $t_{22b}$ of the vibrating body 22b is $t_{22b}=2.4\mu m$, and the thickness $t_{23}$ of the fixed potential electrode protective film 23 is $t_{23}=4\mu m$. When a single-frequency sine wave with a maximum vibration amplitude of $\pm 1Pa$ is input to the voltage generating sections (22b, 24b) as shown on the left side of Figure 7C, the pulse responses generated in the potential transfer regions, namely the central region $P_0$, the first peripheral region $P_1$, ..., and the fourth peripheral region $P_4$, are similar to the example shown in Figure 7B, exhibiting a transient response where the second vibration amplitude reaches its maximum near approximately $0.13\mu s$, and the third and subsequent vibrations are decaying vibrations.

Specifically, in Figure 7C, the transient response of the center voltage $V_{P0}$ in the central region $P_0$, represented by the thick solid line, shows that the amplitude of the first oscillation after the pulse input is approximately $0.6\mu V$ after about $0.06\mu s$. In contrast, the peak amplitude of the second oscillation after about $0.13\mu s$ is approximately $+0.9\mu V$, reaching the maximum amplitude value. Subsequently, the peak amplitude of the third oscillation after about $0.19\mu s$ is approximately $-0.5\mu V$, and the peak amplitude of the fourth oscillation after about $0.26\mu s$ decays to approximately $+0.3\mu V$. The peak amplitudes of the oscillations after the fifth time decrease, so the explanation is omitted.

The transient response of the first peripheral voltage $V_{P1}$, represented by the thick dashed line in Figure 7C, exhibits a peak amplitude of approximately $0.16\mu V$ during the first oscillation after approximately $0.06\mu s$ following the pulse input. In contrast, the peak amplitude of the second oscillation, occurring after approximately $0.13\mu s$, reaches a maximum value of approximately $+0.18\mu V$. However, the absolute amplitude value $|V_{P1}|$ of the first peripheral voltage $V_{P1}$ is smaller than the absolute amplitude value $|V_{P0}|$ of the central voltage $V_{P0}$. Subsequently, the amplitude of the third oscillation of the first peripheral voltage $V_{P1}$, which peaks after approximately $0.19\mu s$, is approximately $-0.12\mu V$, and the amplitude of the fourth oscillation, which peaks after approximately $0.26\mu s$, decays to approximately $+0.6\mu V$.

In Figure 7C, the absolute amplitude value $|V_{P2}|$ of the second peripheral voltage $V_{P2}$, represented by the dashed line, is slightly larger than the absolute amplitude value $|V_{P1}|$ of the first peripheral voltage $V_{P1}$. Additionally, the absolute amplitude value $|V_{P3}|$ of the third peripheral voltage $V_{P3}$, represented by the thin solid line in Figure 7C, is slightly smaller than the absolute amplitude values $|V_{P1}|$ and $|V_{P2}|$ of the first and second peripheral voltages $V_{P1}$ and $V_{P2}$, respectively, and ranks as the fourth value.

Moreover, in Figure 7C, the second peak amplitude of the fourth peripheral voltage $V_{P4}$, represented by the dashed-dotted line, also reaches the maximum amplitude after approximately $0.13\mu s$. However, the absolute amplitude value $|V_{P4}|$ of the fourth peripheral voltage $V_{P4}$ is smaller than the absolute amplitude values $|V_{P0}|$ to $|V_{P3}|$ of the central voltage $V_{P0}$ to the third peripheral voltage $V_{P3}$, and is the smallest value. It should be noted that the central voltage $V_{P0}$ to the fourth peripheral voltage $V_{P4}$ are all in the same phase relationship. Therefore, the relationship between the absolute values of the potentials generated on the output surface of the vibrating body 22b is as follows:

$$|V_{P0}|>|V_{P2}|>|V_{P1}|>|V_{P3}|>|V_{P4}| \qquad \ldots\ldots(12)$$

Presenting a potential distribution with position-dependent magnitude relationships.

**A - shaped**

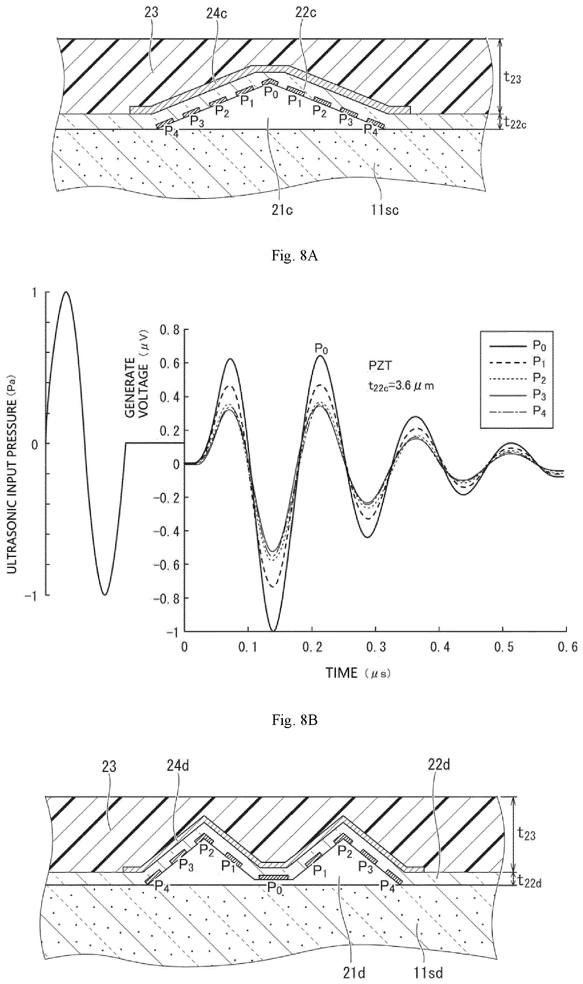

Next, as shown in Figure 8A, the voltage distribution on the output surface of the stress distribution reinforcement structure with a A-shaped cross-sectional structure was studied for each position, serving as the basis for high sensitivity and broadbanding. The vibrator 22c was arranged on the silicon substrate $11_{sc}$, with a grounded fixed potential electrode 24c arranged on the vibrator 22c, and a fixed potential electrode protective film 23 made of resin was arranged on the fixed potential electrode 24c. The vibrator 22c had a conical shape tapering upward on the silicon substrate $11_{sc}$, as shown in Figure 8A, with a A-shaped cross-sectional shape, where the bottom sides of the A-shape were in contact with the surface of the silicon substrate $11_{sc}$. Therefore, a conical vibrating cavity 21c with an isosceles triangular cross-section was provided on the silicon substrate $11_{sc}$. Additionally, on the lower surface of the vibrator 22c, to verify the generated voltage distribution, one circular potential detection ideal electrode was arranged at the upper tip of the A shape, and four concentric ring-shaped potential detection ideal electrodes were arranged around the central potential detection ideal electrode $P_0$, with the potential transfer areas defined as the central region $P_0$, the first peripheral region $P_1$, ..., and the fourth peripheral region $P_4$ (refer to Table 2) from the inside out. Then, by verifying the transient response of the voltage generated in the central region $P_0$, the first peripheral region $P_1$, ..., and the fourth peripheral region $P_4$, the voltage distribution on the output surface (lower surface) of the vibrator 22c was simulated.

Figure 8B presents the simulation results when PZT is used throughout the entire vibrating body 22c. When the thickness $t_{22c}$ of the vibrating body 22c on the conical vibrating cavity 21c is set to 3.6$\mu$m, and the thickness $t_{23}$ of the fixed potential electrode protective film 23 on the vibrating body 22c is set to 6$\mu$m, a transient response of voltage generation occurs. The parameters are displayed at positions ranging from the central region $P_0$ to the fourth peripheral region $P_4$, which serve as potential transmission areas. When a single-frequency sine wave with a maximum vibration amplitude of $\pm$1Pa is inputted to the voltage generating sections (22c, 24c) as shown on the left side of Figure 8B, transient responses of pulse generation are observed in the central region $P_0$, the first peripheral region $P_1$, ..., and the fourth peripheral region $P_4$, which serve as potential transmission areas. The second vibration amplitude reaches its maximum near approximately 0.13$\mu$s, and the transient responses after the third time are decaying vibrations.

Specifically, in Figure 8B, the transient response of the central voltage $V_{P0}$ in the central part of the vibrating body 22c, represented by the thick solid line, shows a peak amplitude of approximately +0.61 $\mu$V during the first vibration after approximately 0.06$\mu$s following the pulse input. Compared to the peak amplitude of the first vibration, the peak amplitude of the second vibration, occurring after approximately 0.13$\mu$s, is approximately -1.0$\mu$V, reaching the maximum amplitude value. Subsequently, the peak amplitude of the third vibration, occurring after approximately 0.19$\mu$s, is approximately +0.63$\mu$V, and the peak amplitude of the fourth vibration, occurring after approximately 0.26$\mu$s, decays to approximately -0.5$\mu$V. The transient response of the first peripheral voltage $V_{P1}$, represented by the thick dashed line in Figure 8B, shows a peak amplitude of approximately +0.42$\mu$V during the first vibration after approximately 0.06$\mu$s following the pulse input. Compared to the peak amplitude of the first vibration, the peak amplitude of the second vibration, occurring after approximately 0.13$\mu$s, is approximately - 0.74$\mu$V, reaching the maximum amplitude value. However, the absolute amplitude value $|V_{P1}|$ of the first peripheral voltage $V_{P1}$ is smaller than the absolute amplitude value $|V_{P0}|$ of the central voltage $V_{P0}$. Subsequently, the peak amplitude of the third vibration of the first peripheral voltage $V_{P1}$, occurring after approximately 0.19$\mu$s, is approximately +0.45$\mu$V, and the peak amplitude of the fourth vibration, occurring after approximately 0.26$\mu$s, decays to approximately -0.38$\mu$V. The peak amplitudes of vibrations after the fifth time decrease, so further explanations are omitted.

In Figure 8B, the absolute amplitude value $|V_{P2}|$ of the second peripheral voltage $V_{P2}$, represented by the dashed line, is slightly smaller than the absolute amplitude value $|V_{P1}|$ of the first peripheral voltage $V_{P1}$, ranking as the third value. Additionally, the absolute amplitude value $|V_{P3}|$ of the third peripheral voltage $V_{P3}$, depicted by the thin solid line in Figure 8B, is slightly smaller than the absolute amplitude value $|V_{P2}|$ of the second peripheral voltage $V_{P2}$, ranking as the fourth value.

Moreover, the transient response of the fourth peripheral voltage $V_{P4}$, represented by the dashed-dotted line in Figure 8B, exhibits a peak amplitude of approximately +0.28$\mu$V after approximately 0.06$\mu$s of the first vibration. Compared to the peak amplitude of the first vibration, the peak amplitude of the second vibration after approximately 0.13$\mu$s is approximately -0.5$\mu$V, reaching the maximum amplitude value. However, the absolute amplitude value $|V_{P4}|$ of the fourth peripheral voltage $V_{P4}$ is smaller than the absolute amplitude values $|V_{P0}|$ to $|V_{P3}|$ of the central voltage $V_{P0}$ to the third peripheral voltage $V_{P3}$, and is the smallest value. Additionally, the central voltage $V_{P0}$ to the fourth peripheral voltage $V_{P4}$ are all in the same phase relationship. Therefore, the relationship between the absolute values of the potentials generated on the output surface of the vibrating body 22c is the same as that given by Equation (11), exhibiting a position-dependent potential distribution with a magnitude relationship.

**M-shaped**

Next, as shown in Figure 9A, the voltage distribution on the output surface of the vibrating body 22d with an M-shaped cross-sectional structure is studied for each position, serving as the foundation for enhancing sensitivity and broadening bandwidth. The vibrating body 22d is arranged on the silicon substrate $11_{sd}$, with a fixed potential electrode 24d grounded arranged on the vibrating body 22d, and a fixed potential electrode protective film 23 made of resin arranged on the fixed potential electrode 24d. Due to the M-shaped cross-sectional structure, the vibrating body 22d has a conical shape with a downward taper at the central part, and an upward taper surrounding the conical shape. Moreover, the lower end of the conical shape in the central part of the M-shaped vibrating body 22d is close to the surface of the silicon substrate $11_{sd}$, with both sides of the bottom contacting the surface of the silicon substrate $11_{sd}$. Therefore, two spaces with approximately isosceles triangular cross-sections are provided on the silicon substrate $11_{sd}$, forming an inclined toroidal vibrating cavity 21d in a mirror-symmetrical manner. Additionally, to verify the generated voltage distribution, one circular potential detection ideal electrode is arranged at the lower end of the conical shape in the central part of the M-shaped vibrating body 22d, and four concentric ring-shaped potential detection ideal electrodes are arranged around the central part of the potential detection ideal electrode, defining the potential transfer area as the central region $P_0$, the first peripheral region $P_1$, ..., the fourth peripheral region $P_4$. By verifying the transient response of the voltage generated in the central region $P_0$, the first peripheral region $P_1$, ..., the fourth peripheral region $P_4$, the voltage distribution on the output surface (lower surface) of the vibrating body 22d is simulated.

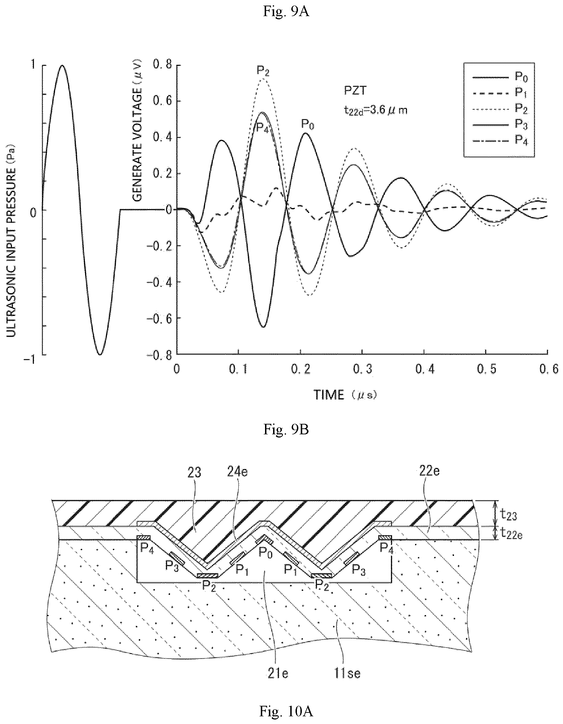

Figure 9B presents the simulation results when the entire vibrating body 22d is made of PZT. When the thickness $t_{22d}$ of the vibrating body 22d on the inclined annular vibrating cavity 21d is set to 3.6$\mu$m, and the thickness $t_{23}$ of the fixed potential electrode protective film 23 on the vibrating body 22d is set to 6$\mu$m, a transient response of voltage generation occurs. This transient response is displayed with parameters in the potential transfer regions, namely the central region $P_0$, the first peripheral region $P_1$, ..., and the fourth peripheral region $P_4$. When a single-frequency sine wave with a maximum vibration amplitude of $\pm$1Pa is inputted to the voltage generating sections (22d, 24d) as shown on the left side of Figure 9B, the transient responses of the pulse responses generated in the potential transfer regions, namely the central region $P_0$, the first peripheral region $P_1$, ..., and the fourth peripheral region $P_4$, exhibit a second-order vibration amplitude reaching its maximum near approximately 0.13$\mu$s, followed by decaying vibrations in the third and subsequent orders.

Specifically, the transient response of the central voltage $V_{P0}$ in the central part of the vibrator 22d, represented by the thick solid line in Figure 9B, exhibits a peak amplitude of approximately +0.38$\mu$V during the first vibration after approximately 0.06$\mu$s following the pulse input. Compared to the peak amplitude of the first vibration, the peak amplitude of the second vibration, occurring after approximately 0.13$\mu$s, is approximately -0.65$\mu$V, reaching the maximum amplitude value. Subsequently, the peak amplitude of the third vibration, occurring after approximately 0.19$\mu$s, is approximately +0.4$\mu$V, and the peak amplitude of the fourth vibration, occurring after approximately 0.26$\mu$s, decays to approximately -0.35$\mu$V. The peak amplitudes of vibrations after the fifth time decrease, and thus are omitted for explanation. The transient response of the first peripheral voltage $V_{P1}$, represented by the thick dashed line in Figure 9B, undergoes irregular changes after the pulse input, reaching a peak after approximately 0.13$\mu$s. The absolute value of the amplitude $|V_{P1}|$ of the first peripheral voltage $V_{P1}$ is smaller than any of the absolute values of the amplitudes $|V_{P0}|$, $|V_{P2}|$, and $|V_{P4}|$ of the central voltage $V_{P0}$ and the second to fourth peripheral voltages $V_{P2}$ to $V_{P4}$, indicating that it is the smallest value.

The transient response of the second peripheral voltage $V_{P2}$, represented by the dashed line in Figure 9B, shows a peak amplitude of approximately 0.42$\mu$V after approximately 0.06$\mu$s following the pulse input. Compared to the peak amplitude of the first oscillation, the peak amplitude of the second oscillation after approximately 0.13$\mu$s is approximately +0.65$\mu$V, reaching the maximum amplitude value. Subsequently, the peak amplitude of the third oscillation after approximately 0.19$\mu$s is approximately -0.44$\mu$V, and the peak amplitude of the fourth oscillation after approximately 0.26$\mu$s decays to approximately +0.35$\mu$V. The peak amplitude of the fifth and subsequent oscillations decreases, so the explanation is omitted. The absolute amplitude value $|V_{P2}|$ of the second peripheral voltage $V_{P2}$ is approximately the same as the absolute amplitude value $|V_{P0}|$ of the central voltage $V_{P0}$, which is the maximum value.

Additionally, the transient response of the third peripheral voltage $V_{P3}$, represented by the thin solid line in Figure 9B, exhibits a peak amplitude of approximately 0.3$\mu$V during the first oscillation after approximately 0.06$\mu$s following the pulse input. Compared to the peak amplitude of the first oscillation, the peak amplitude of the second oscillation, occurring after approximately 0.13$\mu$s, is approximately +0.5$\mu$V, reaching the maximum amplitude value. Subsequently, the peak amplitude of the third oscillation, occurring after approximately 0.19$\mu$s, is approximately -0.4$\mu$V, and the peak amplitude of the fourth oscillation, occurring after approximately 0.26$\mu$s, decays to approximately +0.24$\mu$V. The peak amplitudes of the oscillations after the fifth time decrease, so further explanations are omitted.

Moreover, the transient response of the fourth peripheral voltage $V_{P4}$, represented by the dashed-dotted line in Figure 9B, exhibits a peak amplitude of approximately 0.3$\mu$V after approximately 0.06$\mu$s of the first vibration. Compared to the peak amplitude of the first vibration, the peak amplitude of the second vibration after approximately 0.13 $\mu$s is approximately +0.5$\mu$V, reaching the maximum amplitude value. The absolute amplitude value $|V_{P4}|$ of the fourth peripheral voltage $V_{P4}$ is roughly the same as the absolute amplitude value $|V_{P3}|$ of the third peripheral voltage $V_{P3}$.

However, the absolute amplitude value $|V_{P4}|$ of the fourth peripheral voltage $V_{P4}$ is smaller than the absolute amplitude value $|V_{P0}|$ of the central voltage $V_{P0}$ and the absolute amplitude value $|V_{P2}|$ of the second peripheral voltage $V_{P2}$. Additionally, the second peripheral voltage $V_{P2}$ to the fourth peripheral voltage $V_{P4}$ vibrate in a phase relationship with each other, and they vibrate in an anti-phase relationship with the central voltage $V_{P0}$. Therefore, the relationship between the absolute values of the potentials generated on the output surface of the vibrating body 22d is as follows:

$$|V_{P0}|\approx|V_{P2}|>|V_{P3}|\approx|V_{P4}|>|V_{P1}|\ldots\ldots(13)$$

Exhibit a potential distribution with position-dependent magnitude relationships.

**W-shaped**

Next, as shown in Figure 10A, the voltage distribution on the output surface of the vibrating body 22e, which has a W-shaped cross-sectional structure, is studied at each position, serving as the foundation for enhancing sensitivity and broadening bandwidth. The vibrating body 22e is arranged on a silicon substrate $11_{se}$ with a cylindrical recess. A fixed potential electrode 24e grounded is arranged on the vibrating body 22e, and a fixed potential electrode protective film 23 made of resin is arranged on the fixed potential electrode 24e. Due to the W-shaped cross-sectional structure, the vibrating body 22e has a conical shape that tapers upward at the central part of the W-shape. Moreover, around the conical space in the central part of the W-shape, there is a downward-tapering protrusion that surrounds the conical shape in a circular ring shape. In the cross-sectional structure, an inclined toroidal structure represented by two downward-tapering inverted triangles on both sides of the triangular space in the central part of the W shape is formed. Additionally, the lower end of the downward-tapering protrusion, which is approximately halfway from the central part to the radial direction of the vibrating cavity 21e, is close to the surface of the silicon substrate $11_{se}$.

Therefore, on the concave portion of the silicon substrate $11_{se}$, a conical vibration cavity 21e is provided in the central part, and another part of the vibration cavity 21e with a right-angled triangular cross-section is provided at the end. Additionally, to verify the generated voltage distribution, a circular potential detection ideal electrode is arranged at the upper tip of the conical shape in the central part of the W-shaped vibrator 22e, and a concentric ring-shaped potential detection ideal electrode is arranged around the central potential detection ideal electrode, defining the potential transmission areas as the central region $P_0$ and the first peripheral region $P_1$ (refer to Table 2). Furthermore, a concentric ring-shaped potential detection ideal electrode is arranged at the lower end of the downward-pointing protrusion around the conical shape in the central part of the W-shaped vibrator 22e, which is defined as the second peripheral region $P_2$.

Furthermore, on the inclined surface of the vibrating body 22e exposed in the vibrating cavity 21e surrounding the second peripheral region $P_2$, a concentric circular ring-shaped potential detection ideal electrode surrounding the second peripheral region $P_2$ is arranged, which is defined as the third peripheral region $P_3$. Then, on the lower surface of the vibrating body 22e at the outermost circumference of the vibrating cavity 21e, a concentric circular ring-shaped potential detection ideal electrode surrounding the third peripheral region $P_3$ is arranged, which is defined as the fourth peripheral region $P_4$. Subsequently, by verifying the transient response of the voltage generated in the potential transmission areas, namely the central region $P_0$, the first peripheral region $P_1$, ..., and the fourth peripheral region $P_4$, the voltage distribution on the output surface (lower surface) of the vibrating body 22e is simulated.

Figure 10B shows the simulation results when PZT is used throughout the entire vibrator 22e. When the thickness of the vibrator 22e is $t_{22e}=4.5\mu m$ and the thickness of the fixed potential electrode protective film 23 on the vibrator 22e is $t_{23}=6\mu m$, a transient response of voltage generation occurs, which is displayed with the positions of the potential transfer regions, namely the central region $P_0$, the first peripheral region $P_1$, ..., and the fourth peripheral region $P_4$, as parameters. When a single-frequency sine wave with a maximum vibration amplitude of $\pm1Pa$ is input to the voltage generation sections (22e, 24e) as shown on the left side of Figure 10B, the transient responses of the pulse responses generated in the potential transfer regions, namely the central region $P_0$, the first peripheral region $P_1$, ..., and the fourth peripheral region $P_4$, exhibit a second-order vibration amplitude reaching its maximum near approximately $0.13\mu s$, followed by decaying vibrations in the third and subsequent orders.

Specifically, in Figure 10B, the transient response of the second peripheral voltage $V_{P2}$ in the second peripheral region $P_2$, indicated by the dashed line, shows a peak amplitude of approximately $0.6\mu V$ after approximately $0.06\mu s$ following the pulse input. Compared to the peak amplitude of the first vibration, the peak amplitude of the second vibration after approximately $0.13\mu s$ is approximately $+0.98\mu V$, reaching the maximum amplitude value. Subsequently, the peak amplitude of the third vibration after approximately $0.19\mu s$ is approximately $-0.68\mu V$, and the peak amplitude of the fourth vibration after approximately $0.26\mu s$ decays to approximately $+0.45\mu V$. The peak amplitude of vibrations after the fifth time decreases, so the explanation is omitted. The absolute amplitude value $|V_{P2}|$ of the second peripheral voltage $V_{P2}$ is larger than any of the absolute amplitude values $|V_{P0}|$, $|V_{P1}|$, $|V_{P3}|$, and $|V_{P4}|$ of the central voltage $V_{P0}$, the first peripheral voltage $V_{P1}$, the third peripheral voltage $V_{P3}$, and the fourth peripheral voltage $V_{P4}$, respectively, and is the largest value.

The transient response of the central voltage $V_{P0}$ in the central region $P_0$, represented by the thick solid line in Figure 10B, shows a peak amplitude of approximately +0.28$\mu$V after approximately 0.06$\mu$s following the pulse input. Compared to the peak amplitude of the first vibration, the peak amplitude of the second vibration after approximately 0.13$\mu$s is approximately -5.0$\mu$V, reaching the maximum amplitude value. Subsequently, the peak amplitude of the third vibration after approximately 0.19$\mu$s is approximately +0.28$\mu$V, and the peak amplitude of the fourth vibration after approximately 0.26$\mu$s decays to approximately -0.22$\mu$V. The peak amplitude of vibrations after the fifth time decreases, so the explanation is omitted. The central voltage $V_{P0}$ is in an anti-phase relationship with the second peripheral voltage $V_{P2}$, and its absolute amplitude $|V_{P0}|$ is second only to the absolute amplitude $|V_{P2}|$ of the second peripheral voltage $V_{P2}$, making it the second largest.

The transient response of the third peripheral voltage $V_{P3}$, represented by the thin solid line in Figure 10B, exhibits a peak amplitude of approximately 0.26$\mu$V during the first oscillation after approximately 0.06$\mu$s following the pulse input. Compared to the peak amplitude of the first oscillation, the peak amplitude of the second oscillation, occurring after approximately 0.13$\mu$s, is approximately +0.4$\mu$V, reaching the maximum amplitude value. Subsequently, the peak amplitude of the third oscillation, occurring after approximately 0.19$\mu$s, is approximately -0.32$\mu$V, and the peak amplitude of the fourth oscillation, occurring after approximately 0.26$\mu$s, decays to approximately +0.18$\mu$V. The peak amplitudes of the fifth and subsequent oscillations decrease, hence the explanation is omitted. The third peripheral voltage $V_{P3}$ is the third largest value.

In Figure 10B, the absolute amplitude $|V_{P4}|$ of the fourth peripheral voltage $V_{P4}$, represented by the dashed-dotted line, is slightly smaller than that of the third peripheral voltage $V_{P3}$, ranking as the fourth largest value. Additionally, the absolute amplitude $|V_{P1}|$ of the first peripheral voltage $V_{P1}$, indicated by the thick dashed line in Figure 10B, is slightly smaller than the absolute amplitude $|V_{P4}|$ of the fourth peripheral voltage $V_{P4}$, representing the smallest value. Furthermore, in the potential transfer region, specifically from the first peripheral region $P_1$ to the fourth peripheral region $P_4$, the first peripheral voltage $V_{P1}$ to the fourth peripheral voltage $V_{P4}$ vibrate in a phase-aligned relationship with each other, and they vibrate in an anti-phase-aligned relationship with the central voltage $V_{P0}$ in the central region $P_0$. Therefore, in the case of a W-shaped stress distribution reinforcement structure, the relationship between the absolute values of the potentials generated on the output surface of the vibrating body 22e is as follows:

$$|V_{P2}|>|V_{P0}|>|V_{P3}|>|V_{P4}|>|V_{P1}|\ldots\ldots(14)$$

Exhibit a potential distribution with position-dependent magnitude relationships.

**Flat Disc-shaped Conventional Structure (Traditional Structure)**

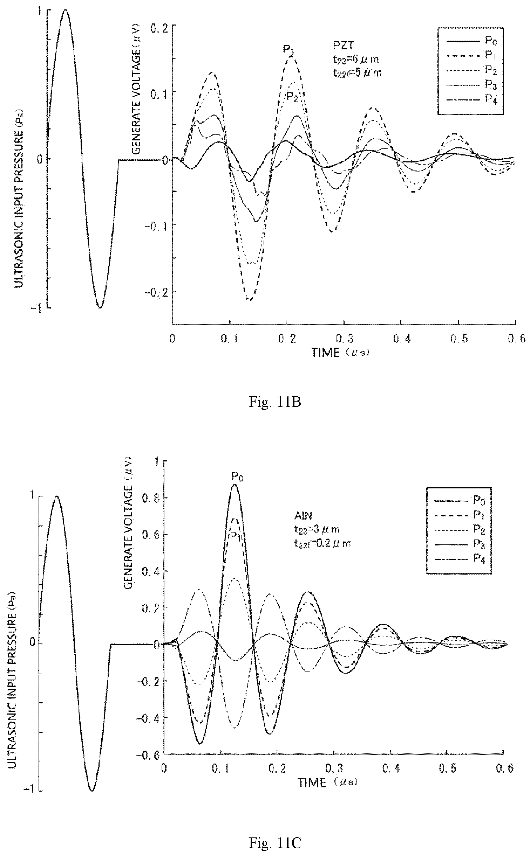

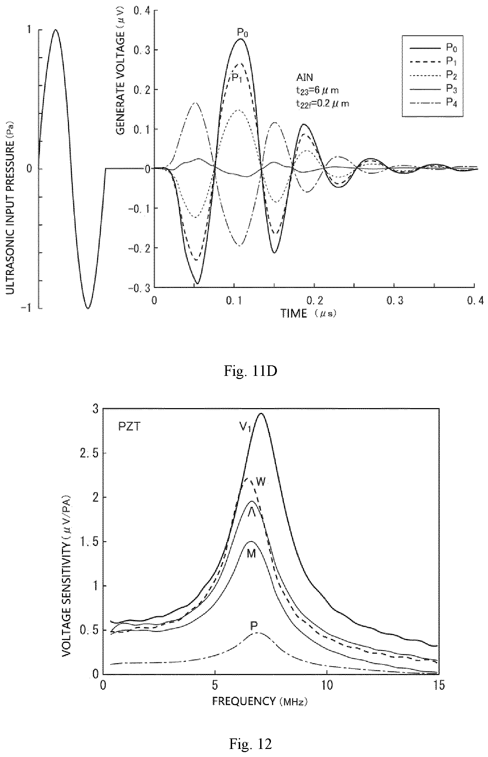

Finally, for comparison purposes, as shown in Figure 11A, in the case of a conventional flat disk-type structure (non-enhanced stress distribution structure) with a parallel flat plate cross-section in the vibration cavity formed by the vibrator 22f, the voltage distribution generated on the output surface of the vibrator 22f was simulated for each position. Figure 11B shows the simulation results when using PZT as the vibrator 22f, while Figures 11C and 11D show the simulation results when using AlN. As shown in Figure 11A, the voltage generation section (22f, 24f) of the conventional flat disk-type structure consists of the vibrator 22f forming a uniform flat plane, the fixed potential electrode 24f grounded above the vibrator 22f, and the fixed potential electrode protective film 23 made of epoxy resin above the fixed potential electrode 24f. Additionally, the voltage generation section (22f, 24f) is arranged on a silicon substrate $11_{sf}$ with a recess. The receiving surface and output surface of the vibrator 22f, which face each other, together form an Euclidean plane with Gaussian curvature and average curvature always being zero on the recess of the silicon substrate $11_{sf}$. Therefore, a thin cylindrical (disk-shaped) vibration cavity 21f is formed on the recess of the silicon substrate $11_{sf}$, and the cross-sectional structure of the vibration cavity 21f is a parallel flat plate structure with a certain thickness and parallel receiving and output surfaces.

In the stress distribution non-enhanced structure, to verify the generated voltage distribution, as shown in Figure 11A, one disc-shaped potential detection ideal electrode is arranged at the central part of the lower surface of the vibrating body 22f, and four concentric ring-shaped potential detection ideal electrodes are arranged around the central potential detection ideal electrode. In the stress distribution non-enhanced structure, as defined in Table 2, the disc and four concentric rings are numbered sequentially from the center as $P_0$, $P_1$, ..., $P_4$, and the potential transfer areas are defined as the central area $P_0$, the first peripheral area $P_1$, ..., and the fourth peripheral area $P_4$.

Figure 11B presents the simulation results of the stress distribution non-enhanced structure of the vibrator 22f, where PZT is used throughout. When the thickness of the vibrator 22f is $t_{22f}=5\mu$m and the thickness of the fixed potential electrode protective film 23 is $t_{23}=6\mu$m, a transient response of voltage generation occurs, displayed with parameters at the potential transfer regions, namely the central region $P_0$, the first peripheral region $P_1$, ..., and the fourth peripheral region $P_4$. When a single-frequency sine wave ultrasonic wave with a maximum vibration of $\pm1$Pa is input to the voltage generation section (22f, 24f) as shown on the left side of Figure 11B, the voltage signals generated in the potential transfer regions, namely the central region $P_0$, the first peripheral region $P_1$, ..., and the fourth peripheral region $P_4$, exhibit a

transient response where the amplitude of the second vibration reaches its maximum near approximately 0.13μs, and subsequent vibrations are attenuated.

The first peripheral voltage $V_{P1}$, represented by the thick dashed line in Figure 11B, reaches its peak amplitude of approximately +0.12μV after approximately 0.06μs following the input of the ultrasonic pulse. After the peak amplitude of the first vibration, the peak amplitude of the second vibration, occurring approximately 0.13μs later, is approximately -0.22μV, reaching the maximum amplitude value. After that, the third peak of vibration amplitude occurred approximately 0.19μs later, with a value of about +0.15μV. The fourth peak of vibration amplitude decayed to approximately -0.12μV after about 0.26μs. The vibration amplitude decreased after the fifth time, so further explanations are omitted. The first peripheral voltage $V_{P1}$ is larger than the other central voltage $V_{P0}$, as well as the second peripheral voltage $V_{P2}$ to the fourth peripheral voltage $V_{P4}$, and is the largest value.

The second peripheral voltage $V_{P2}$, indicated by the dashed line in Figure 11B, reaches its peak amplitude of approximately +0.1μV after approximately 0.06μs following the input of the ultrasonic pulse during the first vibration. After the peak amplitude of the first vibration, the peak amplitude of the second vibration, occurring approximately 0.13μs later, is approximately -0.16μV, reaching the maximum amplitude value. Subsequently, the peak amplitude of the third vibration, occurring approximately 0.19μs later, is approximately +0.11μV, and the peak amplitude of the fourth vibration, occurring approximately 0.26μs later, decays to approximately -0.08μV. The amplitude of vibrations decreases after the fifth time, so further explanations are omitted. The second peripheral voltage $V_{P2}$ is in phase with the first peripheral voltage $V_{P1}$, and the absolute amplitude value $|V_{P2}|$ of the second peripheral voltage $V_{P2}$ is the second largest after the absolute amplitude value $|V_{P1}|$ of the first peripheral voltage $V_{P1}$.

The third peripheral voltage $V_{P3}$, represented by the thin solid line in Figure 11B, reaches its peak amplitude of approximately +0.06μV after approximately 0.06μs following the input of the ultrasonic pulse during its first vibration. After the peak amplitude of the first vibration, the peak amplitude of the second vibration, occurring approximately 0.13μs later, is approximately -0.1μV, reaching its maximum amplitude value. Subsequently, the peak amplitude of the third vibration, occurring approximately 0.19μs later, is approximately +0.06μV, and the peak amplitude of the fourth vibration, occurring approximately 0.26μs later, decays to approximately -0.05μV. The amplitude of the vibrations decreases after the fifth time, so further explanations are omitted. The third peripheral voltage $V_{P3}$ is the third largest value.

In Figure 11B, the absolute amplitude $|V_{P4}|$ of the fourth peripheral voltage $V_{P4}$, represented by the dashed-dotted line, is generally smaller than the absolute amplitudes $|V_{P1}|$ to $|V_{P3}|$ of the first to third peripheral voltages $V_{P1}$ to $V_{P3}$, and it is the fourth largest value. Additionally, the absolute amplitude $|V_{P0}|$ of the central voltage $V_{P0}$, represented by the thick solid line in Figure 11B, is generally slightly smaller than the absolute amplitude $|V_{P4}|$ of the fourth peripheral voltage $V_{P4}$, and it is the smallest. Furthermore, these central voltage $V_{P0}$ to fourth peripheral voltage $V_{P4}$ vibrate in a roughly in-phase relationship with each other. Therefore, in the case of using PZT as the vibrating body 22f and not actively enhancing the stress distribution in a conventional flat disk structure, the relationship of the absolute values of the potentials generated on the output surface of the vibrating body 22f is as follows:

$$|V_{P1}|>|V_{P2}|>|V_{P3}|>|V_{P4}|>|V_{P0}|\ldots\ldots(15)$$

It can be inferred that even for conventional structures with non-actively reinforced stress distribution as shown in Figure 11A, there exists a position-dependent potential distribution.

Figure 11C presents the simulation results of a conventional flat disk structure where the entire vibrator 22f is made of AlN. When the thickness of the vibrator 22f is $t_{22f}=0.2μm$ and the thickness of the fixed potential electrode protective film 23 is $t_{23}=3μm$, a transient response of voltage generation occurs, which is displayed with parameters indicating the positions of the potential transfer region, namely the central region $P_0$, the first peripheral region $P_1$, ..., and the fourth peripheral region $P_4$. When an ultrasonic wave vibrating at a maximum of ±1Pa is input to the voltage generating sections (22f, 24f) as shown on the left side of Figure 11C, the voltage signals generated in the central region $P_0$, the first peripheral region $P_1$, ..., and the fourth peripheral region $P_4$, respectively, exhibit a transient response similar to that in Figure 11B, where the amplitude of the second vibration reaches its maximum near approximately 0.13μs, and subsequent vibrations are decaying vibrations.

The central voltage $V_{P0}$, represented by the thick solid line in Figure 11C, reaches its peak amplitude of approximately -0.57μV after approximately 0.06μs following the input of the ultrasonic pulse. After the peak amplitude of the first vibration, the peak amplitude of the second vibration, occurring approximately 0.13μs later, is approximately +0.9μV, reaching the maximum amplitude value. Subsequently, the peak amplitude of the third vibration, occurring approximately 0.19μs later, is approximately -0.48μV, and the peak amplitude of the fourth vibration, occurring approximately 0.26μs later, decays to approximately +0.28μV. The amplitude of vibrations after the fifth time decreases, so further explanations are omitted. The absolute amplitude value $|V_{P0}|$ of the central voltage $V_{P0}$ is larger than the absolute amplitude values $|V_{P1}|$ to $|V_{P3}|$ of the other first peripheral voltage $V_{P1}$ to fourth peripheral voltage $V_{P4}$, and is the largest value.

The first peripheral voltage $V_{P1}$, indicated by the thick dashed line in Figure 11C, reaches its peak amplitude of

approximately -0.42μV after approximately 0.06μs following the input of the ultrasonic pulse. After the peak amplitude of the first vibration, the peak amplitude of the second vibration, approximately 0.13μs later, is approximately +0.7μV, reaching the maximum amplitude value. Subsequently, the peak amplitude of the third vibration, approximately 0.19μs later, is approximately - 0.4μV, and the peak amplitude of the fourth vibration, approximately 0.26μs later, decays to approximately +0.22μV. The vibration amplitude decreases after the fifth time, so the explanation is omitted. The first peripheral voltage $V_{P1}$ is in a phase relationship with the central voltage $V_{P0}$, and the absolute value of the amplitude $|V_{P1}|$ of the first peripheral voltage $V_{P1}$ is the second largest after the absolute value of the amplitude $|V_{P0}|$ of the central voltage $V_{P0}$.

The fourth peripheral voltage $V_{P4}$, represented by a dashed-dotted line in Figure 11C, reaches its peak amplitude of approximately +0.32μV after approximately 0.06μs following the input of the ultrasonic pulse during the first vibration. After the peak amplitude of the first vibration, the peak amplitude of the second vibration, occurring approximately 0.13μs later, is approximately -0.46μV, reaching the maximum amplitude value. Subsequently, the peak amplitude of the third vibration, occurring approximately 0.19μs later, is approximately +0.25μV, and the peak amplitude of the fourth vibration, occurring approximately 0.26μs later, decays to approximately -0.16μV. The vibration amplitude decreases after the fifth time, so further explanations are omitted. The fourth peripheral voltage $V_{P4}$ is in an anti-phase relationship with the central voltage $V_{P0}$ and the first peripheral voltage $V_{P1}$, and the absolute value of the amplitude $|V_{P4}|$ is the third largest value.

The first peripheral voltage $V_{P2}$, represented by the dashed line in Figure 11C, reaches its peak amplitude of approximately -0.2μV after approximately 0.06μs following the input of the ultrasonic pulse during the first vibration. After the peak amplitude of the first vibration, the peak amplitude of the second vibration, occurring approximately 0.13μs later, is approximately +0.34μV, reaching the maximum amplitude value. Subsequently, the peak amplitude of the third vibration, occurring approximately 0.19μs later, is approximately -0.18μV, and the peak amplitude of the fourth vibration, occurring approximately 0.26μs later, decays to approximately +0.12μV. The vibration amplitude decreases after the fifth time, so further explanations are omitted. The second peripheral voltage $V_{P2}$ is in phase with the central voltage $V_{P0}$ and the first peripheral voltage $V_{P1}$, and is in antiphase with the fourth peripheral voltage $V_{P4}$. The absolute value of the amplitude $|V_{P2}|$ is the fourth largest value.

In Figure 11C, the absolute amplitude $|V_{P3}|$ of the third peripheral voltage $V_{P3}$, represented by a thin solid line, is in a phase relationship with the fourth peripheral voltage $V_{P4}$, but overall, it is smaller than the absolute amplitude $|V_{P4}|$ of the fourth peripheral voltage $V_{P4}$ and is the smallest. Therefore, in the case of using AlN as the vibrating body 22f and not actively enhancing the stress distribution in a flat disk-shaped conventional structure, the relationship of the absolute potential generated on the output surface of the vibrating body 22f is as follows:

$$|V_{P0}|>|V_{P1}|>|V_{P4}|>|V_{P2}|>|V_{P3}|\ldots\ldots(16)$$

It can be inferred that even for conventional structures that do not actively enhance stress distribution, there exists a position-dependent potential distribution.

Figure 11D, similar to Figure 11C, presents the simulation results of a conventional flat disk structure where the entire vibrator 22f is made of AlN. The thickness $t_{22f}$ of the vibrator 22f is 0.2μm, which is the same as in Figure 11C. The thickness $t_{23}$ of the fixed potential electrode protective film 23 is 6μm, which is thicker than in Figure 11C, resulting in a transient response of voltage generation. The transient response is displayed with parameters for the central region $P_0$, the first peripheral region $P_1$, ..., and the fourth peripheral region $P_4$. When an ultrasonic wave vibrating at a maximum of ±1Pa is input to the voltage generating sections (22f, 24f) as shown on the left side of Figure 11D, the voltage signals generated in the central region $P_0$, the first peripheral region $P_1$, ..., and the fourth peripheral region $P_4$ are similar to those in Figure 11C, exhibiting a transient response where the amplitude of the second vibration reaches its maximum near approximately 0.13μs, and subsequent vibrations are decaying vibrations.

The central voltage $V_{P0}$, represented by the thick solid line in Figure 11D, reaches its peak amplitude of approximately -0.29μV after approximately 0.06μs following the input of the ultrasonic pulse. Following the peak amplitude of the first vibration, the peak amplitude of the second vibration, occurring approximately 0.13μs later, is approximately +0.34μV, reaching the maximum amplitude value. Subsequently, the peak amplitude of the third vibration, occurring approximately 0.19μs later, is approximately -0.22μV, and the peak amplitude of the fourth vibration, occurring approximately 0.26μs later, decays to approximately +0.12μV. The amplitude of vibrations after the fifth time decreases, so further explanations are omitted. The absolute amplitude value $|V_{P0}|$ of the central voltage $V_{P0}$ is larger than the absolute amplitude values $|V_{P1}|$ to $|V_{P4}|$ of the other first peripheral voltage $V_{P1}$ to fourth peripheral voltage $V_{P4}$, and is the largest value.

In Figure 11D, the first peripheral voltage $V_{P1}$, represented by the thick dashed line, reaches its peak amplitude of approximately -0.24μV after about 0.06μs following the input of the ultrasonic pulse. Following the peak amplitude of the first vibration, the peak amplitude of the second vibration, occurring approximately 0.13μs later, is approximately +0.26μV, reaching the maximum amplitude value. Subsequently, the peak amplitude of the third vibration, occurring approximately 0.19μs later, is approximately -0.18μV, and the peak amplitude of the fourth vibration, occurring approximately 0.26μs

later, decays to approximately $+0.08\mu$V. The vibration amplitude decreases after the fifth time, so further explanations are omitted. The first peripheral voltage $V_{P1}$ is in phase with the central voltage $V_{P0}$, and the absolute amplitude value $|V_{P1}|$ of the first peripheral voltage $V_{P1}$ is the second largest after the absolute amplitude value $|V_{P0}|$ of the central voltage $V_{P0}$.

In Figure 11D, the fourth peripheral voltage $V_{P4}$, represented by a dashed-dotted line, reaches its peak amplitude of approximately $+0.17\mu$V during the first vibration approximately $0.06\mu$s after the input of the ultrasonic pulse. Following the peak amplitude of the first vibration, the peak amplitude of the second vibration, occurring approximately $0.13\mu$s later, is approximately $-0.21\mu$V, reaching its maximum amplitude value. Subsequently, the peak amplitude of the third vibration, occurring approximately $0.19\mu$s later, is approximately $+0.12\mu$V, and the peak amplitude of the fourth vibration, occurring approximately $0.26\mu$s later, decays to approximately $-0.06\mu$V. The vibration amplitude decreases after the fifth time, so further explanations are omitted. The fourth peripheral voltage $V_{P4}$ is in an anti-phase relationship with the central voltage $V_{P0}$ and the first peripheral voltage $V_{P1}$, and the absolute value of its amplitude $|V_{P4}|$ is the third largest value.

The second peripheral voltage $V_{P2}$, indicated by the dashed line in Figure 11D, reaches its peak amplitude of approximately $-0.12\mu$V after approximately $0.06\mu$s following the input of the ultrasonic pulse. After the peak amplitude of the first vibration, the peak amplitude of the second vibration approximately $0.13\mu$s later is approximately $+0.15\mu$V, reaching the maximum amplitude value. Subsequently, the peak amplitude of the third vibration approximately $0.19\mu$s later is approximately $-0.09\mu$V, and the peak amplitude of the fourth vibration approximately $0.26\mu$s later decays to approximately $+0.05\mu$V. The vibration amplitude decreases after the fifth time, so the explanation is omitted. The second peripheral voltage $V_{P2}$ is in phase with the central voltage $V_{P0}$ and the first peripheral voltage $V_{P1}$, and is in antiphase with the fourth peripheral voltage $V_{P4}$. The absolute value of the amplitude $|V_{P2}|$ is the fourth largest value.

In Figure 11D, the absolute amplitude $|V_{P3}|$ of the third peripheral voltage $V_{P3}$, represented by a thin solid line, is in phase with the fourth peripheral voltage $V_{P4}$, but overall, it is smaller than the absolute amplitude $|V_{P4}|$ of the fourth peripheral voltage $V_{P4}$ and is the smallest. Therefore, in the case where AlN is used for the flat disk-shaped common structure of the vibrating body 22f, even if the thickness $t_{23}$ of the fixed potential electrode protective film 23 increases, the absolute value relationship of the potential generated on the output surface of the vibrating body 22f is the same as in Figure 11C, as shown in the size relationship in Equation (16). Therefore, even in a common structure that does not actively intend to enhance the stress distribution, as shown in Figure 11A, it can be seen that there is a position-dependent potential distribution.

Comparison of Characteristics of Stress Distribution-enhanced Structures

Focusing on the use of PZT as the piezoelectric layer, the voltage sensitivity and frequency bandwidth of the parallel annular stress distribution enhancement structure (T) shown in Figures 5A and 5B, the V-shaped stress distribution enhancement structures ($V_1$, $V_2$) shown in Figure 7A, the A-shaped stress distribution enhancement structure (A) shown in Figure 8A, the M-shaped stress distribution enhancement structure (M) shown in Figure 9A, and the W-shaped stress distribution enhancement structure (W) shown in Figure 10A were compared with the characteristics of the flat disc-type common structure (P), serving as the basis for achieving high sensitivity and broadband performance.

As shown in Figure 12, within the frequency bandwidth of 5-10MHz for receiving ultrasonic waves, the sensitivity curve represented by the thick solid line marked with $V_1$, indicating the V-shaped stress distribution enhancement structure, exhibits the highest maximum voltage sensitivity of approximately $2.9\mu$V/Pa. Next, the sensitivity curve represented by the dashed line marked with W, indicating the W-shaped stress distribution enhancement structure, exhibits the second highest maximum voltage sensitivity of approximately $2.2\mu$V/Pa. The sensitivity curve represented by the thin solid line marked with A, indicating the A-shaped stress distribution enhancement structure, exhibits the third highest maximum voltage sensitivity of approximately $1.9\mu$V/Pa. The sensitivity curve represented by the thin solid line marked with M, indicating the M-shaped stress distribution enhancement structure, exhibits the fourth highest maximum voltage sensitivity of approximately $1.4\mu$V/Pa. Compared to these stress enhancement structures, the traditional structure (flat disc-type common structure) represented by the dashed line marked with P exhibits the lowest maximum receiving sensitivity of approximately $0.4\mu$V/Pa.

As shown in Figure 13, the maximum voltage sensitivity of the parallel annular stress distribution enhancement structure represented by the solid line marked with T, and the maximum voltage sensitivity of the V-shaped (inclined annular) stress distribution enhancement structure represented by the dashed line marked with $V_2$, both exhibit values slightly exceeding $1.2\mu$V/Pa, which are the highest. In contrast, the maximum voltage sensitivity of the traditional structure (flat disc-type common structure) represented by the dashed-dotted line marked with P is only slightly exceeding $0.4\mu$V/Pa, which is the lowest. The frequency characteristics of the sensitivity of the parallel annular stress distribution enhancement structure exhibit a wide frequency band exceeding $0.6\mu$V/Pa within the frequency bandwidth of 5-15MHz. Although the frequency characteristics of the sensitivity of the V-shaped stress distribution enhancement structure are slightly narrower than those of the parallel annular stress distribution enhancement structure, they also exhibit a frequency band similar to that of the parallel annular stress distribution enhancement structure. On the other hand, it can be seen that the frequency characteristics of the sensitivity of the traditional structure (flat disc-type common structure) represented by the dashed-dotted line are very narrow compared to those of the parallel annular and V-shaped stress distribution enhancement structures.

**The First Variation of the First Embodiment**

In Figure 2, within the parallel annular stress distribution reinforcement structure, the hexagonal potential transfer region defined by the protrusion on the output surface side of the vibrator 22a1 is shown in the channel formed on the surface of the rectangular region sandwiched between the first main electrode region 15a and the second main electrode region 15b, illustrating an example of a single heterojunction FET structure. However, as shown in Figure 14, in the acoustic element according to the first variation of the first embodiment, the buffer layer 13h is sandwiched between the vibrator 22a1 and the base region 14, forming a double heterojunction. As mentioned earlier, due to the good compatibility of AlN and GaN as heterojunctions, even when heteroepitaxially growing AlN as the vibrator 22a1 on the base region 14 composed of a GaN substrate, the interface energy level and lattice defects between GaN and AlN are relatively few. However, by inserting a

$Ga_{1-x}Al_xN$ layer as the buffer layer 13h between GaN and AlN, the interface energy level and lattice defects between GaN and AlN can be further reduced. When epitaxially growing $Ga_{1-x}Al_xN$ with a longer bond length on the Ga face of GaN with c-axis orientation, due to the difference in lattice constants between the two, tensile strain is generated in $Ga_{1-x}Al_xN$, and piezoelectric polarization is applied internally within $Ga_{1-x}Al_xN$. GaN, as a polar crystal, also exhibits piezoelectric polarization. At the $Ga_{1-x}Al_xN$/GaN heterojunction interface, due to the difference in work functions, like ordinary heterojunction FETs, a potential distribution is generated in the direction perpendicular to the interface, so as to bend the end band structures of the conduction band and valence band as one approaches the interface.

If GaN is set as the i-type and $Ga_{1-x}Al_xN$ is set as the n-type, two-dimensional electron gas will be generated at the interface of the $Ga_{1-x}Al_xN$/GaN heterojunction. Additionally, the effects of both piezoelectric polarizations can coexist. Unlike conventional heterojunction FETs, the acoustic element according to the first variation of the first embodiment does not have a gate electrode. Despite the absence of a gate electrode, the Fermi level inside $Ga_{1-x}Al_xN$, especially at the $Ga_{1-x}Al_xN$ /GaN heterojunction interface, vibrates due to ultrasonic input. Since there is no gate electrode in the acoustic element according to the first variation of the first embodiment, there is no need to connect the PMUT and FET through external wiring as described in Non-Patent Document 2, so there is no inherent floating impedance issue. Furthermore, due to the use of voltage generating sections (22a1, 24a) with stress-enhanced structures as shown in Figures 4A to 6C, the voltage generating sections (22a1, 24a) themselves achieve high sensitivity and broadband performance. Therefore, the acoustic element according to the first variation of the first embodiment can achieve high sensitivity and broadband performance. Specifically, by conducting microscopic research on the internal structure of the stress-enhanced structure, selecting a specific position on the output surface of the vibrator 22a1 that generates the highest voltage as the potential transfer region, and driving the active elements of the impedance conversion elements (14, 15a, 15b), high sensitivity can be easily achieved.

On the other hand, when heteroepitaxially growing GaN or AlN as the vibrating body 22a1 on the base region 14 composed of a Si substrate with a diamond-type crystal structure to constitute an acoustic element according to a first variation of the first embodiment, due to the lattice constant of Si being 0.543nm, there is a significant lattice mismatch. When heteroepitaxially growing GaN or AlN as the vibrating body 22a1 using the base region 14 composed of a Si substrate, as shown in Figure 14, it is necessary to set up a buffer layer 13h such as $Ga_{1-x}Al_xN$ to form a double heterojunction structure. When epitaxially growing polar crystal layers such as GaN or AlN on non-polar substrates such as Si, inversion of atomic arrangement phase may occur. This is due to the fact that whether the step of the substrate is composed of one atom or two atoms can lead to different atomic arrangements in polar crystals, known as "antiphase domains". To prevent antiphase domains, it is preferable to use off-angle substrates.

When heteroepitaxially growing SiC, a polar crystal, as the vibrator 22a1 on the substrate region 14 composed of an Si substrate to form an acoustic element according to the first variation of the first embodiment, it is possible to carbonize the surface of the Si substrate with a hydrocarbon gas such as $C_2H_4$ and grow SiC as the buffer layer 13h. When carbonizing the Si surface, $\beta$-SiC (cubic crystal) will epitaxially grow. Alternatively, it is possible to form zincblende-type crystal boron phosphide (BP) as the buffer layer 13h on the substrate region 14 composed of an Si substrate, and heteroepitaxially grow SiC through the buffer layer 13h to form a double heterojunction. The structures other than the buffer layer 13h shown in Figure 14 are redundant with those described in Figure 2, so they are omitted.

**The Second Variation of the First Embodiment**

Similar to the structure shown in Figure 2, the acoustic element according to the second variation of the first embodiment shown in Figure 15 also adopts a parallel annular stress distribution reinforcement structure. As shown in Figure 15, the first main electrode distribution line 25a is connected to the first main electrode region 15a, and the second main electrode distribution line 25b is connected to the second main electrode region 15b, through contact holes drilled in the interlayer insulating film 17 provided on the first main electrode region 15a and the second main electrode region 15b. In Figure 15, the first main electrode distribution line 25a is led out to the left side through the element isolation insulating film 16, and the second main electrode distribution line 25b is led out to the right side through the element isolation insulating film 16. In the acoustic element according to the second variation of the first embodiment, the structure above the first main electrode distribution line 25a and the second main electrode distribution line 25b, which is covered by the cavity inner wall protective film 19, differs from the structure shown in Figure 2. Through the cavity inner wall protective film 19, the protrusion on the output surface side of the vibrator 22a1 reaches the upper surface of the base region 14, and the potential transfer region of the vibrator 22a1 heterojunctions with the upper surface of the base region 14. The structures other than the cavity inner wall protective film 19 shown in Figure 15 are redundant with those described in Figure 2, and thus omitted.

Since there is no gate electrode in the acoustic element according to the second variation of the first embodiment, the issue of floating impedance, as described in Non-Patent Document 2, does not exist. Furthermore, due to the adoption of the voltage generation sections (22a1, 24a) with stress reinforcement structures as shown in Figures 4A to 6C, the voltage generation sections (22a1, 24a) themselves achieve high sensitivity and broadband performance. Consequently, the acoustic element according to the second variation of the first embodiment can achieve high sensitivity and broadband performance. Specifically, through microscopic examination of the internal structure of the stress reinforcement structure, a specific position on the output surface of the vibrator 22a1 that generates the highest voltage is selected as the potential transfer region, and the active elements of the impedance conversion elements (14, 15a, 15b) are driven. Therefore, high sensitivity is easily achieved.

**Manufacturing Method of Acoustic Element According to the Second Variation of the First Embodiment**

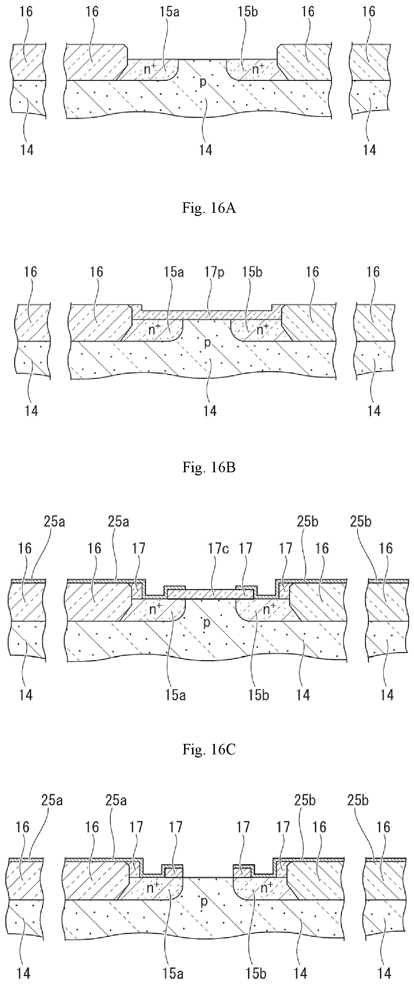

Using Figures 16A to 16R, we will illustrate the manufacturing method of the acoustic element according to the second variation of the first embodiment shown in Figure 15. It should be noted that the manufacturing method of the acoustic element described below is merely an example. As long as the structure described in the claims can be achieved, it can certainly be realized through various other manufacturing methods. Additionally, the use of names with ordinal numbers such as "first photoresist film" in the following description is merely a rhetorical device used to distinguish it from other photoresist films, and does not imply that it is the first photoresist film used in the actual process. In fact, processing using a photoresist film is usually already implemented at a stage prior to the structure shown in Figure 16A.

(a) Firstly, prepare a substrate region 14 composed of a p-type silicon substrate with a (100) plane as the main surface and a resistivity of $0.1\text{-}10\Omega$cm. Then, using known LOCOS or STI technology, form an element isolation insulating film 16 such as a silicon oxide film to a thickness of approximately $0.5\text{-}1.2\mu$m. Inside the pattern of the active region surrounded by the element isolation insulating film 16, form $n^+$-type first main electrode regions 15a and second main electrode regions 15b as shown in Figure 16A, with a cross-sectional structure facing each other. An example of the planar pattern of the first main electrode region 15a and the second main electrode region 15b can be a rectangular pattern as shown in Figure 2. Afterwards, an ion implantation process for MOSFET threshold control can be added as needed.

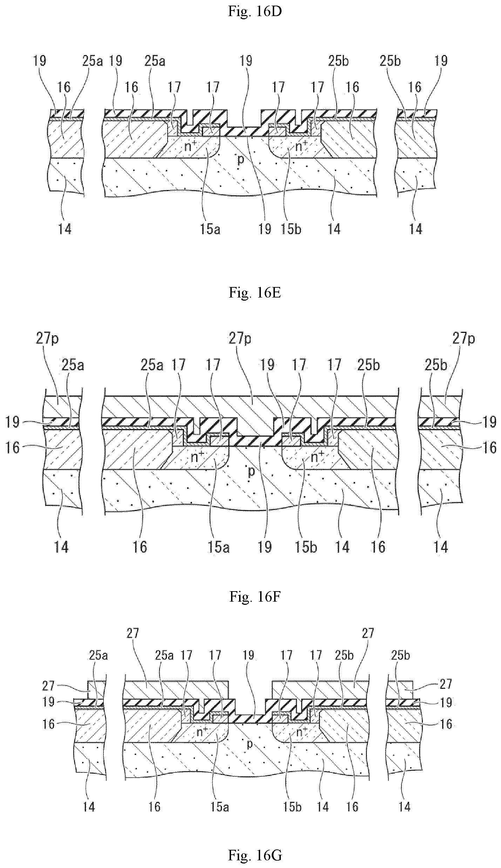

(b) Then, on the first main electrode region 15a, the second main electrode region 15b, and the substrate region 14 exposed between the first main electrode region 15a and the second main electrode region 15b, as shown in Figure 16B, a first insulating film 17p, such as a silicon oxide film, with a thickness of approximately 10-250nm is deposited by a deposition method such as CVD. When the substrate region 14 is made of Si, thermal oxidation can also be used. After depositing the first insulating film 17p by CVD or other methods, it is planarized using chemical mechanical polishing (CMP) or other methods until the upper surface of the element isolation insulating film 16 is exposed, as shown in Figure 16B. Afterwards, a first photoresist film is coated on the first insulating film 17p, and the first photoresist film is exposed and developed using lithography technology to form a first etching mask for opening contact holes. Using the first etching mask, the first insulating film 17p is selectively etched by dry etching techniques such as reactive ion etching (RIE), as shown in Figure 16F, to open contact hole patterns in the upper portions of the first main electrode region 15a and the second main electrode region 15b. Hereinafter, the first insulating film 17p with contact holes is referred to as the "interlayer insulating film 17".

(c) Furthermore, on the first insulating film 17p, a first conductor film composed of a doped polysilicon (DOPOS) film or a conductor layer such as a high-melting-point metal is deposited on the entire surface with a thickness of approximately 80-200nm by a deposition method such as CVD. A second photoresist film is coated on the first conductor film, and the second photoresist film is exposed and developed using lithography technology to form a second etching mask for patterning the first main electrode distribution line 25a and the second main electrode distribution line 25b. Using the second etching mask, the first conductor film is selectively etched by a dry etching technique such as RIE, as shown in Figure 16C, to form patterns of the first main electrode distribution line 25a connected to the first main electrode region 15a and patterns of the second main electrode distribution line 25b connected to the second main electrode region 15b. In Figure 16C, the interlayer insulating film 17 exposed between the first main electrode distribution line 25a and the second main electrode distribution line 25b is defined as the "channel protection insulating film 17c".

(d) Then, a third photoresist film is coated on the channel protection insulating film 17c, the first main electrode power distribution line 25a, and the second main electrode power distribution line 25b. The third photoresist film is exposed and developed using lithography technology to form a third etching mask for exposing the upper part of the channel. Using the third etching mask, the channel protection insulating film 17c is selectively etched through dry etching techniques such as RIE, as shown in Figure 16D, to open a contact hole pattern on the upper surface of the substrate region 14 between the first main electrode region 15a and the second main electrode region 15b.

(e) Then, on the exposed substrate region 14 between the first main electrode distribution line 25a and the second main electrode distribution line 25b, as well as between the first main electrode region 15a and the second main electrode region 15b, as shown in Figure 16E, a cavity inner wall protective film 19 such as a silicon oxide film with a thickness of about 180-250nm is deposited by a deposition method such as CVD. Then, a sacrificial layer material layer 27p such as tungsten (W) is deposited on the entire surface by a deposition method such as sputtering, vacuum evaporation, or CVD. Then, planarization is performed by a CMP method or the like.

(f) Then, a fourth photoresist film is coated on the sacrificial layer material layer 27p, and the fourth photoresist film is exposed and developed using lithography technology to form a fourth etching mask for sacrificial layer formation. Using the fourth etching mask, the sacrificial layer material layer 27p is selectively etched through dry etching techniques such as RIE, as shown in Figure 16G, to form a pattern of sacrificial layers 27. In the cross-sectional view representation of Figure 16G, the two patterns of sacrificial layers 27 are symmetrically located on both sides. However, from an external perspective, the two sacrificial layers 27 at the symmetrical positions on both sides of Figure 16G are an integrated structure of a continuous ring structure on the front and back sides of the paper surface of Figure 16G.

(g) Furthermore, a fifth photoresist film is coated on the sacrificial layer 27 forming the annular structure and on the cavity inner wall protective film 19 exposed in the center of the sacrificial layer 27 of the annular structure. The fifth photoresist film is exposed and developed using lithography technology to form a fifth etching mask for exposing the upper part of the channel. Using the fifth etching mask, the cavity inner wall protective film 19c is selectively etched through dry etching techniques such as RIE, exposing the upper surface of the substrate region 14 in the center of the sacrificial layer 27 of the annular structure.

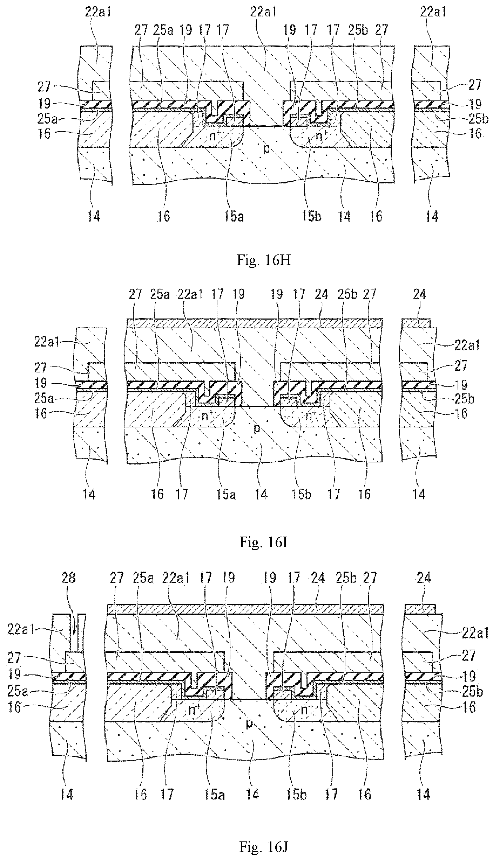

(h) As shown in Figure 16H, the vibrator 22a1 is heteroepitaxially grown on the upper surface of the substrate region 14 through a contact hole pattern exposed in the center of the sacrificial layer 27 of the ring structure. For example, when the substrate region 14 is made of GaN, an AlN layer can be grown as the vibrator 22a1 using the photo-excited molecular layer epitaxy (MLE) method. MLE of the AlN layer involves introducing source gases such as trimethylaluminum (TMAl) as a group III element gas and ammonia ($NH_3$) as a group V element gas alternately in a beam-like manner in a time-division manner in a vacuum, to grow the AlN layer in units of one molecular layer. Photo-excited MLE is an epitaxial growth method that further irradiates the growth layer surface with ultraviolet light such as excimer laser on the basis of this MLE method, utilizing ultraviolet energy to assist growth. Through photo-excited MLE, utilizing surface migration caused by light energy, it is possible to heteroepitaxially grow an AlN layer in units of one molecular layer at low temperatures below 1000°C. The AlN layer can be grown at approximately 350-1200°C, but by utilizing ultraviolet energy, good crystallinity can be obtained even at low temperatures below 1000°C. Alternatively, when the substrate region 14 is made of Si, a $HfO_2$ layer can be grown as the vibrator 22a1 using CVD at approximately 400°C with the use of tetraethylmethylammonium hafnium (TEMAH) or the like. The surface of the vibrator 22a1 can be planarized as needed using methods such as CMP.

(i) Then, on the vibrating body 22a1, a second conductor film such as aluminum (Al) or aluminum alloy is deposited on the entire surface using deposition methods such as sputtering, vacuum evaporation, or CVD. Furthermore, a sixth photoresist film is coated on the second conductor film, and a pattern for forming a fixed potential electrode is formed using photolithography technology. Using the sixth photoresist film as a sixth etching mask, the second conductor film is selectively etched to form a pattern of the fixed potential electrode 24 as shown in Figure 16I.

(j) Next, on the vibrating body 22a1, a fixed electrode protection underlayer film (not shown) such as epoxy resin is deposited using methods such as spin coating to cover the pattern of the fixed potential electrode 24. Furthermore, a seventh photoresist film is coated on the fixed electrode protection underlayer film, and a pattern for removing the liquid introduction is formed using lithography technology. Using the seventh photoresist film as a seventh etching mask, as shown in Figure 16J, a liquid introduction hole 28 is formed that penetrates the fixed electrode protection underlayer film and the vibrating body 22a1 and reaches the sacrificial layer 27. Figure 16J shows the cross-sectional shape after removing the seventh photoresist film as the seventh etching mask, but as mentioned earlier, the illustration of the fixed electrode protection underlayer film is omitted.

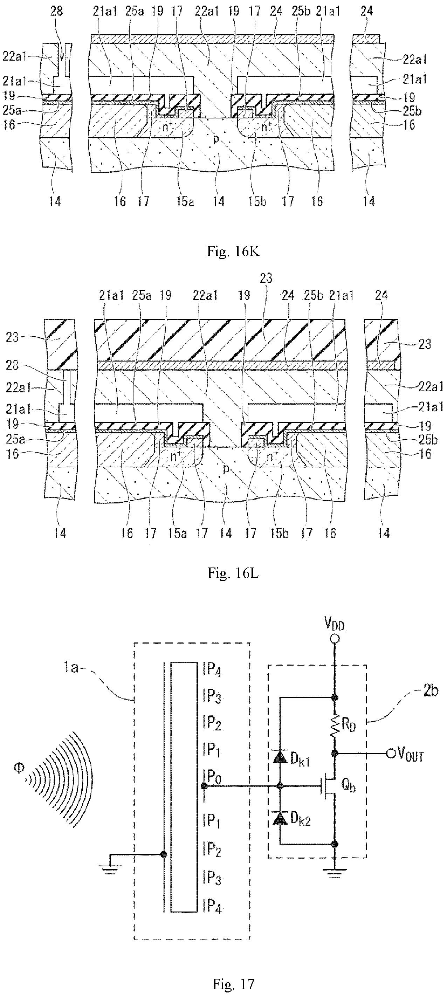

(k) Then, for example, heated hydrogen peroxide water ($H_2O_2$) is introduced into the sacrificial layer 27 from the liquid introduction hole 28. When the heated hydrogen peroxide water is introduced from the liquid introduction hole 28, the sacrificial layer 27 is selectively dissolved through wet etching. As the sacrificial layer 27 dissolves, a parallel annular vibration cavity 21a1 is formed on the cavity inner wall protective film 19, as shown in Figure 16K. Subsequently, using methods such as spin coating, a fixed potential electrode protective film 23, such as epoxy resin, with a thickness of approximately 400-600nm, is deposited on the fixed electrode protective bottom layer film, as shown in Figure 16L, to seal the liquid introduction hole 28. During the process of sealing the liquid introduction hole 28, the interior of the vibration cavity 21a1 is treated in a reduced pressure atmosphere of approximately 1kPa, with an inert gas such as helium (He) as the main component, resulting in a reduced pressure state that can be considered almost vacuum-like, with the inert gas as the main component. The acoustic element according to the second variation of the first embodiment is completed.

## Second Embodiment

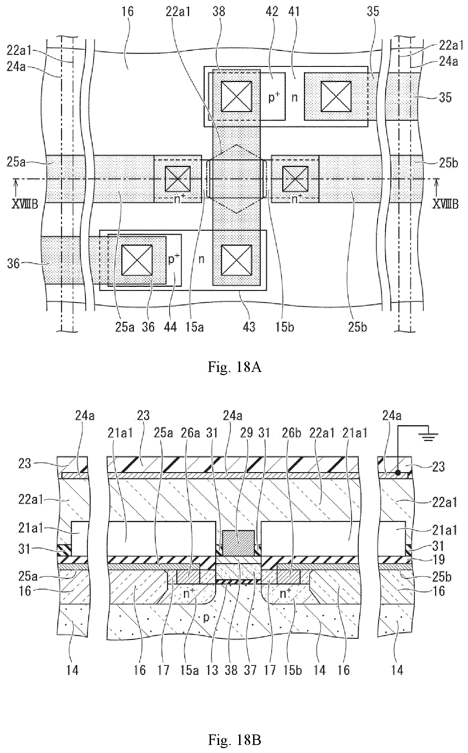

In the acoustic element according to the first embodiment, the structure modeled by the equivalent circuit of FIG. 3B, focusing on the vibrator 22a1 functioning as a gate insulating layer, has been described. In the acoustic element according to the second embodiment of the present invention, attention is focused on the structure corresponding to the equivalent circuit shown in FIG. 3A, which is the premise of FIG. 3B. That is, as shown in FIGS. 17, 18A, and 18B, the acoustic element according to the second embodiment is a receiving element $X_{i,j}$, which includes a voltage generating portion 1a that generates a non-uniform voltage through the piezoelectric effect, and an impedance transforming element 2b that operates using the potential at a specific position (local) of the voltage generating portion 1a as a control voltage. As can be seen from the cross-sectional view of FIG. 18B, the voltage generating portion 1a has a unipolar structure, including a vibrator 22a1 similar to that of the acoustic element according to the first embodiment, and a fixed potential electrode 24a in contact with the receiving surface (upper main surface in FIG. 18B) of the vibrator 22a1. A fixed potential electrode protective film 23 such as epoxy resin is provided on the fixed potential electrode 24a.
The vibrating body 22a1 can be entirely composed of piezoelectric layers as shown in Figure 18B, or only the central downward protrusion (stress concentration location) can be composed of piezoelectric layers, with the remaining parts being non-piezoelectric layers (not shown). That is, as long as the voltage generating part 1a is located in a part of the vibrating body 22a1, specifically at the stress concentration location of the vibrating body 22a1, it can be configured with at least a piezoelectric layer. Therefore, the impedance transformation element 2b can utilize a specific part of the piezoelectric layer, at least located at the downward protrusion (stress concentration location), as a potential transmission area, and operate the potential of this potential transmission area as a control voltage.
As mentioned earlier, the material that should be used at least for the downward protrusion at the center of the vibrating body 22a1, which is a stress concentration location, can be selected from among the 20 crystal point groups with piezoelectric properties belonging to the 32 crystal families. Since it is only required to be used at the stress concentration location, it is also possible, as shown in Figure 18B, for the entire vibrating body 22a1 to be composed of piezoelectric materials. Among them, materials such as $HfO_2$, AlN, and PZT belonging to the 10 crystal point groups exhibiting pyroelectric properties are suitable. The voltage generating portion 1a with a unipolar structure has a voltage distribution that produces uneven voltage generation through the piezoelectric effect at specific locations on the output surface (the lower main surface in Figure 18B) of the vibrating body 22a1, which is opposite to the receiving surface. The "specific locations" on the output surface of the vibrating body 22a1 are, for example, the central region $P_0$, the first peripheral region $P_1$, ..., and the fourth peripheral region $P_4$, as schematically shown in the potential transfer region model in Figure 17. In the model representation in Figure 17, the central region $P_0$, the first peripheral region $P_1$, ..., and the fourth peripheral region $P_4$ are arranged in a concentric hexagonal ring pattern centered around the central region $P_0$, with the pattern surrounding the central region $P_0$. It should be noted that in the model representation of the voltage generating portion 1a in Figure 17, the $P_0$, $P_1$, ..., $P_4$ numbered sequentially from the center outwards only indicate the positions of the potential transfer regions and do not imply that there are electrodes at the positions of $P_0$, $P_1$, ..., $P_4$ in reality. The same applies to subsequent figures such as Figure 20, Figure 22, Figure 24, Figure 25, and Figure 28D.
As shown in Figure 17, the impedance transformation element 2b includes an active element $Q_b$ as a circuit component, which is an insulated gate type transistor (MIS transistor). The first main electrode region 15a is connected to a first power source (GND or negative power source Vss), and the second main electrode region 15b is connected to a second power source $V_{DD}$ with a higher potential than the first power source through an output resistor $R_d$. As the active element $Q_b$, it can correspond to MIS transistors such as MOSFET, MOSSIT, MISFET, MISIT, HEMT, etc. The active element $Q_b$ constituting the impedance transformation element 2b operates with the potential of the first peripheral region $P_0$ as a control voltage, which is a protrusion on the output surface side of the vibrating body 22a1 as shown in the central part of Figure 18B. That is, the impedance transformation element 2b of the acoustic element according to the second embodiment includes an active element $Q_b$ that inputs the pressure of the ultrasonic wave $\Phi$ applied to the vibrating body 22a1 of the voltage generation section 1a as the potential of the first peripheral region $P_0$ and outputs a signal after impedance conversion. Then, the acoustic element according to the second embodiment uses the output signal of the active element $Q_b$ as the output signal of the acoustic element.

The output surface side protrusion of the vibrator 22a1 of the voltage generating portion 1a of the acoustic element according to the second embodiment is a regular hexagonal prism-shaped protrusion as indicated by the two-dot chain line in Figure 18A. As shown in Figure 18B, around the protrusion located at the center of the output surface side of the vibrator 22a1, a parallel annular vibration cavity 21a1 is arranged in a centrally symmetric manner around the protrusion. The parallel annular surface constituting the vibration cavity 21a1 has a topological structure with a hexagonal planar pattern. In the cross-sectional view representation of Figure 18B, from an external perspective, the two vibration cavities 21a1 are located on both sides of the central protrusion, but they are continuous with each other on the front and back sides of the paper surface, forming an integrated structure.

The active element $Q_b$ of the impedance transforming element 2b of the acoustic element according to the second embodiment, as shown in Figure 18B, features a base region 14 composed of a first conductive type (p-type) semiconductor region, and first and second main electrode regions 15a and 15b, respectively, which are separated from each other and located above the base region 14 and are composed of a second conductive type (n+-type) semiconductor region. Additionally, as shown in Figure 18B, the active element $Q_b$ contacts the upper surface of the base region 14 located between the first and second main electrode regions 15a and 15b, and includes a gate dielectric film 13 with a wider bandgap than the base region 14, as well as a control electrode 37 disposed on the gate dielectric film 13. In the case of the active element $Q_b$ with the gate dielectric film 13, insulation breakdown of the gate dielectric film 13 can become a problem due to excessive gate voltage. Therefore, as shown in Figure 17, a positive voltage clamp diode $D_{k1}$ is connected between the control electrode 37 of the active element $Q_b$ and the second power supply $V_{DD}$, and a negative voltage clamp diode $D_{k2}$ is connected between the control electrode 37 and the first power supply (GND). By connecting the positive and negative voltage clamp diodes $D_{k1}$ and $D_{k2}$ to the control electrode 37, it is configured to prevent excessive gate voltage from being applied to the gate dielectric film 13.

The circuit connection shown in Figure 17 illustrates connecting the fixed potential electrode 24a to the ground potential (GND), but it is not limited to this circuit connection. As previously mentioned, using Figures 4C, 4D, 5C, 7B, 7C, 8B, 9B, 10B, etc. for illustration, when connecting the fixed potential electrode 24a to the ground potential (GND), the central voltage $V_{P0}$, the first peripheral voltage $V_{P1}$, the second peripheral voltage $V_{P2}$, the third peripheral voltage $V_{P3}$, and the fourth peripheral voltage $V_{P4}$ of the voltage generation unit 1a will form a vibration waveform that oscillates in both positive and negative directions centered around 0V. Unlike the circuit connection shown in Figure 17, if the fixed potential electrode 24a is connected to a bias voltage $V_{bias} > 0$, the central voltage $V_{P0}$, the first peripheral voltage $V_{P1}$, the second peripheral voltage $V_{P2}$, the third peripheral voltage $V_{P3}$, and the fourth peripheral voltage $V_{P4}$ generated by the voltage generation unit 1a will form a vibration waveform that oscillates around the bias voltage $V_{bias}$, centered at a value different from 0V. That is, if we choose a $V_{bias}$ that maximizes the amplification factor at the operating point of the impedance transformation element 2b's I-V characteristics and connect the fixed potential electrode 24a to $V_{bias}$, we can enhance the sensitivity of the acoustic element according to the second embodiment. In other words, as long as the fixed potential electrode 24a is at a fixed potential, any bias voltage $V_{bias}$ can be selected. A circuit structure that adjusts any required bias voltage $V_{bias}$ from a variable voltage source can also be adopted.

According to the film formation conditions, the bandgap width of the silicon dioxide ($SiO_2$) film is approximately 7.6-9.0eV, that of the aluminum oxide ($Al_2O_3$) film is approximately 8.3eV, and that of the silicon nitride ($Si_3N_4$) film is approximately 4.9eV. The active element $Q_b$ can be considered to have a heterojunction gate structure similar to that of a heterojunction FET. As shown in Figure 17, in the acoustic element according to the second embodiment, the control electrode 37 of the active element $Q_b$ is electrically connected to the potential generation position $P_0$, and the height of the potential barrier that controls carrier movement generated in the channel defined between the first main electrode region 15a and the second main electrode region 15b of the active element $Q_b$ is controlled by the potential at the potential generation position $P_0$. Since the impedance transformation element 2b of the acoustic element according to the second embodiment includes the active element $Q_b$ with the gate dielectric film 13 and the control electrode 37, as an equivalent circuit illustrating the main constituent parts, it can formally correspond to Figure 3A already explained in the first embodiment.

Around the periphery of the base region 14, an element isolation insulating film 16 is arranged in a frame shape to define the range of the active region of the active element $Q_b$. In the cross-sectional representation of FIG. 18B, the element isolation insulating film 16 is located on both sides of the active region. However, similar to the structure of the acoustic element according to the first embodiment, the element isolation insulating film 16 located on both sides of the active region is continuous with each other on the front and back surfaces of the paper, forming an integrated structure. Inside the pattern of the active region surrounded by the element isolation insulating film 16, the range (region) of the upper surface of the base region 14 is defined, and a first main electrode region 15a and a second main electrode region 15b are provided in the upper portion near the upper surface (surface) of the active region surrounded by the element isolation insulating film 16. In the center of FIG. 18A, the range of the potential transfer region of a regular hexagon is indicated by a two-dot chain line. For the hexagonal potential transfer region defined as the output surface side protrusion of the vibrating body 22a1, the channel of the active element $Q_b$ is formed on the surface of the rectangular region sandwiched between the first main electrode region 15a and the second main electrode region 15b. Within the range of the active region, the height of the potential barrier generated in the channel between the first main electrode region 15a and the second main electrode region 15b of the active element $Q_b$, which affects carrier movement, is controlled by the potential electrostatic of the potential transfer region of the vibrating body 22a1.

As shown in Figure 18B, an interlayer insulating film 17 is provided on the first main electrode region 15a and the second main electrode region 15b. Through contact holes opened in the interlayer insulating film 17, the first main electrode distribution line 25a is connected to the first main electrode region 15a, and the second main electrode distribution line 25b is connected to the second main electrode region 15b. As shown in Figures 18A and 18B, an input signal distribution line 38 composed of a conductor is provided on the control electrode 37, and they are connected by metal bonding. In Figure 18A, the input signal distribution line 38 is a distribution line in the length direction orthogonal to the length direction of the first main electrode distribution line 25a and the second main electrode distribution line 25b, which connects the control electrode 37 to the p+-type anode region 42 and the n-type cathode region 43, respectively. Corresponding to the positive voltage clamp diode $D_{k1}$ in the equivalent circuit representation of Figure 17, the p-n junction diode composed of the p+-type anode region 42 and the n-type cathode region 41 is located in the paper region above the pattern of the first main electrode distribution line 25a and the second main electrode distribution line 25b in Figure 18A. The length direction of the p-n junction diode composed of the p+-type anode region 42 and the n-type cathode region 41 is parallel to the length direction of the pattern of the first main electrode distribution line 25a and the second main electrode distribution line 25b.

Similarly, corresponding to the negative voltage clamp diode $D_{k2}$ in Figure 17, a p-n junction diode composed of a p+-type anode region 44 and an n-type cathode region 43 is provided in the lower region of the paper surface in Figure 18A, with its length direction parallel to the patterns of the first main electrode distribution line 25a and the second main electrode distribution line 25b. The anode region 44 of the negative voltage clamp diode $D_{k2}$ is connected to the first power-side diode distribution line 36, and the cathode region 41 of the positive voltage clamp diode $D_{k1}$ is connected to the second power-side diode distribution line 35. As shown in Figure 18B, a columnar (block-shaped) connection plug 29 is embedded as a contact portion (contact area) from the tip side of the central protrusion on the output surface side of the vibrating body 22a1, and the connection plug 29 is in ohmic contact with the vibrating body 22a1. The surface layer of the lower end of the connection plug 29, that is, the lower surface of the connection plug 29, can be made of a softer metal than the upper part, and the connection plug 29 can be constructed with a laminated structure of hard and soft metals. The lower end of the connection plug 29, which functions as an electrical contact portion of the voltage generating section 1a, is processed into a flat surface, becoming the end face connected to the upper surface of the input signal wiring 38. Moreover, by physically contacting the lower surface (i.e., the connection end face) of the connection plug 29 with the upper surface of the input signal wiring 38, the potential of the central region $P_0$ of the voltage generating section 1a is inputted as a control voltage for the active element $Q_b$ that constitutes the impedance transforming element 2b.

To reduce the ohmic contact resistance between the vibrating body 22a1 and the connection plug 29, a contact resistance improvement layer such as an alloy layer can be inserted between them. The connection plug 29 does not necessarily have to be embedded into the tip of the central protrusion, and it can also be plate-shaped, forming a simple planar junction between the tip of the protrusion and the plate-shaped surface. If the connection plug 29 is considered as a constituent element, the voltage generating part 1a includes the vibrating body 22a1, the fixed potential electrode 24a, the fixed potential electrode protective film 23, and the connection plug 29. In addition, a new connection means such as a bump can be further inserted between the connection plug 29 and the input signal distribution line 38.

That is, the potential of the connection plug 29 is input to the control electrode 37 through the input signal distribution line 38, and the potential of the control electrode 37 is controlled by the gate dielectric film 13 to statically adjust the height of the potential barrier generated in the channel between the first main electrode region 15a and the second main electrode region 15b, which affects carrier movement. The structure shown in Figure 18B is an example of a structure where the connection plug 29 of the voltage generation unit side chip disposed on the upper side and the input signal distribution line 38 of the impedance conversion element side chip disposed on the lower side are in physical contact with each other. Therefore, around the vibration cavity 21a1, the direct bonding insulating film 31 with a mirror surface disposed on the voltage generation unit side chip and the cavity inner wall protective film 19 with a mirror surface disposed on the impedance conversion element side chip are directly bonded through hydrophilic bonding (hydrogen bonding between silanol groups).

Compared to the floating impedance when connecting PMUT and FET through external wiring as described in Non-patent Document 2, the acoustic element according to the second embodiment can significantly reduce the floating impedance due to the adoption of a thin plate-shaped input signal distribution line 38 and control electrode 37, which provide an electrical connection path that is directly connected with the shortest distance in the thickness direction. Additionally, compared to the PMUT in Non-patent Document 2, the voltage generation unit 1a adopts a new structure with a stress reinforcement structure, achieving high sensitivity and broadband performance. Therefore, the acoustic element according to the second embodiment can achieve high sensitivity and broadband performance. Specifically, by conducting microscopic research on the internal structure of the voltage generation unit 1a, selecting a specific location with the highest voltage generation as the potential transfer area, and using it as the input transfer position to the impedance conversion element 2b, it is easy to achieve high sensitivity.

**A Variation of The Second Embodiment**

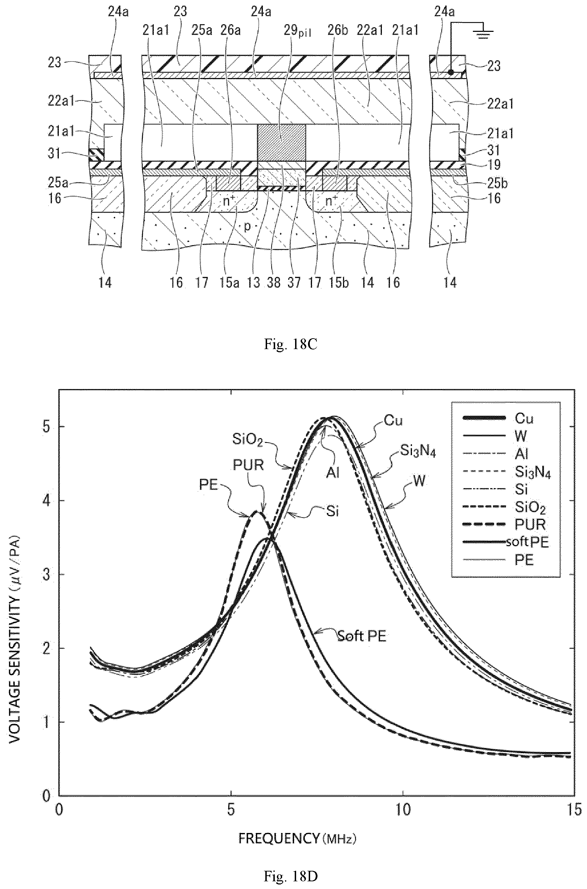

In Figure 18B, an example is shown where the connection plug 29 is embedded upward from the tip side of the downward protrusion on the output surface side of the vibrating body 22a1, serving as the contact portion. However, this is not limited to this structure. For instance, as shown in Figure 18C, a connection plug $29_{pil}$ composed of a cylindrical conductor can be set as the central pillar of the vibrating cavity 21a1, and a parallel toroidal vibrating cavity 21a1 can be arranged around the connection plug $29_{pil}$ in a centrosymmetric manner. In the description of Figure 18B, it is mentioned that the connection plug 29 can be plate-shaped. The structure shown in Figure 18C corresponds to a structure where the thickness of the central protrusion in Figure 18B is set to zero, and it is entirely composed of thick plate-shaped connection plugs 29. The connection plug $29_{pil}$ becomes a regular hexagonal prism occupying the range of the potential transmission area indicated by the two-dot chain line in the center of Figure 18A, and the parallel toroid constituting the vibrating cavity 21a1 has a topological structure with a hexagonal ring pattern around the connection plug $29_{pil}$. Through the connection plug $29_{pil}$, planar bonding is achieved at the center of the output surface side of the vibrating body 22a1. As a result, the connection plug $29_{pil}$ corresponds to its six side surfaces exposed to the contact portions (contact areas) of the hexagonal ring surface. In the cross-sectional view representation of Figure 18C, from an external view, two vibrating cavities 21a1 are located on both sides of the central connection plug $29_{pil}$, but they are continuous with each other on the front and back sides of the paper surface, forming an integrated structure.

The active element shown in Figure 18C is similar to the active element $Q_b$ shown in Figure 18B. It contacts the upper surface of the body region 14 located between the first main electrode region 15a and the second main electrode region 15b, and includes a gate dielectric film 13 with a wider bandgap than the body region 14, as well as a control electrode 37 disposed on the gate dielectric film 13. Additionally, as shown in Figure 18C, an input signal distribution line 38 composed of a conductor is connected to the control electrode 37 through metal bonding. On the other hand, the flat upper surface of the connection plug $29_{pil}$ constituting the central pillar structure is in ohmic contact with the vibrating body 22a1 at the center of the output surface side of the vibrating body 22a1. Although not shown, a contact resistance improvement layer such as an alloy layer can be inserted between the center of the output surface side of the vibrating body 22a1 and the flat upper surface of the connection plug $29_{pil}$.

Then, the flat lower surface of the connection plug $29_{pil}$, which uses a soft metal as the surface layer (the bottom layer in Figure 18C), physically contacts the upper surface of the input signal distribution line 38. The connection plug $29_{pil}$ is electrically connected to the input signal distribution line 38, and the potential of the central region $P_0$ of the voltage generation section 1a shown in Figure 17 is input as a control voltage to the active element $Q_b$ constituting the impedance conversion element 2b. In the representation of Figure 18C, the width of the connection plug $29_{pil}$, the width of the input signal distribution line 38, and the width of the control electrode 37 appearing in the cross-sectional view are shown to be the same, but this is only an example. The width of the connection plug $29_{pil}$ and the width of the input signal distribution line 38 may be different, and the width of the input signal distribution line 38 and the width of the control electrode 37 may also be different. In addition, the width of the connection plug $29_{pil}$ and the width of the control electrode 37 may also be different. For example, the width of the control electrode 37 may be larger than the width of the connection plug $29_{pil}$ shown in Figure 18C, forming an inverted T shape, or conversely, the width of the control electrode 37 may be smaller than the width of the connection plug $29_{pil}$, forming a T shape. Other aspects are the same as those of the acoustic element according to the second embodiment shown in Figure 18B, so redundant explanations are omitted.

Compared to the floating impedance when connecting PMUT and FET through external wiring as described in Non-patent Document 2, in the acoustic element according to the modified example of the second embodiment, the connection plug $29_{pil}$, input signal distribution line 38, and control electrode 37 are directly connected in the thickness direction with the shortest distance, forming an electrical connection path. Therefore, the floating impedance can be significantly reduced. Furthermore, compared to the PMUT in Non-patent Document 2, the voltage generation section 1a adopts a new structure with a stress reinforcement structure, achieving high sensitivity and broadband performance. Therefore, the acoustic element according to the modified example of the second embodiment can achieve high sensitivity and broadband performance. Specifically, a specific position on the output surface of the vibrator 22a1 that generates the highest voltage is selected as the potential transfer area, and the short connection plug $29_{pil}$ is used as the input transfer position to the active element, making it easy to achieve high sensitivity.

**Hardness Dependence of Central Pillar Material**

In the case where PZT with a thickness of $t_{22a1}$=2.4$\mu$m is used as the vibrating body 22a1, the voltage sensitivity and half-value bandwidth when varying the material hardness of the cylindrical connection plug $29_{pil}$ with a diameter of 2.4$\mu$m, which functions as the central pillar in Figure 18C, are shown in Figure 18D. The outer circumferential diameter of the annular surface, $d_{11}$, is 60$\mu$m (refer to the definition of $d_{11}$ in Figure 4A), and it is assumed that the vibrating body 22a1 is covered with a fixed potential electrode protective film 23 composed of soft epoxy resin with a thickness of $t_{23}$=6$\mu$m. As shown in Figure 18D, within the half-value bandwidth of 5-11MHz for receiving ultrasonic waves, the maximum voltage sensitivity of the central pillar structure made of tungsten (W) represented by the thin solid line and silicon nitride film ($Si_3N_4$ film) represented by the thin dashed line is approximately 5.14$\mu$V/Pa, which is the highest. In Figure 18D, the thin solid line for W and the thin dashed line for $Si_3N_4$ film almost overlap. W and $Si_3N_4$ film are the materials with the highest and second-highest Young's modulus among the materials shown in Table 3.

(Table 3)

| Material Name | Poisson's Ratio | Elastic Modulus(Gpa) |
| --- | --- | --- |
| **Cu** | **0.343** | **124-129** |
| **W** | **0.28** | **380-411** |
| **Al** | **0.345** | **69-70** |
| **$Si_3N_4$** | **0.27-0.25** | **210-310** |
| **Si** | **0.266** | **107** |
| **$SiO_2$** | **0.17-0.2** | **66-94** |
| Polyurethane | **0.05** | **0.01-0.06** |
| Soft Epoxy Resin | **0.34-0.37** | **2.6-3** |
| Polyethylene | **0.30-0.458** | **0.2-1.3** |

Moreover, although the sensitivity curve of copper (Cu), represented by the thick solid line, is slightly lower in frequency than those of W and $Si_3N_4$ films, it is almost identical to the sensitivity curves of W and $Si_3N_4$ films in terms of the central pillar structure made of Cu. Additionally, when Cu is used as the connecting plug $29_{pil}$, its maximum voltage sensitivity is approximately 5.14$\mu$V/Pa. Furthermore, the sensitivity curve of the central pillar structure made of silicon dioxide film ($SiO_2$ film), represented by the thick dashed line, which is approximately 0.7MHz lower than the sensitivity curve of Cu, is almost identical to the sensitivity curves of W, $Si_3N_4$ films, and Cu, exhibiting the same maximum voltage sensitivity and half-value bandwidth curve.

Furthermore, the sensitivity curve of aluminum (Al) as the central pillar structure of the material, represented by a single-dot dashed line approximately 0.5MHz lower than the sensitivity curve of Cu, is slightly lower than those of W, $Si_3N_4$ film, Cu, and $SiO_2$ film. The maximum voltage sensitivity is approximately 5.0$\mu$V/Pa, and the half-value bandwidth curve is almost the same as theirs. Additionally, the sensitivity curve of silicon (Si) as the central pillar structure of the material, represented by a double-dot dashed line approximately 0.3MHz lower than the sensitivity curve of Cu, has a maximum voltage sensitivity of approximately 4.9$\mu$V/Pa, slightly lower than that of Al, and the half-value bandwidth curve is almost the same as those of W, $Si_3N_4$ film, Cu, $SiO_2$ film, and Al. Within the range of metals and non-organic compounds such as W, $Si_3N_4$ film, Cu, $SiO_2$ film, Al, and Si shown in Table 3, it can be seen that the hardness of the material constituting the central pillar structure does not have a significant dependence on the maximum voltage sensitivity and half-value bandwidth.

In comparison, the two sensitivity curves representing polyurethane (PUR) with a thick dashed line and polyethylene (PE) with a thin solid line, which serve as the central pillar structures of the materials, are located on the low-frequency side, approximately 3.8MHz lower than the sensitivity curve of the $SiO_2$ film. The sensitivity curves of PUR and PE as the central pillar structures of the materials exhibit a maximum voltage sensitivity of approximately 3.9$\mu$V/Pa, which is lower than a set of sensitivity curves composed of metal and non-organic compounds such as W and $Si_3N_4$ films, and are displayed as two overlapping curves with almost the same trajectory. The sensitivity curves of PUR and PE as the central pillar structures of the materials are displayed as half-value bandwidth curves in the 4.1-7.3MHz region (lower frequency side compared to the region of the set of sensitivity curves composed of metal and non-organic compounds), with a narrowed half-value bandwidth. Furthermore, the sensitivity curve of soft epoxy resin (EP resin) represented by a thick solid line exhibits a maximum voltage sensitivity of approximately 3.5$\mu$V/Pa, which is lower than the sensitivity curves of PUR and PE, and displays a half-value bandwidth of 4.1-8.0MHz. As can be seen from Figure 18D, compared to the case where the central pillar structure is composed of metal and non-organic compounds such as W and $Si_3N_4$ films, when the central pillar structure is composed of polymer materials such as PUR, the maximum voltage sensitivity is lower, the half-value bandwidth shifts to the low-frequency side, and the bandwidth becomes narrower.

## Method for Manufacturing An Acoustic Element According to The Second Embodiment

Using Figures 19A to 19K, we will illustrate the manufacturing method of the acoustic element according to the second embodiment, as exemplified in Figure 18B, where the voltage generation unit side chip and the impedance conversion element side chip are directly bonded. It should be noted that the manufacturing method of the acoustic element according to the second embodiment described below is merely an example, and it is not necessarily limited to this method when directly bonding the voltage generation unit side chip and the impedance conversion element side chip through hydrophilic bonding (fusion bonding). If the temperature process associated with the deposition of the vibrator 22a1 is not a problem, methods such as heteroepitaxy or CVD, similar to the manufacturing method of the acoustic element according to the second variation of the first embodiment mentioned above, can also be adopted. Furthermore, even when stacking the voltage generation unit side chip and the impedance conversion element side chip, electrical connection and physical strength can be achieved through bump bonding, similar to a common three-dimensional stacked chip structure, without being limited to the following manufacturing method. For bump bonding, in addition to the exemplified gold (Au)-Au direct bonding, copper (Cu)-Cu direct bonding, silver (Ag)-tin (Sn) series solder, indium (In)-Sn solder, or indirect bonding using eutectic components such as Au-Sn or Cu-Sn can also be used. Therefore, as long as the structure described in the claims can be realized, the acoustic element according to the second embodiment can certainly be implemented through various manufacturing methods other than the examples mentioned below.

Furthermore, as mentioned at the beginning of the description of the manufacturing method of the acoustic element according to the second variation of the first embodiment, the use of terms with ordinal numbers such as "first photoresist film" in the following description is merely a convenient name used for rhetorical purposes to distinguish it from other photoresist films, and does not imply the first or any other order in actual processes. In fact, before the structure shown in Figure 19A, multiple processing stages using photoresist films have usually been implemented, and in actual processes, it is usually not the "first photoresist film". Additionally, the voltage generation unit side chip process shown in Figure 19F to Figure 19J can be performed before (or prior to) the impedance conversion element side chip process shown in Figure 19A to Figure 19E in terms of sequence. If the voltage generation unit side chip process is performed first, the convenient use of ordinal numbers such as "first photoresist film" in the following description will naturally change.

(a) Firstly, as the foundation for the impedance transformation element side chip, a substrate region 14 composed of a p-type silicon substrate with a (100) surface as the main surface and a resistivity of 0.1-10$\Omega$cm is prepared. Then, using known LOCOS or STI technology, an element isolation insulating film 16 such as a silicon oxide film is formed to a thickness of approximately 0.4-1.2$\mu$m. On the substrate region 14 exposed by the planar pattern of the active region surrounded by the element isolation insulating film 16, a gate dielectric film 13 and a DPOS film are deposited, and the DPOS film is patterned to form a control electrode 37. Through ion implantation, using the control electrode 37 as a mask, a cross-sectional structure of n$^+$-type first main electrode region 15a and second main electrode region 15b facing each other is self-alignedly formed within the active region. An example of the planar pattern of the first main electrode region 15a and the second main electrode region 15b can be a rectangular pattern as shown in Figure 18A. While forming the first main electrode region 15a and the second main electrode region 15b, a cathode region 41 shown in the planar view of Figure 18A is formed on the back side of the paper in Figure 19A, and a cathode region 43 is formed on the front side of the paper. After forming the cathode regions 41 and 43, a p$^+$-type anode region 42 shown in Figure 18A is formed inside the pattern of the cathode region 41 by ion implantation, and a p$^+$-type anode region 44 is formed inside the pattern of the cathode region 43 by ion implantation.

(b) Then, on the first main electrode region 15a, the second main electrode region 15b, and the substrate region 14 exposed between the first main electrode region 15a and the second main electrode region 15b, a first insulating film 17p, such as a silicon oxide film, with a thickness of approximately 180-250nm is deposited using a deposition method such as CVD. When the substrate region 14 is made of Si, thermal oxidation can also be used. After depositing the first insulating film 17p using methods such as CVD, it is planarized using methods such as chemical mechanical polishing (CMP) until the upper surface of the element isolation insulating film 16 is exposed. Subsequently, a first photoresist film is coated on the first insulating film 17p, and the first photoresist film is exposed and developed using lithography techniques to form a first etching mask for opening contact holes. Using the first etching mask, the first insulating film is selectively etched using dry etching techniques such as reactive ion etching (RIE), to open contact hole patterns in the upper portions of the first main electrode region 15a, the second main electrode region 15b, the control electrode 37, the anode regions 42 and 44, and the cathode regions 41 and 43.

(c) Furthermore, a first conductor film, consisting of a conductor layer such as a DOPOS film or a high-melting-point metal, is deposited on the first insulating film with a thickness of approximately 80-200nm using deposition methods such as CVD. A second photoresist film is coated on the first conductor film, and the second photoresist film is exposed and developed using lithography techniques to form a second etching mask for patterning the first main electrode distribution line 25a and the second main electrode distribution line 25b (refer to Figure 18A). Using the second etching mask, the first conductor film is selectively etched using dry etching techniques such as RIE, as shown in Figure 19A, to form patterns of the first main electrode distribution line 25a connected to the first main electrode region 15a and patterns of the second main electrode distribution line 25b connected to the second main electrode region 15b.

(d) Then, on the first main electrode power distribution line 25a, the second main electrode power distribution line 25b, and the control electrode 37, as shown in Figure 19B, a silicon oxide film or other cavity inner wall protective film 19 with a thickness of approximately 180-250nm is deposited using a deposition method such as CVD. Furthermore, a third photoresist film is coated on the cavity inner wall protective film 19, and the third photoresist film is exposed and developed using lithography technology to form a third etching mask for opening contact holes on the control electrode 37, the anode regions 42 and 44, and the cathode regions 41 and 43 (refer to Figure 18A). Using the third etching mask, the cavity inner wall protective film 19 is selectively etched using dry etching technology such as RIE, to open contact holes on the control electrode 37, the anode regions 42 and 44, and the cathode regions 41 and 43. In Figure 19A, the contact holes on the anode region 42 and the cathode region 41 are located on the back side of the paper, while the contact holes on the anode region 44 and the cathode region 43 are located on the front side of the paper (refer to Figure 18A).

(e) Next, after removing the third photoresist film, a fourth photoresist film is coated on the cavity inner wall protective film 19, and the fourth photoresist film is exposed and developed using lithography technology, thereby forming a fourth etching mask for patterning the Damascus groove of the input signal wiring 38, the first power supply side diode wiring 36, and the second power supply side diode wiring 35 (see Figure 18A). Using the fourth etching mask, the cavity inner wall protective film 19 is selectively etched by dry etching techniques such as RIE, as shown in Figure 19C, to form Damascus grooves for connecting the control electrode 37 to the anode region 42 and cathode region 43, connecting the first power supply side diode wiring 36 to the anode region 44, and connecting the second power supply side diode wiring 35 to the cathode region 41. The Damascus groove of the input signal wiring 38 is integrated with the contact hole on the control electrode 37 above it. In Figure 19C, the Damascus groove of the first power supply side diode wiring 36 is located deep in the paper, and the Damascus groove of the second power supply side diode wiring 35 is located near the paper (see Figure 18A).

(f) Further, as shown in Figure 19D, a second conductor film 38p, composed of a conductor layer such as a copper (Cu) film, is deposited on the cavity inner wall protective film 19 with a thickness of approximately 80-200nm using a deposition method such as CVD. Subsequently, the upper surface of the cavity inner wall protective film 19 is exposed through planarization using methods such as CMP, thereby embedding the second conductor film 38p into each Damascus groove, as shown in Figure 19E. By embedding the second conductor film 38p into the Damascus groove, input signal wiring 38 connecting the control electrode 37 to the anode region 42 and cathode region 43, first power supply side diode wiring 36 connecting to the anode region 44, and second power supply side diode wiring 35 connecting to the cathode region 41 are formed as Damascus wiring. The top layer of the Damascus wiring is preferably a soft metal with a Vickers hardness of approximately 20Hv-30Hv, such as Au. Additionally, Au alloys with a Vickers hardness of approximately 15Hv-120Hv, such as Au-silicon (Si), Au-germanium (Ge), Au-antimony (Sb), Au-tin (Sn), Au-lead (Pb), Au-zinc (Zn), and Au-copper (Cu), with an Au content of over 80%, can also be used on the top layer of the Damascus wiring. In Figure 19E, the first power supply side diode wiring 36 is located deeper in the paper, and the second power supply side diode wiring 35 is located closer to the paper (see Figure 18A). The upper surface of the cavity inner wall protective film 19, after being planarized using methods such as CMP, is finally processed into a mirror surface suitable for the bonding process, completing the "impedance conversion element side chip".

(g) On the other hand, to prepare the "voltage generation unit side chip", a PZT substrate with a thickness of approximately 100μm is prepared. On one main surface of the prepared PZT substrate, a second insulating film 31p composed of a silicon oxide film or the like is deposited to a thickness of approximately 180-250nm using deposition methods such as CVD. Subsequently, the other main surface of the PZT substrate is adjusted to the thickness required for the vibrator 22a1. To maintain the strength of the PZT substrate, it is feasible to retain the peripheral portion of the PZT substrate in the shape of a frame with the thickness of the base material, with a recess inside the frame, and adjust only the thickness of the central portion corresponding to the bottom of the recess to the required thickness for the vibrator 22a1. This stepped structure is also feasible. Then, on the bottom of the recess on the other main surface side of the PZT substrate serving as the vibrator 22a1, a third conductor film such as Al or Al alloy is deposited using deposition methods such as sputtering, vacuum evaporation, or CVD. Next, a fifth photoresist film is applied on the third conductor film, and a pattern for forming a fixed potential electrode is formed using lithography technology. Using the fifth photoresist film as a fifth etching mask, the third conductor film is selectively etched to form a pattern of fixed potential electrodes 24a as shown in Figure 19F on the bottom of the recess.

(h) Next, as shown in Figure 19G, a layer of fixed potential electrode protective film 23, such as epoxy resin, is deposited on the vibrating body 22a1 using methods such as spin coating, to cover the pattern of the fixed potential electrode 24a. To ensure the strength of the vibrating body 22a1, the thickness of the fixed potential electrode protective film 23 can be thicker than the final design value. Alternatively, a reinforcement substrate (not shown in the figure) can also be bonded onto the fixed potential electrode protective film 23.

(i) Then, flip the vibrator 22a1 over so that one main surface of the PZT substrate faces upward. Apply a sixth photoresist film on the second insulating film 31p on one main surface of the PZT substrate, and use photolithography technology to form a pattern for embedding the connection plug buried groove. Using the sixth photoresist film as a sixth etching mask, form a plug insertion groove that penetrates through the second insulating film 31p and reaches the vibrator 22a1, as shown in Figure 19H. Next, deposit a fourth conductive film composed of a conductive layer such as a DOPOS film or a high-melting-point metal on the second insulating film 31p using deposition methods such as CVD, sputtering, or vacuum evaporation, with a thickness thicker than the depth of the plug buried groove. After planarization by methods such as CMP, embed the connection plug 29 into the plug insertion groove, as shown in Figure 19I. At least the topmost layer of the connection plug 29 is preferably a metal film with low Vickers hardness, such as Au or Au alloy. To reduce the ohmic contact resistance between the vibrator 22a1 and the connection plug 29, heat treatment can be performed after embedding the connection plug 29 to form an alloy layer between the vibrator 22a1 and the connection plug 29. Alternatively, before embedding the connection plug 29 into the vibrator 22a1, deposit an ohmic contact resistance improvement layer composed of other metals or the like as a bottom layer, then embed the connection plug 29, and finally perform heat treatment.

(j) Afterwards, a seventh photoresist film is coated on the second insulating film 31p, and the seventh photoresist film is exposed and developed using lithography technology to form a seventh etching mask for sacrificial layer formation. Using the seventh etching mask, the second insulating film 31p is selectively etched through dry etching techniques such as RIE, forming a pattern of concave portions for the annular vibration cavity as shown in Figure 19J. In the cross-sectional view of Figure 19J, the two patterns of concave portions for the vibration cavity are symmetrically located on both sides. However, in reality, the two concave portions for the vibration cavity that appear symmetrically located on both sides in Figure 19J are actually continuous annular structures on both sides of the paper, forming a single unit. The second insulating film 31p remaining around the concave portions for the vibration cavity becomes the direct bonding insulating film 31, completing the voltage generation section side chip. The surface of the direct bonding insulating film 31 is also processed into a mirror surface.

(k) Then, flip the chip on the voltage generation side, ensuring that the side with the direct bonding insulating film 31 faces downwards, and position it above the chip on the impedance transformation element side, as shown in Figure 19K. Next, perform hydrophilic bonding through "glass optical contact" between the direct bonding insulating film 31 and the cavity inner wall protective film 19, thereby directly bonding the chip on the voltage generation side to the chip on the impedance transformation element side. The silicon oxide film forming the ultra-smooth direct bonding insulating film 31 and the silicon oxide film constituting the cavity inner wall protective film 19 adhere closely to each other simply through contact. In hydrophilic bonding, due to the adsorption of water, hydrogen bonds formed between silanol groups on the glass surface cause the glass to adhere tightly. To achieve a firm bond, a post-annealing process at approximately 800°C can be performed. During the post-annealing process, due to thermal expansion, the connection plug 29 protruding from the plug embedding groove is thermally pressed onto the input signal line 38 and bonded to the metal. If oxygen plasma is irradiated onto the surfaces of the direct bonding insulating film 31 and the cavity inner wall protective film 19 to form a porous oxide film for plasma activation bonding, the adsorbed excess moisture and hydrogen gas generated by the decomposition of silanol groups during the post-annealing process can more easily escape. The post-annealing temperature for hydrophilic bonding can be reduced to approximately 300°C. Through the direct bonding of the chip on the voltage generation side to the chip on the impedance transformation element side, the space above the cavity inner wall protective film 19, formed by the concave portion for the vibration cavity, becomes a parallel annular vibration cavity 21a1 as shown in Figure 18B, completing the acoustic element of the second embodiment.

Additionally, as mentioned above, the method for manufacturing the acoustic element of the second embodiment, illustrated using Figures 19A to 19K, is merely an example. For instance, the structure shown in Figure 19F can also commence from the step of forming a $SiO_2$ film on an Si substrate through methods such as thermal oxidation. In this scenario, a third conductor film is comprehensively deposited on the $SiO_2$ film formed on the Si substrate using a sputtering method or the like. Then, the third conductor film is selectively etched using photolithography technology to form the pattern of the fixed potential electrode 24a as shown in Figure 19F. Subsequently, on the pattern of the fixed potential electrode 24a, PZT22p is deposited to a desired thickness using methods such as high-frequency magnetron sputtering, MOCVD, or solution coating (sol-gel method). For instance, after performing high-frequency magnetron sputtering at room temperature, rapid thermal treatment at temperatures below approximately 500°C using a halogen lamp or excimer laser can enhance the crystallinity of PZT22p.

Furthermore, if a second insulating film 31p is deposited on PZT22p using methods such as CVD, a "substructure" corresponding to the structure without the fixed potential electrode protection film 23 on the Si substrate is formed in the structure shown in Figure 19F. However, not only the substructure corresponding to Figure 19F, but also an enhanced structure is formed due to the substructure being set on a thick Si substrate through a $SiO_2$ film, which enhances the physical strength of the thin PZT22p by the thick Si substrate. The enhanced structure with the Si substrate is maintained until the process stage shown in Figure 19K. That is, after directly bonding the voltage generating unit side chip and the impedance conversion element side chip, the $SiO_2$ film between the Si substrate and the fixed potential electrode 24a is removed to expose the fixed potential electrode 24a. Then, a fixed potential electrode protection film 23 such as epoxy resin is deposited on the exposed fixed potential electrode 24a, which also completes the acoustic element of the second embodiment.

**The Third Embodiment**

As already illustrated in Figures 4C and 4D, in the circuit connection where the fixed potential electrode 24a is connected to the ground potential (GND), the potentials detected in the central region $P_0$, the first peripheral region $P_1$, ..., and the fourth peripheral region $P_4$ defined in the potential transfer region of the voltage generation section 1a exhibit transient responses that oscillate in both positive and negative directions. To address the situation where the voltage generation section 1a generates voltage waveforms that oscillate in both positive and negative directions, the acoustic element according to the third embodiment of the present invention provides a structure that includes two types of active elements in the impedance conversion element 2c. Specifically, as shown in Figure 20, the acoustic element according to the third embodiment includes a receiving element $X_{i,j}$ that generates a non-uniform voltage through piezoelectric effect and operates with the potential at a specific position (local) of the voltage generation section 1a as a control voltage, and includes CMOS inverters ($Q_p$, $Q_n$) as the impedance conversion element 2c.

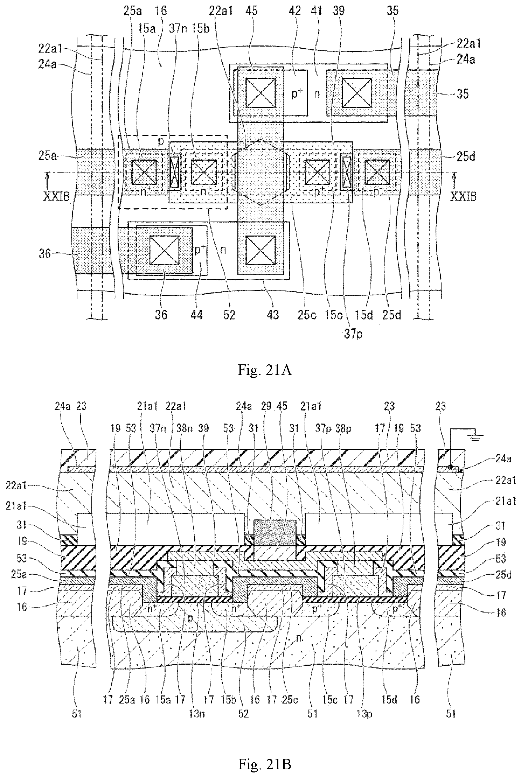

As can be seen from the cross-sectional view in Figure 21B, the voltage generating section 1a features a vibrator 22a1 similar to the acoustic elements of the first and second embodiments, as well as a fixed potential electrode 24a in contact with the receiving surface (the upper main surface in Figure 21B) of the vibrator 22a1, forming a unimorph structure. As shown in Figure 21B, the entire vibrator 22a1 can be composed of piezoelectric materials belonging to 20 crystal point groups, or only the central downward protruding portion (stress concentration location) can be composed of 20 piezoelectric materials, while the remaining parts are composed of non-piezoelectric materials belonging to 12 other crystal groups. Among the 20 crystal point groups, materials such as $HfO_2$, AIN, and PZT belonging to the 10 crystal point groups with pyroelectric properties are particularly suitable as materials for the central downward protruding portion (stress concentration location) of the vibrator 22a1. That is, the voltage generating section 1a only needs to have a structure in which a piezoelectric layer is provided at the stress concentration location of the vibrator 22a1. Therefore, the impedance transforming element 2c can operate by using a specific local area of the piezoelectric layer provided at least in the downward protruding portion (stress concentration location) as a potential transfer area, and using the potential of this potential transfer area as a control voltage.

The voltage generation section 1a of the unimorph structure of the acoustic element according to the third embodiment is provided with at least a piezoelectric layer at a specific position on the output surface (the lower main surface in Figure 21B) opposite to the receiving surface of the vibrating body 22a1 (the surface opposite to the receiving surface), and has a voltage distribution that generates uneven voltage through piezoelectric effect, producing higher voltage than other positions. The "specific position" on the output surface of the vibrating body 22a1 is, for example, any one of the central region $P_0$, the first peripheral region $P_1$, ..., the fourth peripheral region $P_4$, or a combination of multiple regions, as shown schematically in Figure 20 as a candidate model for arranging potential transfer regions. In the model representation of Figure 20, the central region $P_0$, the first peripheral region $P_1$, ..., the fourth peripheral region $P_4$ are arranged in a concentric hexagonal ring pattern centered around the central region $P_0$, with the first peripheral region $P_1$, the second peripheral region $P_2$, the third peripheral region $P_3$, and the fourth peripheral region $P_4$ surrounding the central region $P_0$ in a pattern that encircles it.

In the acoustic element of the third embodiment, the input electrodes of the CMOS inverters ($Q_p$, $Q_n$) functioning

as the impedance conversion element 2c are connected to the central region $P_0$, which is the potential transfer region of the voltage generation unit 1a. By connecting the input electrodes to the central region $P_0$, which serves as the potential transfer region, the potential barrier heights generated in the respective channels of the p-type active element $Q_p$ and the n-type active element $Q_n$ of the CMOS inverters $(Q_p, Q_n)$ are controlled by the potential of the central region $P_0$ of the voltage generation unit 1a. As the p-type active element $Q_p$, it corresponds to p-channel MIS transistors such as p-channel MOSFET, p-channel MOSSIT, p-channel MISFET, p-channel MISSIT, and p-channel HEMT (hereinafter referred to as "pMIS transistor"). Similarly, as the n-type active element $Q_n$, it corresponds to n-channel MIS transistors such as n-channel MOSFET, n-channel MOSSIT, n-channel MISFET, n-channel MISSIT, and n-channel HEMT (hereinafter referred to as "nMIS transistor").

The CMOS inverter $(Q_p, Q_n)$ includes an n-type active element $Q_n$ as the first active element, which connects the first main electrode region 15a to the first power supply $V_{SS}$ ($-V_{DD}$) and connects the second main electrode region 15b to the output signal wiring 25c. The potential barrier in the n-type channel of the active element $Q_n$ acts as an obstacle for the main current (electrons) flowing between the first main electrode region 15a and the second main electrode region 15b of the active element $Q_n$. On the other hand, the CMOS inverter $(Q_p, Q_n)$ includes a p-type active element $Q_p$ as the second active element, which connects the third main electrode region 15d to the second power supply $V_{DD}$, which is at a higher potential than the first power supply $V_{SS}$, and connects the fourth main electrode region 15c to the output signal wiring 25c. The potential barrier in the p-type channel of the active element $Q_p$ acts as an obstacle for the main current (holes) flowing between the third main electrode region 15d and the fourth main electrode region 15c of the active element $Q_p$. By connecting the CMOS inverter $(Q_p, Q_n)$ as the impedance transforming element 2c between the first power supply $V_{SS}$ ($-V_{DD}$) and the second power supply $V_{DD}$, as shown in Figure 20, it is possible to correspond to input voltage waveforms that oscillate in both positive and negative directions, as exemplified in Figure 4C and other figures.

The first control electrode 37n of the n-type active element $Q_n$, which constitutes the CMOS inverter $(Q_p, Q_n)$, is connected to the first input signal wiring 39 via the first gate connection plug 38n. On the other hand, the second control electrode 37p of the p-type active element $Q_p$ is connected to the first input signal wiring 39 via the second gate connection plug 38p. Then, as shown in Figure 21B, a second input signal wiring 45 is provided on the first input signal wiring 39.

The CMOS inverters $(Q_p, Q_n)$ constituting the impedance conversion element 2c transmit the potential of the central region $P_0$, located on the protruding portion of the output surface side of the vibrating body 22a1 (as shown in the central part of Figure 21B), to the first control electrode 37n of the n-type active element $Q_n$ and the second control electrode 37p of the p-type active element $Q_p$ through the second input signal wiring 45 and the first input signal wiring 39. That is, the impedance conversion element 2c of the acoustic element according to the third embodiment uses the pressure of the ultrasonic wave $\Phi$ applied to the vibrating body 22a1 of the voltage generation section 1a as the potential of the central region $P_0$ as an input signal for the CMOS inverters $(Q_p, Q_n)$, and outputs an impedance-converted signal from the output signal wiring 25c of the CMOS inverters $(Q_p, Q_n)$. Then, the acoustic element according to the third embodiment uses the output signal of the CMOS inverters $(Q_p, Q_n)$ as the output signal of the acoustic element.

The protruding portion on the output surface side of the vibrating body 22a1 constituting the voltage generating section 1a of the acoustic element according to the third embodiment is a regular hexagonal cylindrical protrusion as indicated by the two-dot chain line in Figure 21A. As shown in Figure 21B, around the protrusion provided at the central portion on the output surface side of the vibrating body 22a1, a parallel annular vibrating cavity 21a1 is provided in a centrally symmetric manner, surrounding the protrusion. The parallel annular structure constituting the vibrating cavity 21a1 has a hexagonal topology on the planar pattern. In the cross-sectional view representation of Figure 21B, it appears that the two vibrating cavities 21a1 are located on both sides of the central protrusion, but in reality, they are a continuous integrated structure on the front and back of the paper surface.

The n-type active element $Q_n$ constituting the CMOS inverter $(Q_p, Q_n)$ is shown in Figure 21B. It features a well region 52 composed of a semiconductor region of the first conductivity type (p-type), and first and second main electrode regions 15a and 15b, spaced apart from each other, located above the well region 52 and composed of semiconductor regions of the second conductivity type ($n^+$-type). The well region 52 is partially situated above a body region 51 composed of a semiconductor region of the second conductivity type (n-type). Additionally, as depicted in Figure 21B, the n-type active element $Q_n$ comprises a first gate dielectric film 13n, which contacts the upper surface of the well region 52 between the first and second main electrode regions 15a and 15b and has a wider bandgap than the well region 52. A first control electrode 37n is positioned on the first gate dielectric film 13n, making it an active element.

The p-type active element $Q_p$, which constitutes the CMOS inverter $(Q_p, Q_n)$, is shown in Figure 21B. It features a body region 51, as well as a third main electrode region 15d and a fourth main electrode region 15c, which are spaced apart and composed of a first conductivity type ($P^+$-type) semiconductor region, located above the body region 51. Additionally, as depicted in Figure 21B, the p-type active element $Q_p$ includes a second gate dielectric film 13p, which contacts the upper surface of the body region 51 between the third main electrode region 15d and the fourth main electrode region 15c and has a wider bandgap than the body region 51. Furthermore, a second control electrode 37p is positioned on the second gate dielectric film 13p, making it an active element.

As shown in Figure 20, a p-side clamp diode $D_{kp}$ is connected between the input signal terminals of the CMOS

inverter ($Q_p$, $Q_n$) (corresponding to the first input signal wiring 39 and the second input signal wiring 45 in Figures 21A and 21B) and the second power supply $V_{DD}$. An n-side clamp diode $D_{kn}$ is connected between the input signal terminals and the first power supply $V_{SS}$ (=-$V_{DD}$). By connecting the p-side clamp diode $D_{kp}$ and the n-side clamp diode $D_{kn}$ to the input signal terminals of the CMOS inverter ($Q_p$, $Q_n$), excessive gate voltage is prevented from being applied to the first gate dielectric film 13n of the n-type active element $Q_n$ and the second gate dielectric film 13p of the p-type active element $Q_p$.

As described in the explanation of the second embodiment, it can be considered that the n-type active element $Q_n$ and the p-type active element $Q_p$ constituting the CMOS inverter ($Q_p$, $Q_n$) each have a heterojunction gate structure. As shown in Figure 21B and other figures, in the acoustic element of the third embodiment, the second input signal wiring 45 of the CMOS inverter ($Q_p$, $Q_n$) is connected to the potential generation position $P_0$. Therefore, the potential barrier height generated in the n-type channel between the first main electrode region 15a and the second main electrode region 15b of the n-type active element $Q_n$ constituting the CMOS inverter ($Q_p$, $Q_n$) is controlled by the potential at the potential generation position $P_0$ through the first input signal wiring 39 connected to the second input signal wiring 45. Similarly, the potential barrier height generated in the p-type channel between the third main electrode region 15d and the fourth main electrode region 15c of the P-type active element $Q_p$ constituting the CMOS inverter ($Q_p$, $Q_n$) is also controlled by the potential at the potential generation position $P_0$, complementarily to the n-type active element $Q_n$.

Around the well region 52, which is locally provided in the upper part of the n-type body region 51, there is a frame-shaped element isolation insulating film 16, which defines the range of the active region of the n-type active element $Q_n$ of the CMOS inverter ($Q_p$, $Q_n$). Adjacent to the frame-shaped bank defining the active region pattern of the n-type active element $Q_n$, there is also a frame-shaped bank defining the active region pattern of the p-type active element $Q_p$. That is, the active region of the n-type active element $Q_n$ and the active region of the p-type active element $Q_p$ are adjacent to each other through the element isolation insulating film 16. Inside the range of the active region of the n-type active element $Q_n$ surrounded by the element isolation insulating film 16, the region above the well region 52 is defined. Near the upper surface (surface) of the active region surrounded by the element isolation insulating film 16, there are provided a first main electrode region 15a and a second main electrode region 15b. Inside the active region pattern of the p-type active element $Q_p$ surrounded by the element isolation insulating film 16, the region above the body region 51 is defined. Near the upper surface (surface) of the active region surrounded by the element isolation insulating film 16, there are provided a third main electrode region 15d and a fourth main electrode region 15c.

In the center of Figure 21A, the potential transfer area of the regular hexagon is indicated by a double-dotted line. For the hexagonal potential transfer area defined as the protruding portion on the output surface side of the vibrating body 22a1, the n-type channel of the n-type active element $Q_n$ that constitutes the CMOS inverter ($Q_p$, $Q_n$) is formed near the surface of the rectangular area sandwiched between the first main electrode area 15a and the second main electrode area 15b. Similarly, the p-type channel of the P-type active element $Q_p$ that constitutes the CMOS inverter ($Q_p$, $Q_n$) is formed near the surface of the rectangular area sandwiched between the third main electrode area 15d and the fourth main electrode area 15c. Inside the active area of the n-type active element $Q_n$, the potential barrier height for carrier movement generated in the n-type channel defined between the first main electrode area 15a and the second main electrode area 15b of the CMOS inverter ($Q_p$, $Q_n$) is controlled by the potential of the potential transfer area of the vibrating body 22a1. Similarly, inside the active area of the p-type active element $Q_p$, the potential barrier height for carrier movement generated in the p-type channel defined between the third main electrode area 15d and the fourth main electrode area 15c of the CMOS inverter ($Q_p$, $Q_n$) is controlled by the potential of the potential transfer area of the vibrating body 22a1 in a complementary manner to the n-type active element $Q_n$.

As shown in Figure 21B, an interlayer insulating film (first interlayer insulating film) 17 is provided on the first main electrode region 15a and the second main electrode region 15b. Through a contact hole opened in the first interlayer insulating film 17, the first main electrode region 15a is connected to a first main electrode wiring 25a, and the second main electrode region 15b is connected to an output signal wiring 25c. Additionally, through a contact hole opened in the first interlayer insulating film 17, the third main electrode region 15d is connected to a third main electrode wiring 25d, and the fourth main electrode region 15c is connected to an output signal wiring 25c. Above the first main electrode wiring 25a, the output signal wiring 25c, the third main electrode wiring 25d, as well as the first control electrode 37n of the n-type active element $Q_n$ and the second control electrode 37p of the p-type active element $Q_p$, a second interlayer insulating film 53 is deposited. As shown in Figure 21B, a first gate contact hole exposing the top of the first control electrode 37n and a second gate contact hole exposing the top of the second control electrode 37p are opened through the second interlayer insulating film 53 and the underlying first interlayer insulating film 17. A first gate connection plug 38n is embedded in the first gate contact hole, and a second gate connection plug 38p is embedded in the second gate contact hole, respectively achieving ohmic contact.

As shown in Figure 21B, the first input signal wiring 39 is arranged on the second interlayer insulating film 53 to electrically connect the first gate connection plug 38n and the second gate connection plug 38p. As shown in the plan view of Figure 21A, the second input signal wiring 45 is arranged in a direction orthogonal to the longitudinal direction of the first input signal wiring 39. As can be seen from the cross-sectional view of Figure 21B, the second input signal wiring 45 is a wiring arranged on and in contact with the first input signal wiring 39. Since the first input signal wiring 39 electrically connects the first control electrode 37n of the n-type active element $Q_n$ and the second control electrode 37p of the p-type active element $Q_p$ to each other, as shown in Figure 21A, the second input signal wiring 45 connects the first control electrode 37n and the second control electrode 37p together to the $P^+$ type anode region 42 and the n-type cathode region 43.

Corresponding to the p-side clamping diode $D_{kp}$ in the equivalent circuit representation of Figure 20, the p-n junction diode composed of the $P^+$ type anode region 42 and the n type cathode region 41 is arranged in the paper area above the pattern of the first main electrode wiring 25a, the second input signal wiring 45, and the third main electrode wiring 25d in Figure 21A. The longitudinal direction of the p-n junction diode composed of the $P^+$ type anode region 42 and the n type cathode region 41 is parallel to the longitudinal direction of the pattern of the first main electrode wiring 25a and the output signal wiring 25c.

Similarly, corresponding to the n-side clamping diode $D_{kn}$ in Figure 20, a p-n junction diode composed of a $P^+$ type anode region 44 and an n-type cathode region 43 is arranged in the lower region of the paper surface in Figure 21A, with its longitudinal direction parallel to the patterns of the first main electrode wiring 25a, the second input signal wiring 45, and the third main electrode wiring 25d. Connected to the anode region 44 of the n-side clamping diode $D_{kn}$ is the first power supply side diode wiring 36, and connected to the cathode region 41 of the p-side clamping diode $D_{kp}$ is the second power supply side diode wiring 35. As shown in Figure 21B, a connection plug 29 with a multi-layer structure conductor whose surface layer is a soft metal is embedded from the tip side protruding from the center of the output surface side of the vibrating body 22a1, with its flat surface serving as the connection end face.

Furthermore, the lower surface (connection end face) of the connection plug 29 is in physical contact with the upper surface of the second input signal wiring 45, thereby inputting the potential of the central region $P_0$ of the voltage generation section 1a as a control voltage to the CMOS inverters ($Q_p$, $Q_n$) constituting the impedance conversion element 2c. If the connection plug 29 is regarded as a constituent element, the voltage generation section 1a includes the vibrating body 22a1, the fixed potential electrode 24a, the fixed potential electrode protective film 23, and the connection plug 29.

That is, the potential of the connection plug 29 is input to the first input signal wiring 39 through the second input signal wiring 45, and the potential of the first input signal wiring 39 is transmitted to the first gate connection plug 38n and the second gate connection plug 38p. The potential of the first gate connection plug 38n is input to the first control electrode 37n, and the potential of the first control electrode 37n controls the potential barrier height between the first main electrode region 15a and the second main electrode region 15b through the first gate dielectric film 13n by electrostatic means. Similarly, the potential of the second gate connection plug 38p is input to the second control electrode 37p, and the potential of the second control electrode 37p controls the potential barrier height between the third main electrode region 15d and the fourth main electrode region 15c through the second gate dielectric film 13p by electrostatic means.

The structure shown in Figure 21B is an example of a structure where the connection plug 29 provided on the voltage generation unit side chip on the upper side physically contacts the second input signal wiring 45 of the impedance conversion element side chip on the lower side. Therefore, around the vibration cavity 21a1, the direct bonding insulating film 31 with a mirror surface provided on the voltage generation unit side chip and the cavity inner wall protective film 19 with a mirror surface provided on the impedance conversion element side chip are directly bonded through hydrophilic bonding (hydrogen bonding between silanol groups). Compared to the structure connected by external wiring in Non-Patent Document 2, the acoustic element of the third embodiment is directly connected to the first gate connection plug 38n and the second gate connection plug 38p through the thin plate-shaped second input signal wiring 45 and the first input signal wiring 39, forming an electrical path, thereby enabling a reduction in floating impedance. In addition, due to the new structure of the stress reinforcement structure adopted for the voltage generation unit 1a, high sensitivity and broadband performance are achieved. Therefore, according to the acoustic element of the third embodiment, high sensitivity and broadband performance can be achieved. In particular, by microscopic research on the internal structure of the voltage generation unit 1a, selecting a specific position with the highest voltage generation as a potential transfer area, and using it as an input transmission position to the impedance conversion element 2c, it is easy to achieve high sensitivity.

**A Variation of the Third Embodiment**

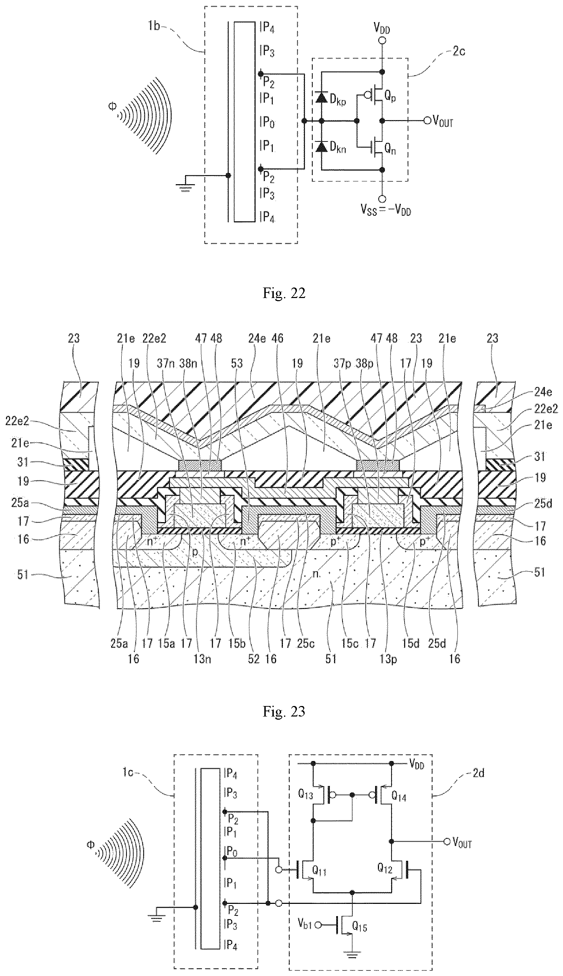

For convenience, the description has been provided with an example where the top (bottom) of the central protrusion of the vibration cavity 21a1 serves as the central region $P_0$ in the acoustic elements of the first to third embodiments. However, the potential transmission region for transmitting the potential at a specific position (local) of the voltage generation section 1b is not limited to the center of the vibration cavity 21a1. As shown in Figure 22, the acoustic element of the modified example of the third embodiment of the present invention includes a receiving element $X_{i,j}$ that generates a non-uniform voltage through piezoelectric effect and operates with the potential at a specific position (local) of the voltage generation section 1b as a control voltage. As can be seen from the cross-sectional view in Figure 23, the voltage generation section 1b has a structure that is basically the same as that of the voltage generation section 1a of the acoustic elements of the first to third embodiments in terms of being a unimorph structure. However, as shown in Figures 22 and 23, the feature of transmitting the potential of the second peripheral region $P_2$ defined by the bottom of the hexagonal ring-shaped rib around the central region $P_0$ of the vibration cavity 21a1 to the impedance conversion element 2c differs from the structure of the acoustic elements of the first to third embodiments that have been described.

The potential of the second peripheral region $P_2$ at the bottom of the hexagonal ring-shaped rib is determined by the W-shaped cross-sectional structure of the vibrating body 22e2 that transmits the potential to the impedance transformation element 2c, as well as the W-shaped cross-sectional structure of the fixed potential electrode 24e that contacts the receiving surface (the upper main surface in Figure 23) of the vibrating body 22e2. The vibrating body 22e2 can be made of materials belonging to 20 crystal point groups. Among the 20 materials, materials such as $HfO_2$, AlN, and PZT belonging to 10 crystal point groups with pyroelectricity are suitable for use in the vibrating body 22e2. Although the cross-sectional structure shown in Figure 23 is W-shaped, the planar structure of the acoustic element in the third embodiment variant is a hexagonal ring-shaped structure with 6-fold rotational symmetry about the rotation axis of the junction of two Vs that appear as a W-shape in the cross-sectional view.

As illustrated in Figures 10A and 10B, the voltage generating section 1b with a W-shaped cross-section in a unimorph structure exhibits a higher absolute potential $|V_{P2}|$ in the second peripheral region $P_2$ located at the top of the two V-shaped sections of the W, compared to the absolute potentials $|V_{p0}|$, $|V_{P1}|$, $|V_{P3}|$, and $|V_{P4}|$ in the central region $P_0$, the first peripheral region $P_1$, the third peripheral region $P_3$, and the fourth peripheral region $P_4$. Although the simulation results shown in Figures 10A and 10B depict a concentric circular pattern for the central region $P_0$, the first peripheral region $P_1$, ..., and the fourth peripheral region $P_4$, there is essentially no difference even if they are in the shape of concentric hexagonal rings. That is, for the vibrator 22e2 with a W-shaped cross-section as shown in Figure 23, the voltage is not generated at the central region $P_0$ defined by the central protrusion model, but rather at the second peripheral region $P_2$ surrounding the central region $P_0$, where a higher voltage is generated compared to other positions (central region $P_0$, first peripheral region $P_1$, third peripheral region $P_3$, and fourth peripheral region $P_4$). Therefore, the voltage generating section 1b with a W-shaped cross-section exhibits a non-uniform voltage distribution, with higher voltages generated at specific positions on the output surface (the lower main surface in Figure 23) opposite the receiving surface of the vibrator 22e2, namely in the second peripheral region $P_2$, compared to other positions, namely the central region $P_0$, the first peripheral region $P_1$, the third peripheral region $P_3$, and the fourth peripheral region $P_4$.

As illustrated in Figure 10B, the potentials detected in the central region $P_0$, the first peripheral region $P_1$, ..., and the fourth peripheral region $P_4$ of the voltage generation unit 1b exhibit transient response waveforms that oscillate in both positive and negative directions. To accommodate input voltage waveforms that oscillate in both positive and negative directions, the acoustic element of the third embodiment variant is similar to that of the third embodiment, as shown in Figure 22, and includes a CMOS inverter ($Q_p$, $Q_n$) as the impedance conversion element 2c. The input electrodes of the CMOS inverter ($Q_p$, $Q_n$) are connected to the second peripheral region $P_2$ of the voltage generation unit 1b, so that the potential barrier height generated in each channel of the p-type active element $Q_p$ and n-type active element $Q_n$ of the CMOS inverter ($Q_p$, $Q_n$) is controlled by the potential of the second peripheral region $P_2$ of the voltage generation unit 1b.

The CMOS inverter ($Q_p$, $Q_n$) includes an n-type active element $Q_n$ as the first active element, which connects the first main electrode region 15a to the first power supply $V_{SS}$ (-$V_{DD}$) and connects the second main electrode region 15b to the output signal wiring 25c. The potential barrier in the n-type channel of the n-type active element $Q_n$ acts as an obstacle for the main current (electrons) flowing between the first main electrode region 15a and the second main electrode region 15b of the active element $Q_n$. On the other hand, the CMOS inverter ($Q_p$, $Q_n$) includes a p-type active element $Q_p$ as the second active element, which connects the third main electrode region 15d to the second power supply $V_{DD}$, which is at a higher potential than the first power supply $V_{SS}$, and connects the fourth main electrode region 15c to the output signal wiring 25c. The potential barrier in the p-type channel of the p-type active element $Q_p$ acts as an obstacle for the main current (holes) flowing between the third main electrode region 15d and the fourth main electrode region 15c of the active element $Q_p$. By connecting the CMOS inverter ($Q_p$, $Q_n$) as the impedance transforming element 2c between the first power supply $V_{SS}$ (-$V_{DD}$) and the second power supply $V_{DD}$, as shown in Figure 22, it is possible to correspond to input voltage waveforms that oscillate in both positive and negative directions, as exemplified in Figure 10B and other figures.

The first control electrode 37n of the n-type active element $Q_n$, which constitutes the CMOS inverter ($Q_p$, $Q_n$), is connected to the first input signal wiring 46 via the first gate connection plug 38n. On the other hand, the second control electrode 37p of the p-type active element $Q_p$ is connected to the first input signal wiring 46 via the second gate connection plug 38p. Then, as shown in Figure 23, a hexagonal ring-shaped second input signal wiring 47 is provided on the first input signal wiring 46.

The CMOS inverters ($Q_p$, $Q_n$) constituting the impedance conversion element 2c transmit the potential of the second peripheral region P2, which is located in the middle of the radial direction of the vibration cavity 21e in Figure 23 and serves as the hexagonal ring-shaped ridge portion on the output surface side of the vibrator 22e2, to the first control electrode 37n of the n-type active element $Q_n$ and the second control electrode 37p of the p-type active element $Q_p$ via the hexagonal ring-shaped second input signal wiring 47 and the first input signal wiring 46. That is, the impedance conversion element 2c of the acoustic element according to the modified example of the third embodiment uses the pressure of the ultrasonic wave Φ applied to the vibrator 22e2 of the voltage generation unit 1b as the potential of the second peripheral region $P_2$ as an input signal to the CMOS inverters ($Q_p$, $Q_n$), and outputs an impedance-converted signal from the output signal wiring 25c of the CMOS inverters ($Q_p$, $Q_n$). Then, the acoustic element according to the modified example of the third embodiment uses the output signal of the CMOS inverters ($Q_p$, $Q_n$) as the output signal of the acoustic element.

In the acoustic element of the third embodiment variant, as shown in Figure 23, a hexagonal ring-shaped rib is provided midway in the radial direction on the output surface side of the vibrating body 22e2. Therefore, in addition to the space of the vibrating cavity 21e inside the hexagonal ring-shaped rib, a space of the inclined annular vibrating cavity 21e is also provided outside the rib in a centrally symmetrical manner. The inclined annular structure constituting the space of the outer vibrating cavity 21e has a cross-sectional shape close to a right triangle, and its planar pattern is a hexagonal topology. In the cross-sectional view shown in Figure 23, it appears that the two vibrating cavities 21e are located on both sides of the hexagonal ring-shaped rib, but in reality, they are a continuous integrated structure on the front and back of the paper surface.

The n-type active element $Q_n$ constituting the CMOS inverter ($Q_p$, $Q_n$) is shown in Figure 23. It features a well region 52 composed of a p-type semiconductor region, as well as a first main electrode region 15a and a second main electrode region 15b, which are spaced apart and formed by $n^+$-type semiconductor regions above the well region 52. The well region 52 is partially located above a body region 51 composed of an n-type semiconductor region. Additionally, as shown in Figure 23, the n-type active element $Q_n$ includes a first gate dielectric film 13n, which contacts the upper surface of the well region 52 between the first main electrode region 15a and the second main electrode region 15b and has a wider bandgap than the well region 52. The first control electrode 37n is disposed on the first gate dielectric film 13n, making it an active element.

The p-type active element $Q_p$ constituting the CMOS inverter ($Q_p$, $Q_n$) is shown in Figure 23. It features a body region 51, as well as a third main electrode region 15d and a fourth main electrode region 15c, which are spaced apart and composed of $P^+$-type semiconductor regions, located above the body region 51. Additionally, as depicted in Figure 23, the p-type active element $Q_p$ includes a second gate dielectric film 13p, which contacts the upper surface of the body region 51 between the third main electrode region 15d and the fourth main electrode region 15c and has a wider bandgap than the body region 51. Furthermore, a second control electrode 37p is positioned on the second gate dielectric film 13p, making it an active element.

As shown in Figure 22, a p-side clamp diode $D_{kp}$ is connected between the input signal terminals of the CMOS inverter ($Q_p$, $Q_n$) (corresponding to the first input signal wiring 46 and the second input signal wiring 47 in Figure 23) and the second power supply $V_{DD}$. An n-side clamp diode $D_{kn}$ is connected between the input signal terminals and the first power supply $V_{SS}$ (-$V_{DD}$). By connecting the p-side clamp diode $D_{kp}$ and the n-side clamp diode $D_{kn}$ to the input signal terminals of the CMOS inverter ($Q_p$, $Q_n$), excessive gate voltage is prevented from being applied to the first gate dielectric film 13n of the n-type active element $Q_n$ and the second gate dielectric film 13p of the p-type active element $Q_p$.

As shown in Figures 22 and 23, in the acoustic element of the third embodiment variant, the hexagonal ring-shaped second input signal wiring 47 of the CMOS inverter ($Q_p$, $Q_n$) is connected to the potential generation position $P_2$. Therefore, through the first input signal wiring 46 connected to the second input signal wiring 47, the potential barrier height generated in the n-type channel between the first main electrode region 15a and the second main electrode region 15b of the n-type active element $Q_n$ constituting the CMOS inverter ($Q_p$, $Q_n$) is controlled by the potential at the potential generation position $P_2$. Similarly, the potential barrier height generated in the p-type channel between the third main electrode region 15d and the fourth main electrode region 15c of the p-type active element $Q_p$ constituting the CMOS inverter ($Q_p$, $Q_n$) is also controlled by the potential at the potential generation position $P_2$, complementarily to the n-type active element $Q_n$.

Around the well region 52, which is locally set on the upper part of the n-type substrate region 51, there is an element isolation insulating film 16, which is in the shape of a frame, used to define the range of the active region of the n-type active element $Q_n$ of the CMOS inverter ($Q_p$, $Q_n$). It is adjacent to the frame-shaped bank that defines the pattern of the active region of the n-type active element $Q_n$. A frame-shaped bank is also provided to define the active region pattern of the p-type active element $Q_p$. That is, the active region of the n-type active element $Q_n$ and the active region of the p-type active element $Q_p$ are adjacent to each other through the element isolation insulating film 16. Within the active region of the n-type active element $Q_n$ surrounded by the element isolation insulating film 16, the region on the upper surface of the well region 52 is defined. Near the upper surface (surface) of the active region surrounded by the element isolation insulating film 16, the first main electrode region 15a and the second main electrode region 15b are provided. Within the active region pattern of the p-type active element $Q_p$ surrounded by the element isolation insulating film 16, the region on the upper surface of the body region 51 is defined. Near the upper surface (surface) of the active region surrounded by the element isolation insulating film 16, the third main electrode region 15d and the fourth main electrode region 15c are provided.

The n-type channel of the n-type active element $Q_n$ constituting the CMOS inverter ($Q_p$, $Q_n$) is formed near the surface of the rectangular region sandwiched between the first main electrode region 15a and the second main electrode region 15b. Similarly, the p-type channel of the p-type active element $Q_p$ constituting the CMOS inverter ($Q_p$, $Q_n$) is formed near the surface of the rectangular region sandwiched between the third main electrode region 15d and the fourth main electrode region 15c. Inside the semiconductor region serving as the active area of the n-type active element $Q_n$, the height of the potential barrier for carrier movement generated in the n-type channel defined by the first main electrode region 15a

and the second main electrode region 15b is electrostatically controlled by the potential of the potential transfer region of the vibrating body 22e2. Similarly, inside the semiconductor region serving as the active area of the p-type active element $Q_p$, the height of the potential barrier for carrier movement generated in the p-type channel defined by the third main electrode region 15d and the fourth main electrode region 15c is controlled in a complementary manner to the n-type active element $Q_n$ by the potential of the potential transfer region of the vibrating body 22e2.

As shown in Figure 23, a first interlayer insulating film 17 is provided on the first main electrode region 15a and the second main electrode region 15b. Through contact holes opened in the first interlayer insulating film 17, the first main electrode region 15a is connected to a first main electrode wiring 25a, and the second main electrode region 15b is connected to an output signal wiring 25c. Additionally, through contact holes opened in the first interlayer insulating film 17, the third main electrode region 15d is connected to a third main electrode wiring 25d, and the fourth main electrode region 15c is connected to an output signal wiring 25c. A second interlayer insulating film 53 is deposited above the first main electrode wiring 25a, the output signal wiring 25c, the third main electrode wiring 25d, as well as the first control electrode 37n of the n-type active element $Q_n$ and the second control electrode 37p of the p-type active element $Q_p$.

As shown in Figure 23, holes are opened through the second interlayer insulating film 53 and the underlying first interlayer insulating film 17, exposing the first gate contact hole at the top of the first control electrode 37n and the second gate contact hole at the top of the second control electrode 37p. A first gate connection plug 38n is embedded in the first gate contact hole, and a second gate connection plug 38p is embedded in the second gate contact hole. It is also possible to refer to the integrated structure connecting the first control electrode 37n to the first gate connection plug 38n as the "first gate terminal (37n, 38n)", and the integrated structure connecting the second control electrode 37p to the second gate connection plug 38p as the "second gate terminal (37p, 38p)".

As shown in Figure 23, the first input signal wiring 46 is provided on the second interlayer insulating film 53 to electrically connect the first gate connection plug 38n and the second gate connection plug 38p. Although not shown in the plan view, a hexagonal ring-shaped second input signal wiring 47 is provided in a direction intersecting the longitudinal direction of the first input signal wiring 46. As can be seen from the cross-sectional view of Figure 23, the second input signal wiring 47 is a wiring that is provided on the first input signal wiring 46 and contacts the first input signal wiring 46 at two points. The first input signal wiring 46 electrically connects the first control electrode 37n of the n-type active element $Q_n$ and the second control electrode 37p of the p-type active element $Q_p$ to each other. Therefore, the second input signal wiring 47 connects the first control electrode 37n and the second control electrode 37p together to the anode region of the p-side clamp diode $D_{kp}$ and the cathode region of the n-side clamp diode $D_{kn}$. It is also possible to refer to the integrated structure connecting the first input signal wiring 46 and the second input signal wiring 47 as "input signal wiring (46, 47)". In this representation, the input signal wiring (46, 47) is connected to the first gate terminal (37n, 38n) and the second gate terminal (37p, 38p).

Connected to the anode region of the n-side clamping diode $D_{kn}$ is the first power-side diode wiring, while connected to the cathode region of the p-side clamping diode $D_{kp}$ is the second power-side diode wiring. As shown in Figure 23, a conductor-made land 48 is provided at the bottom of the hexagonal ring-shaped ridge on the output surface side of the vibrating body 22e2 to achieve ohmic contact. Moreover, the lower surface (connection end face) of the hexagonal ring-shaped land 48 physically contacts the upper surface of the hexagonal ring-shaped second input signal wiring 47, thereby inputting the potential of the second peripheral region $P_2$ of the voltage generation section 1b as a control voltage to the CMOS inverters ($Q_p$, $Q_n$) constituting the impedance conversion element 2c. If the land 48 is regarded as a constituent element, the voltage generation section 1b includes the vibrating body 22e2, the fixed potential electrode 24e, the fixed potential electrode protective film 23, and the land 48. A connection means such as a bump may also be further sandwiched between the land 48 and the second input signal wiring 47.

That is, the potential of the hexagonal ring-shaped connection pad 48 is inputted to the first input signal wiring 46 through the hexagonal ring-shaped second input signal wiring 47, and the potential of the first input signal wiring 46 is transmitted to the first gate connection plug 38n and the second gate connection plug 38p. The potential of the first gate connection plug 38n is inputted to the first control electrode 37n, and the potential of the first control electrode 37n electrostatically controls the potential barrier height between the first main electrode region 15a and the second main electrode region 15b through the first gate dielectric film 13n. Similarly, the potential of the second gate connection plug 38p is inputted to the second control electrode 37p, and the potential of the second control electrode 37p electrostatically controls the potential barrier height between the third main electrode region 15d and the fourth main electrode region 15c through the second gate dielectric film 13p.

The structure shown in Figure 23 is an example of a structure where the connection pad 48 provided on the voltage generation unit side chip on the upper side physically contacts the hexagonal ring-shaped second input signal wiring 47 of the impedance conversion element side chip on the lower side. Therefore, around the vibration cavity 21e, the direct bonding insulating film 31 with a mirror surface provided on the voltage generation unit side chip and the cavity inner wall protective film 19 with a mirror surface provided on the impedance conversion element side chip are directly bonded through hydrophilic bonding (hydrogen bonding between silanol groups). The acoustic element of the third embodiment variant is directly connected to the first gate connection plug 38n and the second gate connection plug 38p through a thin plate-shaped connection pad 48, the second input signal wiring 47, and the first input signal wiring 46, thereby reducing the floating impedance. In addition, since the voltage generation unit 1b adopts a W-shaped structure with a stress reinforcement structure, achieving high sensitivity and broadband performance, the acoustic element according to the third embodiment variant can achieve high sensitivity and broadband performance. In particular, selecting a specific position of the voltage generation unit 1b that generates the highest voltage as the potential transfer area and as the input transmission position to the impedance conversion element 2c makes it easy to achieve high sensitivity.

**The Fourth Embodiment**

In the acoustic elements of the first to third embodiments, the structure has been described where one potential transfer region of the voltage generation section is selected, and the potential of this region is transmitted from the voltage generation section to the impedance conversion element. However, there can be multiple potential transfer regions for transmitting the potential of the voltage generation section to the impedance conversion element, and their potentials and phases can vary. For example, in the vibrator 22a1 with a parallel ring structure, as shown in Figure 4C and other figures, the central voltage $V_{p0}$ of the central region $P_0$ and the fourth peripheral voltage $VP_4$ of the fourth peripheral region $P_4$ vibrate in opposite phases to the first peripheral voltage $V_{p1}$ of the first peripheral region $P_1$, the second peripheral voltage $V_{P2}$ of the second peripheral region $P_2$, and the third peripheral voltage $V_{P3}$ of the third peripheral region $P_3$, as already explained. For the vibrator 22d with an M-shaped structure, as shown in Figure 9B, it has also been explained that the central voltage $V_{p0}$ vibrates in opposite phases to the first peripheral voltage $V_{P1}$, the second peripheral voltage $V_{P2}$, and the third peripheral voltage $V_{P3}$. Additionally, for the vibrator 22e with a W-shaped structure, as shown in Figure 10B, it has also been explained that the central voltage $V_{P0}$ vibrates in opposite phases to the first peripheral voltage $V_{P1}$, the second peripheral voltage $V_{P2}$, the third peripheral voltage $V_{P3}$, and the fourth peripheral voltage $V_{P4}$.

The CMOS inverter described in the third embodiment is a semiconductor integrated circuit comprising two active elements. The acoustic element according to the fourth embodiment of the present invention, as shown in Figure 24, includes: a voltage generation unit 1c that generates non-uniform voltages through the piezoelectric effect; and receiving elements $X_{i,j}$, where the potentials at specific multiple locations (local) of the voltage generation unit 1c are supplied as independent control voltages for multiple active elements constituting the semiconductor integrated circuit of the impedance conversion element 2d. Specifically, the potentials of specific multiple potential transfer regions of the voltage generation unit 1c are independently transmitted as independent control voltages for specific multiple active elements selected from among the multiple active elements included in the semiconductor integrated circuit. Furthermore, the selected multiple active elements are individually controlled, and through the operation of these active elements, the other unselected active elements also operate. In the example shown in Figure 24, the potentials of two phase-different potential transfer regions, namely the central region $P_0$ and the second peripheral region $P_2$, of the voltage generation unit 1c, are independently transmitted to two input terminals of the semiconductor integrated circuit constituting the impedance conversion element 2d.

The acoustic element according to the fourth embodiment, as shown in Figure 24, includes a semiconductor integrated circuit ($Q_{11}$, $Q_{12}$, $Q_{13}$, $Q_{14}$, $Q_{15}$) composed of five active elements $Q_{11}$, $Q_{12}$, $Q_{13}$, $Q_{14}$, and $Q_{15}$ as an impedance conversion element 2d. Among them, the selected two active elements $Q_{11}$ and $Q_{12}$ are controlled by the potentials of two potential transfer regions, namely, the central region $P_0$ and the second peripheral region $P_2$. Specifically, as the semiconductor integrated circuit ($Q_{11}$, $Q_{12}$, $Q_{13}$, $Q_{14}$, $Q_{15}$), a dual-input differential amplifier with first and second input terminals can be exemplified. That is, the semiconductor integrated circuit ($Q_{11}$, $Q_{12}$, $Q_{13}$, $Q_{14}$, $Q_{15}$), as shown in Figure 24, includes a dual-input differential pair circuit ($Q_{11}$, $Q_{12}$), a current mirror pair circuit ($Q_{13}$, $Q_{14}$), and a constant current source ($Q_{15}$), constituting a differential amplifier. Generally, a differential amplifier may also include an output circuit composed of two active elements. In this case, two of the seven active elements are independently controlled by the potentials of the two potential transfer regions.

The differential pair circuit ($Q_{11}$, $Q_{12}$) comprises a first main electrode region and a second main electrode region. The first n-type active element $Q_{11}$ controls the main current flowing between the first main electrode region and the second main electrode region based on the potential of the first input terminal. The second n-type active element $Q_{12}$ features a third main electrode region and a fourth main electrode region, regulating the main current flowing between the third and fourth main electrode regions according to the potential of the second input terminal. For instance, both the first n-type active element $Q_{11}$ and the second n-type active element $Q_{12}$ can be nMIS transistors, such as n-channel MOSFETs (hereinafter referred to as "nMOSFETs"). As illustrated in Figure 24, the first main electrode region of the first n-type active element $Q_{11}$ and the third main electrode region of the second n-type active element $Q_{12}$ are connected to a common node, maintaining the same potential.

The current mirror pair circuit ($Q_{13}$, $Q_{14}$) consists of a first p-type active element $Q_{13}$ with a fifth main electrode region and a sixth main electrode region, and a second p-type active element $Q_{14}$ with a seventh main electrode region and an eighth main electrode region. The first p-type active element $Q_{13}$ and the second p-type active element $Q_{14}$ can be, for example, pMIS transistors such as p-channel MOSFETs (hereinafter referred to as "pMOSFETs"). The gate of the first p-

type active element $Q_{13}$ and the second p-type active element $Q_{14}$ are both connected to the sixth main electrode region of the first p-type active element $Q_{13}$. The sixth main electrode region of the first p-type active element $Q_{13}$ is also connected to the second main electrode region of the first n-type active element $Q_{11}$, and the eighth main electrode region of the second p-type active element $Q_{14}$ is connected to the fourth main electrode region of the second n-type active element $Q_{12}$.

The constant current source ($Q_{15}$) is composed of the third n-type active element $Q_{13}$, which features a ninth main electrode region and a tenth main electrode region. For instance, the third n-type active element $Q_{13}$ can be an nMIS transistor such as an nMOSFET. The tenth main electrode region of the third n-type active element $Q_{13}$ is connected to the common node where the first main electrode region of the first n-type active element $Q_{11}$ and the third main electrode region of the second n-type active element $Q_{12}$ are interconnected. Additionally, the tenth main electrode region of the third n-type active element $Q_{13}$ is connected to the first power supply (GND), while the fifth main electrode region of the first p-type active element $Q_{13}$ and the seventh main electrode region of the second p-type active element $Q_{14}$ are connected to the second power supply $V_{DD}$, which has a higher potential than the first power supply.

The differential pair circuit ($Q_{11}, Q_{12}$) is shown in Figure 24. It inputs the central region $P_0$ to the first input terminal and inputs the second peripheral region $P_2$ of the hexagonal ring to the first input terminal, detecting the potential difference between the two inputs. The potential difference detected by the differential pair circuit ($Q_{11}, Q_{12}$) is converted into a current difference. The constant current source ($Q_{15}$) adjusts the constant current value by applying the potential $V_{b1}$ from the outside to the gate of the third n-type active element $Q_{13}$ and changing the potential $V_{b1}$. The constant current source ($Q_{15}$) always provides a constant current, enabling the output of signals without waveform and characteristic distortion over a wide voltage range. In the current mirror pair circuit ($Q_{13}, Q_{14}$), when the first p-type active element $Q_{13}$ and the second p-type active element $Q_{14}$ are pMOSFETs, as long as they operate in the saturation region of the pMOSFETs, the same current flows through the first p-type active element $Q_{13}$ and the second p-type active element $Q_{14}$. In the differential pair circuit ($Q_{13}, Q_{14}$), the potential difference between the central region $P_0$ input to the gate of the first n-type active element $Q_{11}$ (i.e., the first input terminal) and the potential of the second peripheral region $P_2$ input to the gate of the second n-type active element $Q_{12}$ (i.e., the second input terminal) is converted into a current difference.

If the potential input to the central region $P_0$ of the gate (i.e., the first input terminal) of the first n-type active element $Q_{11}$ is greater than the potential input to the second peripheral region $P_2$ of the gate (i.e., the second input terminal) of the second n-type active element $Q_{12}$, the current in the path of the first n-type active element $Q_{11}$ increases. The current difference generated by the differential pair circuit ($Q_{13}, Q_{14}$) is output as $V_{out}$. As shown in Figure 24, by inputting the potential of the central region $P_0$ to the gate (i.e., the first input terminal) of the first n-type active element $Q_{11}$, the potential barrier height generated in the channel of the first n-type active element $Q_{11}$ is controlled by the potential of the central region $P_0$ of the voltage generation unit 1c. Furthermore, by inputting the potential of the second peripheral region $P_2$ to the gate (i.e., the second input terminal) of the second n-type active element $Q_{12}$, the potential barrier height generated in the channel of the second n-type active element $Q_{12}$ is controlled by the potential of the second peripheral region $P_2$ of the voltage generation unit 1c.

The potential barrier in the n-type channel of the first n-type active element $Q_{11}$ acts as a barrier to the movement of the main current (electrons) flowing between the first main electrode region and the second main electrode region of the first n-type active element $Q_{11}$. On the other hand, the potential barrier in the n-type channel of the second n-type active element $Q_{12}$ acts as a barrier to the movement of the main current (electrons) flowing between the third main electrode region and the fourth main electrode region of the second n-type active element $Q_{12}$. Although the specific integrated structure is omitted in the illustration, similar to the structure exemplified in the acoustic element and the like of the third embodiment, by using thin plate-shaped connection pads, second input signal wiring, and first input signal wiring, etc., direct connection to the first and second gate connection plugs can be achieved, thereby reducing floating impedance. In addition, due to the stress enhancement structure adopted in the voltage generation portion 1c, high sensitivity and broadband performance are achieved. According to the acoustic element related to the fourth embodiment, high sensitivity and broadband performance can be realized. Specifically, in the internal structure of the voltage generation portion 1c, two specific locations with higher voltage generation are selected as potential transfer regions and used as input transmission locations to the impedance conversion element 2d, thus facilitating the achievement of high sensitivity.

## The Fifth Embodiment

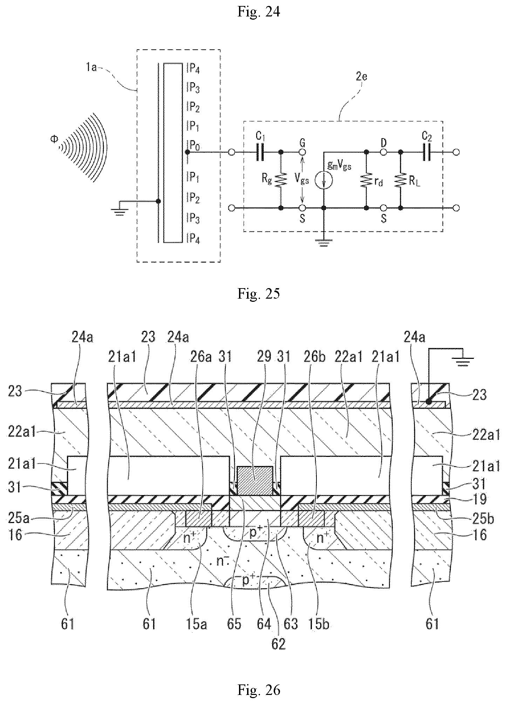

The acoustic element according to the fifth embodiment of the present invention, as shown in Figure 25, includes: a voltage generating unit 1a that generates non-uniform voltage through the piezoelectric effect; and a receiving element $X_{i,j}$ that includes an impedance transforming element 2e that operates with the potential at a specific position (local) of the voltage generating unit 1a as a control voltage. As shown in the cross-sectional view of Figure 26, the voltage generating unit 1a has a vibrator 22a1 similar to the acoustic elements according to the first to fourth embodiments, and a fixed potential electrode 24a that contacts the receiving surface (the upper main surface in Figure 26) of the vibrator 22a1, forming a unimorph structure. The vibrator 22a1 can be entirely composed of piezoelectric materials belonging to 20 crystal point groups as shown in Figure 26, or only the central downward protrusion (stress concentration position) can be selectively composed of 20 piezoelectric materials, while the remaining part is composed of other 12 non-piezoelectric materials in the crystal group (omitted in the figure). Among the 20 crystal point groups, materials such as $HfO_2$, AlN, and PZT belonging to the 10 crystal point groups exhibiting pyroelectricity are suitable as materials for the central downward protrusion (stress concentration position) of the vibrator 22a1.

That is, the voltage generating unit 1a only needs to have a structure in which at least a piezoelectric layer is provided at the stress concentration position of the vibrating body 22a1. Therefore, the impedance transforming element 2e can operate with the potential of a specific local area of the piezoelectric layer provided at least at the downward protrusion (stress concentration position) as a potential transmission area, and use the potential of this potential transmission area as a control voltage. This single piezoelectric crystal type voltage generating unit 1a has a voltage distribution that generates unevenly produced voltage with higher voltage than other positions through piezoelectric effect at a specific position on the output surface (lower main surface in Figure 26) opposite to the receiving surface of the vibrating body 22a1. The "specific position" on the output surface of the vibrating body 22a1 is, for example, the central region $P_0$, the first peripheral region $P_1$, ..., the fourth peripheral region $P_4$ as shown in the schematic model in Figure 25. The central region $P_0$, the first peripheral region $P_1$, ..., the fourth peripheral region $P_4$ in the model representation of Figure 25 are arranged in a concentric hexagonal pattern centered around the central region $P_0$, with the first peripheral region $P_1$, the second peripheral region $P_2$, the third peripheral region $P_3$, and the fourth peripheral region $P_4$ surrounding the central region $P_0$ in a concentric hexagonal pattern.

The impedance transforming element 2e is represented by an equivalent circuit of a junction transistor as an active element. The junction transistor (hereinafter referred to as the "junction active element") constituting the impedance transforming element 2e operates with the potential at the central region $P_0$ of the protrusion on the output surface side of the vibrating body 22a1, as shown in the central part of Figure 26, as a control voltage. That is, the impedance transforming element 2e of the acoustic element according to the fifth embodiment includes a junction active element that inputs the pressure of the ultrasonic wave $\Phi$ applied to the vibrating body 22a1 of the voltage generating section 1a as the potential at the central region $P_0$ and outputs a signal after impedance transformation. Furthermore, the acoustic element according to the fifth embodiment uses the output signal of the junction active element as the output signal of the acoustic element.

Although the illustration is omitted, the protrusion on the output surface side of the vibrator 22a1 of the voltage generating section 1a of the acoustic element according to the fifth embodiment is a regular hexagonal columnar protrusion similar to the one indicated by the two-dot chain line in Figures 1B and 18A. As shown in Figure 26, around the protrusion located in the central part of the output surface side of the vibrator 22a1, a parallel annular vibration cavity 21a1 is arranged symmetrically around the protrusion. The annular structure constituting the vibration cavity 21a1 is a topological structure with a hexagonal planar pattern. In the cross-sectional view representation of Figure 26, it appears that two vibration cavities 21a1 are located on both sides of the central protrusion, but in reality, they are an integrated structure that is continuous on both the front and back sides of the paper surface.

The junction active element of the impedance conversion element 2e of the acoustic element according to the fifth embodiment, as shown in Figure 26, includes: a base region 61 composed of a semiconductor region of the first conductivity type ($n^-$-type); a first main electrode region 15a and a second main electrode region 15b, which are spaced apart from each other on the base region 61 and are composed of semiconductor regions of the first conductivity type ($n^+$-type) with a higher impurity density than the base region 61. In addition, the junction active element constituting the impedance conversion element 2e has a surface control electrode region 63 composed of semiconductor regions of the second conductivity type ($p^+$-type) forming a p-n junction with the base region 61, located in the upper part of the base region 61 between the first main electrode region 15a and the second main electrode region 15b. And below the surface control electrode region 63, opposite the base region 61, an auxiliary control electrode region 62 composed of semiconductor regions of the second conductivity type ($p^+$-type) defining a channel region between the first main electrode region 15a and the second main electrode region 15b is defined. Furthermore, the junction active element constituting the impedance conversion element 2e includes a control electrode 64 metallurgically connected to the potential generation position $P_0$, which controls the potential barrier height of carrier movement generated in the channel by the potential of the potential generation position $P_0$.

Although the plan view is omitted, around the base region 61, the element isolation insulating film 16 is arranged in a frame shape to define the range of the active region of the junction-type active element. In the cross-sectional representation of Figure 26, the element isolation insulating film 16 is located on both sides of the active region. However, similar to the structures of the acoustic elements according to the first and second embodiments, the element isolation insulating film 16 located on both sides of the active region is an integrated structure that is continuous on both the front and back sides of the paper. Inside the active region pattern surrounded by the element isolation insulating film 16, the region on the upper surface of the base region 61 is defined. On the upper part of the active region surrounded by the element isolation insulating film 16, the first main electrode region 15a and the second main electrode region 15b are provided.

Similar to the planar views in Figures 1B and 18A, where the range of the hexagonal potential transfer area is indicated by a two-dot chain line, for the hexagonal potential transfer area defined by the protrusion on the output surface side of the vibrating body 22a1, the channel of the junction active element is formed within a rectangular area sandwiched between the first main electrode region 15a and the second main electrode region 15b, and is formed between the surface control electrode region 63 and the auxiliary control electrode region 62. Within the semiconductor region serving as the active area, the potential barrier height for carrier movement generated in the channel between the first main electrode region 15a and the second main electrode region 15b, where the active element is bonded, is controlled electrostatically by the potential conducted from the potential conduction region of the vibrating body 22a1 to the control electrode 64 through this p-n junction, between the surface control electrode region 63 and the base region 61.

As shown in Figure 26, an interlayer insulating film is provided on the first main electrode region 15a and the second main electrode region 15b. Through contact holes opened in the interlayer insulating film, the first main electrode region 15a is connected to the first main electrode wiring 25a, and the second main electrode region 15b is connected to the second main electrode wiring 25b. As shown in Figure 26, an input signal wiring 65 composed of a conductor is provided on the control electrode 64. As shown in Figure 26, a connection plug 29 of a multi-layer structure conductor with a soft metal surface layer is buried from the front end side of the central protrusion on the output surface side of the vibrator 22a1, so that the flat surface serves as a connection end face, and the vibrator 22a1 and the connection plug 29 are in ohmic contact. Furthermore, the lower surface (i.e., the connection end face) of the connection plug 29 is in physical contact with the upper surface of the input signal wiring 65, so that the potential of the central region $P_0$ of the voltage generating portion 1a is input as a control voltage for the junction active element constituting the impedance conversion element 2e.

That is, the potential of the connection plug 29 is input to the control electrode 64 through the input signal wiring 65, and the potential of the control electrode 64 controls the potential barrier height of carrier movement generated in the channel between the first main electrode region 15a and the second main electrode region 15b through the p-n junction between the surface control electrode region 63 and the base region 61. The structure shown in Figure 26 is an example of a structure in which the connection plug 29 of the voltage generation unit side chip located on the upper side and the input signal wiring 65 of the impedance conversion element side chip located on the lower side are in physical contact with each other. Therefore, around the vibration cavity 21a1, the direct bonding insulating film 31 with a mirror surface provided on the voltage generation unit side chip and the cavity inner wall protective film 19 with a mirror surface provided on the impedance conversion element side chip are directly bonded through hydrophilic bonding (hydrogen bonding between silanol groups). In the acoustic element according to the fifth embodiment, by using a thin plate-shaped input signal wiring 65, the connection plug 29 can be connected to the control electrode 64, thereby reducing the floating impedance. In addition, since the voltage generation unit 1a adopts a stress enhancement structure, high sensitivity and broadband performance are achieved. According to the acoustic element according to the fifth embodiment, high sensitivity and broadband performance can be achieved. Specifically, by microscopic research on the internal structure of the voltage generation unit 1a, a specific position with the highest voltage generation is selected as a potential transfer region and used as an input transmission position to the impedance conversion element 2e, thus facilitating high sensitivity.

**Other Embodiments**

As mentioned above, although the first to fifth embodiments have been exemplified, it should be understood that the discussion and drawings constituting a part of this disclosure are not intended to limit the invention. From this disclosure, those skilled in the art will be clear about various alternative embodiments, examples, and operational techniques. For instance, in the acoustic elements discussed in the first to fifth embodiments, the focus has been primarily on the receiving element. However, the technical concept of the present invention is not limited to the receiving element. By adding a driving electrode required for voltage driving of the piezoelectric layer through the piezoelectric effect in the structure of the acoustic elements discussed in the first to fifth embodiments, it can also function as a transceiving element.

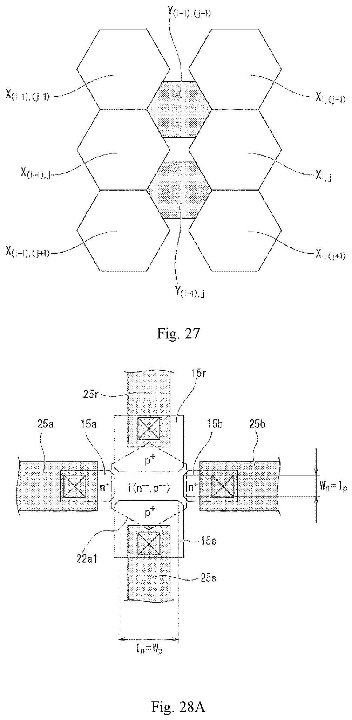

Alternatively, as shown in Figure 27, the acoustic element integrated circuit involved in other embodiments can mix dedicated receiving unit cells with dedicated transmitting unit cells that are configured independently from the receiving unit cells, to form a two-dimensional array. In Figure 27, between the (i-1)th column of receiving unit cells $X_{(i-1), (j-1)}$, $X_{(i-1), j}$, $X_{(i-1), (j+1)}$, ..., and the i-th column of receiving unit cells $X_{i, (j-1)}$, $X_{i, j}$, $X_{i, (j+1)}$, ..., there are arranged the (i-1)th column of transmitting unit cells $Y_{(i-1), (j-1)}$, $Y_{(i-1), j}$, ..., which are displayed in gray. The receiving unit cells $X_{(i-1), (j-1)}$, $X_{(i-1), j}$, $X_{(i-1), (j+1)}$, ..., can adopt any structure of acoustic elements involved in the first to fifth embodiments. The transmitting unit cells $Y_{(i-1), (j-1)}$, $Y_{(i-1), j}$, ..., can adopt a structure with driving electrodes that drive known piezoelectric layers through the piezoelectric effect.

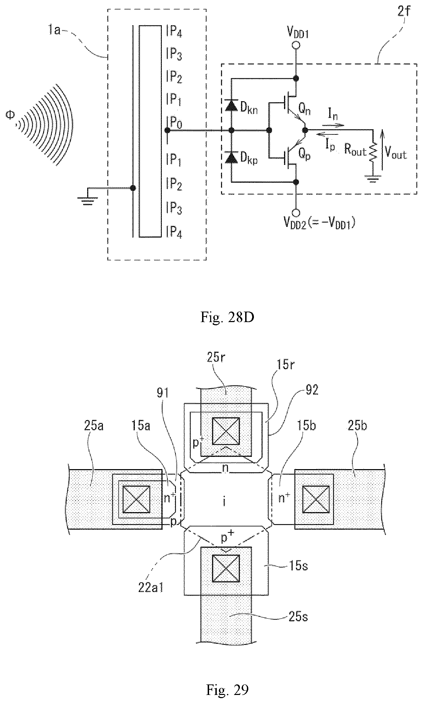

In addition, the impedance conversion element described in the acoustic elements according to the first to fifth embodiments is merely an example and does not limit the scope of application of the present invention. For instance, an acoustic element may also include a semiconductor integrated circuit as the impedance conversion element 2f, as shown in Figure 28A. Specifically, as an acoustic element according to another embodiment, it can be exemplified as a case where a voltage generation section 1a, which generates a non-uniform voltage through the piezoelectric effect, as shown in Figure 28D, and a "positive complementary element circuit" that operates by inputting a potential that vibrates a specific position (local) of the voltage generation section 1a in both positive and negative directions as a control voltage, are included as the impedance conversion element 2f. It should be noted that the circuit configuration when including the "positive complementary element circuit" shown in Figure 28A as the impedance conversion element 2f is merely an example and is not limited to the circuit topology shown in Figure 28D. The positive complementary element circuit has four terminals for defining the main current. The circuit connecting the four terminals of the positive complementary element circuit is arbitrary, and can be various circuit configurations such as a circuit configuration similar to a common CMOS inverter. Although the cross-sectional view is omitted, similar to the cross-sectional view shown in Figure 18B, the voltage generation section 1a shown in Figure 28D has a vibrator 22a1 similar to the acoustic element according to the first embodiment and a fixed potential electrode 24a that contacts the receiving surface (the upper main surface similar to the structure shown in Figure 18B) of the vibrator 22a1, forming a unimorph structure.

On the fixed potential electrode 24a of the voltage generation unit 1a shown in Figure 28D, similarly to the structures of the acoustic elements according to the first to fifth embodiments, a fixed potential electrode protective film 23, such as epoxy resin, is provided. Due to the non-uniform voltage distribution of the voltage generation unit 1a with a unimorph structure, a higher voltage is generated at a specific position on the output surface (the surface opposite to the receiving surface) of the vibrating body 22a1 facing the receiving surface, through the piezoelectric effect, compared to other positions. In the model representation of Figure 28D, the central region $P_0$, the first peripheral region $P_1$, ..., and the fourth peripheral region $P_4$ are arranged in a concentric hexagonal pattern centered around the central region $P_0$, with the first peripheral region $P_1$, the second peripheral region $P_2$, the third peripheral region $P_3$, and the fourth peripheral region $P_4$ surrounding the central region $P_0$ in a concentric hexagonal pattern.

The impedance conversion element 2f in other embodiments involves a complementary element circuit consisting of an n-channel insulated gate SIT as the active element $Q_n$ and a p-channel insulated gate SIT as the active element $Q_p$. Their channels are shared, and the carrier movement direction in the channels is orthogonal, forming a channel-crossing complementary MIS integrated circuit. In the circuit configuration shown in Figure 28D, the first main electrode region 15a of the n-channel active element $Q_n$ is connected to the first power supply (GND) through the output resistor $R_{out}$, and the second main electrode region 15b of the n-channel active element $Q_n$ is connected to the second power supply $V_{DD1}$, which has a higher potential than the first power supply. On the other hand, the third main electrode region 15r of the p-channel active element $Q_p$ is connected to the first power supply through the output resistor $R_{out}$, and the fourth main electrode region 15s of the p-channel active element $Q_p$ is connected to the third power supply $V_{DD2}$ ($= -V_{DD1}$), which has a lower potential than the first power supply. The n-channel active element $Q_n$ and the p-channel active element $Q_p$ that constitute the complementary element circuit of the impedance conversion element 2f operate similarly to the cross-sectional structures shown in Figure 18B and Figure 18C, using the potential of the first peripheral region $P_0$ on the output surface side of the vibrating body 22a1 as a common control voltage. That is, the complementary element circuit of the impedance conversion element 2f includes the n-channel active element $Q_n$ and the p-channel active element $Q_p$, which input the pressure of the ultrasonic wave $\Phi$ applied to the vibrating body 22a1 of the voltage generation unit 1a into a common cross-channel as the potential input of the first peripheral region $P_0$, and output the signal after impedance conversion. Furthermore, the complementary element circuit of the acoustic element in other embodiments uses the output signals of the n-channel active element $Q_n$ and the p-channel active element $Q_p$ as the output signals of the acoustic element.

The n-channel active element $Q_n$ comprises: a body region 14, consisting of an intrinsic semiconductor region (i-layer) or a high-resistivity semiconductor region (n$^{---}$-layer, p$^{---}$-layer) close to the intrinsic semiconductor; a first main electrode region 15a and a second main electrode region 15b, which are spaced apart from each other and located in the upper part of the body region 14, and are composed of a semiconductor region of the second conductivity type (n$^+$-type). Similarly, the p-channel active element $Q_p$ includes a body region 14 shared with the n-channel actiVe element $Q_n$, as well as a third main electrode region 15r and a fourth main electrode region 15s, which are spaced apart from each other and located in the upper part of the body region 14, and are composed of a semiconductor region of the first conductivity type (p$^+$-type). As shown in Figure 28A, the direction of carrier movement from the first main electrode region 15a to the second main electrode region 15b is orthogonal to the direction of carrier movement from the third main electrode region 15r to the fourth main electrode region 15s. For example, when the body region 14 is Si, even if the body region 14 is an n$^-$-layer with an impurity density of approximately $2 \times 10^{14}$ cm$^{-3}$, it is possible to substantially deplete the body region 14 in a state where the depletion layers extending from the opposing third main electrode region 15r and fourth main electrode region 15s are about to pinch off each other. Similarly, even if the body region 14 is a p-layer, it is possible to substantially deplete the body region 14 in a state where the depletion layers extending from the opposing first main electrode region 15a and second main electrode region 15b are about to pinch off each other.

A common MIS interface region is formed on the upper surface of the body region 14 between the first main electrode region 15a and the second main electrode region 15b of the n-channel active element $Q_n$, as well as on the upper surface of the body region 14 between the third main electrode region 15r and the fourth main electrode region 15s of the p-channel active element $Q_p$. Although the cross-sectional view is omitted, each of the n-channel active element $Q_n$ and the p-channel active element $Q_p$ has a cross-sectional structure similar to that shown in Figure 18B, including a common gate dielectric film with a wider bandgap than the body region 14, which contacts the common MIS interface region between the first main electrode region 15a and the second main electrode region 15b, as well as between the third main electrode region 15r and the fourth main electrode region 15s. Additionally, a common control electrode is provided on the common gate dielectric film. In the case of the n-channel active element $Q_n$ and the p-channel active element $Q_p$ with a common gate dielectric film, excessive gate voltage may cause insulation breakdown of the common gate dielectric film, posing a problem. Therefore, as shown in Figure 28D, a positive voltage clamp diode $D_{kn}$ is connected between the common control electrode of the n-channel active element Qn and the p-channel active element $Q_p$ and the second power supply $V_{DD1}$, and a negative voltage clamp diode $D_{kp}$ is connected between the common control electrode and the third power supply $V_{DD2}$. By connecting the positive voltage clamp diode $D_{kn}$ and the negative voltage clamp diode $D_{kp}$ to the common control electrode, the configuration is designed to prevent excessive gate voltage from being applied to the common gate dielectric film. It should be noted that, similar to the structure of the acoustic element according to the first embodiment, it is also possible to bond the common MIS interface region heterogeneously to the columnar end protruding from the output surface of the vibrating body 22a1 without using a common gate dielectric film or a common control electrode.

Around the base region forming the cross-shaped channel, an element isolation insulating film is arranged in a frame-like shape to define the range of the active regions for the n-channel active element $Q_n$ and the p-channel active element $Q_p$. Inside the active region pattern surrounded by the element isolation insulating film, the region on the upper surface of the base region is defined. Near the upper surface (surface) of the active region surrounded by the element isolation insulating film, the first main electrode region 15a, the second main electrode region 15b, the third main electrode region 15r, and the fourth main electrode region 15s are arranged to form a rectangular shape. In the center of Figure 28A, the range of the hexagonal potential transfer region is indicated by a two-dot chain line. For the hexagonal potential transfer region defined by the protrusion on the output surface side of the vibrator 22a1, the n-type channel of the n-channel active element $Q_n$ is formed near the surface of the rectangular region sandwiched between the first main electrode region 15a and the second main electrode region 15b. The protrusion on the output surface side of the vibrator 22a1 is a hexagonal columnar protrusion as indicated by the two-dot chain line in Figure 28A. Similar to the cross-sectional structure shown in Figure 18B and others, around the protrusion provided in the central part of the output surface side of the vibrator 22a1, a parallel annular vibration cavity 21a1 is arranged in a centrally symmetric manner around the protrusion. The parallel annular structure constituting the vibration cavity 21a1 is a topological structure with a hexagonal planar pattern. For the hexagonal potential transfer region defined by the protrusion, the p-type channel of the p-channel active element $Q_p$ is formed near the surface of the rectangular region shared with the n-channel active element $Q_n$, sandwiched between the third main electrode region 15r and the fourth main electrode region 15s.

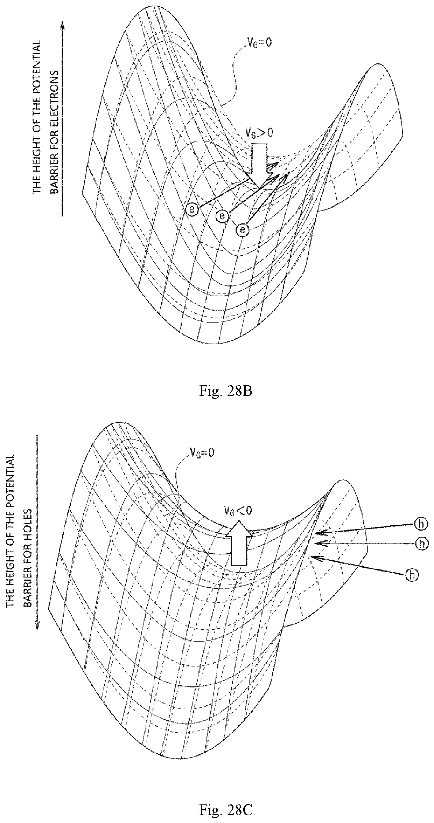

Within the active region, the potential barrier height for electron movement in the n-type channel between the first main electrode region 15a and the second main electrode region 15b of the n-channel active element $Q_n$ is controlled by utilizing the electrostatic induction effect of the potential of the potential transfer region of the vibrating body 22a1, as shown in Figure 28B. The saddle-shaped hyperbolic paraboloid (conic surface) indicated by the dashed line in Figure 28B represents the potential distribution at the conduction band edge (bottom) when the potential $V_G$ of the central region $P_0$ of the voltage generating section 1a is 0. The downward convex potential distribution formed by the p-i-p hook structure between the third main electrode region 15r and the fourth main electrode region 15s intersects and overlaps with the upward convex potential distribution formed by the n-i-n hook structure between the first main electrode region 15a and the second main electrode region 15b, forming a cross-curved surface. The stationary point of the conic surface of the cross-curved surface shown in Figure 28B, namely the saddle point, is defined as the potential barrier height for electrons. The saddle point is at its maximum in the direction of the n-i-n hook structure of the n-channel active element $Q_n$, but at its minimum in the direction of the p-i-p hook structure of the p-channel active element $Q_p$. The saddle-shaped conic surface indicated by the solid line in Figure 28B represents the potential distribution at the conduction band edge (bottom) when vibrating on the side where the potential $V_G$ of the central region $P_0$ of the voltage generating section 1a is greater than 0. When vibrating on the side where $V_G$ is greater than 0, the saddle point potential of the cross-curved surface of the p-i-p hook structure and n-i-n hook structure decreases due to the electrostatic induction effect. Therefore, electrons determined by Fermi-Dirac distribution with energy exceeding the potential barrier shown in Figure 28B flow between the first main electrode region 15a and the second main electrode region 15b. As a result, current $I_n$ flowing according to changes in potential barrier height dependent on $V_G<0$ vibration flows in the output resistance Rout shown in Figure 28D.

Similarly, within the active region, the potential barrier height for the movement of holes generated in the p-type channel between the third main electrode region 15r and the fourth main electrode region 15s of the p-channel active element $Q_p$ is controlled by utilizing the electrostatic induction effect of the potential of the potential transfer region of the vibrator 22a1, as shown in Figure 28C. The saddle-shaped quadric surface indicated by the dashed line in Figure 28C represents the potential distribution at the valence band edge (top) when the potential $V_G$ of the central region $P_0$ of the voltage generating section 1a is 0. The downward convex potential distribution formed by the p-i-p hook structure between the third main electrode region 15r and the fourth main electrode region 15s intersects with the upward convex potential distribution formed by the n-i-n hook structure between the first main electrode region 15a and the second main electrode region 15b, forming a cross-shaped curved surface. The stationary point of the quadric surface of the cross-shaped curved surface in Figure 28C, namely the saddle point, is defined as the potential barrier height for holes. The "valley" point of the p-i-p hook structure is the highest "peak" in the direction of the ridge line of the n-i-n hook structure.

The saddle-shaped quadric surface indicated by the solid line in Figure 28C represents the potential distribution of the valence band edge when the central region $P_0$ of the voltage generating unit 1a vibrates on the $V_G<0$ side. The direction of measuring the electron potential barrier height is opposite to that of measuring the hole potential barrier height. When vibrating towards the $V_G<0$ side, the hole potential barrier height defined by the saddle point of the intersecting surfaces of the p-i-p hook structure and the n-i-n hook structure decreases due to electrostatic induction effects. Therefore, holes determined by the Fermi-Dirac distribution with energy exceeding the potential barrier energy shown in Figure 28C flow between the third main electrode region 15r and the fourth main electrode region 15s. As a result, a current Ip, which varies depending on the potential barrier height associated with $V_G>0$ vibrations, flows in the output resistance Rout shown in Figure 28D.

As illustrated in Figure 4C, when the fixed potential electrode 24a is connected to the ground potential (GND), the central voltage $V_{p0}$, the first peripheral voltage $V_{P1}$, the second peripheral voltage $V_{P2}$, the third peripheral voltage $V_{P3}$, and the fourth peripheral voltage $V_{P4}$ of the voltage generation unit 1a each exhibit a vibration waveform that oscillates in both positive and negative directions centered around 0V. As shown in Figure 28D, since the common control electrode of the n-channel active element $Q_n$ and the p-channel active element $Q_p$ is connected to the potential generation position $P_0$, the potential barrier height for carrier (electron) movement in the n-type channel defined between the first main electrode region 15a and the second main electrode region 15b of the n-channel active element $Q_n$ is controlled by the electrostatic induction effect of potentials oscillating in both positive and negative directions. Additionally, due to the common control electrode being connected to the potential generation position $P_0$, the potential barrier height for carrier (hole) movement in the p-type channel defined between the third main electrode region 15r and the fourth main electrode region 15s of the p-channel active element $Q_p$, which is orthogonal to the n-type channel, is also controlled by the electrostatic induction effect of potentials oscillating in both positive and negative directions.

Similar to the cross-sectional structure shown in Figure 18B and others, interlayer insulating films are provided on the first main electrode region 15a, the second main electrode region 15b, the third main electrode region 15r, and the fourth main electrode region 15s. Through contact holes opened in the interlayer insulating films, the first main electrode region 15a is connected to the first main electrode wiring 25a, and the second main electrode region 15b is connected to the second main electrode wiring 25b. Through contact holes opened in the interlayer insulating films, the third main electrode region 15r is connected to the third main electrode wiring 25r, and the fourth main electrode region 15s is connected to the fourth main electrode wiring 25s. In addition, similar to the cross-sectional structure shown in Figure 18B and others, a common input signal wiring composed of a conductor is provided on the common control electrode, but it is omitted in Figure 28A. Corresponding to the positive voltage clamp diode $D_{kn}$ in the equivalent circuit representation of Figure 28D, a p-n junction diode composed of a $p^+$-type anode region and an n-type cathode region is arranged. Similarly, corresponding to the negative voltage clamp diode $D_{kp}$ in Figure 28D, a p-n junction diode composed of a $p^+$-type anode region and an n-type cathode region is arranged.

The n-channel active element $Q_n$ and p-channel active element $Q_p$ of the positive complementary element circuit shown in Figure 29 are similar to those of the positive complementary element circuit shown in Figure 28A in terms of using a common substrate region composed of an intrinsic semiconductor region (i⁻layer) or a high-resistivity semiconductor region (n⁻⁻layer, p⁻⁻layer) close to the intrinsic semiconductor. However, the positive complementary element circuit shown in Figure 29 embeds the first base region 91 of the first conductivity type (p-type) and the second base region 92 of the second conductivity type (n-type) spaced apart from the first base region 91 into the upper part of the common substrate region, respectively. Additionally, the first main electrode region 15a of the n-channel active element $Q_n$ of the positive complementary element circuit shown in Figure 29 is embedded in the upper part of the first base region 91. Similarly, the third main electrode region 15r of the p⁻channel active element $Q_p$ of the positive complementary element circuit shown in Figure 29 is embedded in the upper part of the second base region 92. Moreover, in the upper part of the base region, a second main electrode region 15b of the second conductivity type ($n^+$-type) is spaced apart from the first main electrode region 15a, and a fourth main electrode region 15s of the first conductivity type ($p^+$-type) is spaced apart from the third main electrode region 15r. In the planar layout shown in Figure 29, the direction of carrier movement from the first main electrode region 15a to the second main electrode region 15b via the first base region 91 is orthogonal to the direction of carrier movement from the third main electrode region 15r to the fourth main electrode region 15s via the second base region 92.

In the positive complementary element circuit shown in Figure 29, an electric potential barrier for electron movement is generated in the first base region 91, which is immediately adjacent to the first main electrode region 15a, between the first main electrode region 15a and the second main electrode region 15b of the n-channel active element $Q_n$. By establishing the first base region 91 to form an n-p-i-n hook structure, the electric potential barrier for electron movement is made higher than that in the structure shown in Figure 28A, thereby enhancing the withstand voltage between the first main electrode region 15a and the second main electrode region 15b. Similarly, an electric potential barrier for hole movement is generated in the second base region 92, which is immediately adjacent to the third main electrode region 15r, between the third main electrode region 15r and the fourth main electrode region 15s of the p-channel active element $Q_p$.

By establishing the second base region 92 to form a p-n-i-p hook structure, the electric potential barrier for hole movement is made higher than that in the structure shown in Figure 28A, thereby enhancing the withstand voltage between the third main electrode region 15r and the fourth main electrode region 15s.

The upper surface of the body region between the first main electrode region 15a and the second main electrode region 15b of the n-channel active element $Q_n$, and the upper surface of the body region between the third main electrode region 15r and the fourth main electrode region 15s of the p-channel active element $Q_p$ form a common MIS interface region. Although the illustration of the cross-sectional view is omitted, each of the n-channel active element $Q_n$ and the p-channel active element $Q_p$ has a cross-sectional structure similar to that shown in Figure 18B, including a common gate dielectric film with a wider bandgap width than the body region, which contacts the common MIS interface region between the first main electrode region 15a and the second main electrode region 15b, and between the third main electrode region 15r and the fourth main electrode region 15s, and a common control electrode disposed on the common gate dielectric film. In the center of Figure 29, a hexagonal potential transfer region defined by protrusions on the output surface side of the vibrating body is indicated by a two-dot chain line, but the pattern of the common control electrode does not coincide with the two-dot chain line region. The common control electrode is formed in a planar pattern that covers at least the first base region 91 and the second base region 92 above which a potential barrier is formed.

Moreover, the potential barrier height for electron movement generated in the first base region 91 adjacent to the first main electrode region 15a is controlled by the electrostatic induction effect of the potential of the common control electrode electrically connected to the potential transfer region. Similarly, the potential barrier height for hole movement generated in the second base region 92 adjacent to the third main electrode region 15r is controlled by the electrostatic induction effect of the potential of the common control electrode. Similar to the quadric surfaces shown in Figures 28B and 28C, the downward convex potential distribution of the p-n-i-p hook structure formed between the third main electrode region 15r and the fourth main electrode region 15s intersects and overlaps with the upward convex potential distribution of the n-p-i-n hook structure formed between the first main electrode region 15a and the second main electrode region 15b, forming a saddle-shaped intersection surface.

That is, the stationary points of the quadric surfaces, which are similar to the shapes shown in Figures 28B and 28C, and are known as saddle points, are defined as the potential barrier heights for electrons and holes in the positive complementary element circuit depicted in Figure 29. In the layout shown in Figure 29, the position of the saddle points differs from the shapes depicted in Figures 28B and 28C, exhibiting asymmetric positions. The saddle point is the maximum point near the first base region 91 in the direction of the n-p-i-n hook structure of the n-channel active element $Q_n$, but it is the minimum point near the second base region 92 in the direction of the p-n-i-p hook structure of the p-channel active element $Q_p$. When vibrating towards the $V_G > 0$ side, the saddle point potentials of the intersecting surfaces of the p-n-i-p hook structure and the n-p-i-n hook structure decrease due to electrostatic induction effects. Therefore, electrons determined by Fermi-Dirac distribution with energy exceeding the potential barrier flow from the first main electrode region 15a to the second main electrode region 15b through the first base region 91, and current flows according to changes in potential barrier height dependent on $V_G < 0$ vibration.

The direction of measuring the electron potential barrier height is opposite to that of measuring the hole potential barrier height. When vibrating towards the $V_G < 0$ side, the hole potential barrier height defined by the saddle point of the intersection surface of the p-n-i-p hook structure and the n-p-i-n hook structure decreases due to electrostatic induction effects. Therefore, holes determined by Fermi-Dirac distribution with energy exceeding the potential barrier flow from the third main electrode region 15r to the fourth main electrode region 15s through the second base region 92, and current flows according to the change in potential barrier height dependent on $V_G > 0$ vibration.

As mentioned earlier, the voltage generating unit can be any structure that constitutes a continuous vibrator capable of generating a stress field with stress concentration points, and that includes at least a piezoelectric body at the stress concentration points of the vibrator used as the potential transfer area. In the descriptions of the acoustic elements according to the first to fifth embodiments mentioned above, examples were given of cases where the entire vibrator is composed of piezoelectric bodies. However, it is also possible to have only the central protrusion, which serves as the stress concentration point, composed of piezoelectric bodies, while the remaining flat plate-shaped parts are composed of non-piezoelectric bodies. Alternatively, it is also possible to have only the central protrusion, which serves as the stress concentration point, composed of ferroelectric bodies, while the remaining flat plate-shaped parts are composed of thermoelectric bodies (polar crystals), ferroelectric bodies, or ordinary piezoelectric bodies that are not thermoelectric or non-piezoelectric bodies. In addition, it is also possible to have only the central protrusion, which serves as the stress concentration point, composed of thermoelectric bodies (polar crystals), while the remaining flat plate-shaped parts are composed of piezoelectric bodies with weaker polarity or non-piezoelectric bodies. It should be noted that since the stress concentration points depend on the stress distribution enhancement structure, it is important to note that the central protrusion is not the only stress concentration point. Furthermore, when there are multiple stress concentration points and multiple positions are used as potential transfer areas, it is sufficient to arrange at least a structure with piezoelectric bodies at positions corresponding to multiple potential transfer areas.

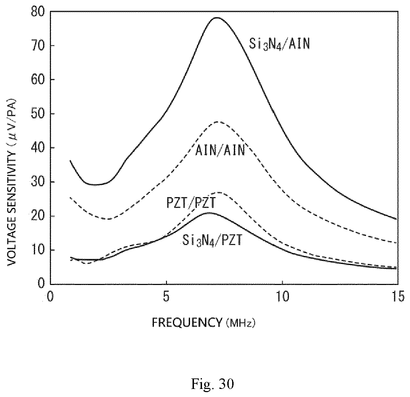

The upper dashed line in Figure 30 represents the sensitivity curve of the central voltage $V_{P0}$ in the case where the parallel ring structure of the vibrating body is entirely made of the thermoelectric material AlN. The lower dashed line represents the sensitivity curve of the central voltage $V_{P0}$ in the case where the parallel ring structure of the vibrating body is entirely made of the ferroelectric material PZT. Both curves depict the aspect ratio H/D=1, where H is the height of the central protrusion and D is the diameter. Specifically, the upper dashed line illustrates the frequency dependence of voltage sensitivity in the case of a uniform AlN/AlN structure with a central column (protrusion) diameter D=1.2$\mu$m and a flat film portion thickness $t_{22a1}$=1.2$\mu$m. In this uniform AlN/AlN structure, the peak frequency of the sensitivity curve is 7.1MHz, and the maximum voltage sensitivity of the central voltage $V_{P0}$ is approximately 47.54$\mu$V/Pa. On the other hand, the upper solid line in Figure 30 represents the frequency dependence of voltage sensitivity in the case of a $Si_3N_4$/AlN composite structure where the central column (protrusion) is solely made of thermoelectric AlN with a diameter D=1.2$\mu$m, and the flat film portion is made of a $Si_3N_4$ film with a thickness $t_{22.1}$=1.2$\mu$m. The aspect ratio H/D of the $Si_3N_4$/AlN composite structure is also 1.

Due to the $\alpha$ phase of the $Si_3N_4$ film being of the trigonal system and the $\beta$ phase being of the hexagonal system, based on the properties of crystal groups, it is considered a dielectric film with piezoelectricity. However, the piezoelectricity of the $Si_3N_4$ film depends on the film formation method. For instance, it exhibits piezoelectricity in the case of laser-induced CVD (LICVD) method, but in many cases, the piezoelectricity of the $Si_3N_4$ film is relatively small. The piezoelectricity of the $Si_3N_4$ film was ignored in the simulation shown in Figure 30. In the case of the $Si_3N_4$/AlN composite structure, the peak frequency of the sensitivity curve is 7.1 MHz. In the case of the $Si_3N_4$/AlN composite structure, the maximum voltage sensitivity of the central voltage $V_{P0}$ is approximately 77.5 $\mu$V/Pa, and the voltage sensitivity increases by approximately 1.6 times. It can be considered that the lateral piezoelectric effect of the $Si_3N_4$ film is added to the longitudinal piezoelectric effect of AlN.

The lower dashed line in Figure 30 represents the frequency dependence of voltage sensitivity in the case of a PZT/PZT uniform structure with a diameter D=2.4$\mu$m for the central pillar (convex part) and a thickness $t_{22a1}$=2.4$\mu$m for the flat plate-shaped membrane part outside the central convex part. Compared to the AlN/AlN uniform structure shown by the upper dashed line, the lower dashed line exhibits a lower maximum voltage sensitivity of approximately 26.6$\mu$V/Pa due to the larger diameter D of the central pillar (convex part), which is lower than that of the AlN/AlN uniform structure. Additionally, since the vertical axis in Figure 30 represents voltage sensitivity, the difference in relative permittivity between AlN and PZT is believed to affect the reduction in maximum voltage sensitivity. The peak frequency in the case of the PZT/PZT uniform structure is 7.1MHz, which is basically the same as that of the AlN/AlN uniform structure. On the other hand, the lower solid line represents the frequency dependence of voltage sensitivity in the case of a $Si_3N_4$/PZT composite structure with a diameter D=1.8$\mu$m for the central pillar (convex part) and a thickness $t_{22a1}$=1.2$\mu$m for the flat plate-shaped membrane part made of $Si_3N_4$. The aspect ratio H/D of the $Si_3N_4$/PZT composite structure is also 1. In the case of the $Si_3N_4$/PZT composite structure, even though the diameter D of the central pillar (convex part) is smaller than that of the PZT/PZT uniform structure, the maximum voltage sensitivity of the central voltage $V_{P0}$ is approximately 20.5$\mu$V/Pa, which is reduced by approximately 0.77 times. In the case of the $Si_3N_4$/PZT composite structure, the peak frequency shifts slightly to the lower frequency side at 6.8MHz. In the case of the $Si_3N_4$/PZT composite structure, it is believed that the lateral piezoelectric effect of the $Si_3N_4$ film acts in the direction of reducing the longitudinal piezoelectric effect of PZT, but it can be seen that even with a composite structure made of a flat $Si_3N_4$ film, it is still possible to constitute a vibrator.

Even when the entire vibrator is composed of PZT, it is still possible to enhance the piezoelectric effect at stress concentration points by adjusting the composition of lead zirconate (PbZrO3) in mixed-crystal PZT, thereby distributing the piezoelectric constant of PZT according to the vibrator's structural location. This allows for the construction of a vibrator exhibiting non-uniform piezoelectric effects. Alternatively, materials such as PZT-4, PZT-5, PZT-5A, PZT-5H, and PZT-8 can be used selectively based on location, with PZT-5H being employed at stress concentration points, for instance. By modifying the flow rates of raw material gases during the CVD process, it is possible to alter the composition of lead zirconate in PZT along the thickness direction.

In addition, in the acoustic element structure according to the modified example of the second embodiment shown in Figure 18C, when the central protrusion is composed of AlN, the capacitance on the central protrusion side is smaller compared to the case where the central protrusion is composed of PZT. As can be seen from the equivalent circuit shown in Figure 3A, the gate voltage of the driving MIS transistor depends on the capacitance ratio between the capacitance $C_d$ on the central protrusion side and the gate capacitance of the MIS transistor shown in the lower part of Figure 3A. Therefore, combined with the effect of the sensitivity curve shown in Figure 30, in the acoustic element and other structures according to the modified example of the second embodiment, the case where the central protrusion is composed of AlN is more advantageous than the case where the central protrusion is composed of PZT.

As mentioned in the previous section, as examples of other embodiments, the present invention is not limited to the descriptions of the first to fifth embodiments. Various modifications can be made, and these modifications are also included within the technical scope of the present invention. Therefore, the technical scope of the present invention is determined solely by the specific matters of the invention covered by the reasonable scope of patent claims in the above description.

**Explanation of Reference Designations**

1a, 1b, 1c... Voltage generation section; 2b, 2c, 2d, 2e, 2f... Impedance transformation element; $11_{sa1}$, $11_{sa2}$... Silicon substrate; 13... Gate dielectric film; 13h... Buffer layer; 13n... First gate dielectric film; 13p... Second gate dielectric film; 14, 51, 61... Base region; 15a... First main electrode region; 15b... Second main electrode region; 15c... Fourth main electrode region; 15d... Third main electrode region; 16... Element isolation insulating film; 17... Interlayer insulating film (first interlayer insulating film); 17c... Channel protection insulating film; 17p... First insulating film; 19, 19c... Hole inner wall protective film; 1a, 1b, 1c... Voltage generation section; 21a1, 21a2, 21e, 21f... Vibration cavity; 22a1, 22a2, 22d, 22e, 22e2, 22f... Vibration body (at least a part of which is a piezoelectric layer); 23... Fixed potential electrode protective film; 24, 24a, 24e... Fixed potential electrode; 25a... First main electrode wiring; 25b... Second main electrode wiring; 25c... Output signal wiring; 25d... Third main electrode wiring; 27... Sacrificial layer; 27p... Material layer for sacrificial layer; 28... Liquid introduction hole; 29, $29_{pil}$... Connection plug; 31... Direct bonding insulating film; 31p... Second insulating film; 35... Second power supply side diode wiring; 36... First power supply side diode wiring; 37, 64... Control electrode; 37n... First control electrode; 37p... Second control electrode; 38, 65... Input signal wiring; 38n... First gate connection plug; 38p... Second gate connection plug; 38p... Second conductor film; 39, 46... First input signal wiring; 41, 43... Cathode region; 41a... First contact plug; 41b... second contact plug; 41c... third contact plug; 42, 44... anode region; 45, 47... second input signal wiring; 48... connection pad; 52... well region; 53... second interlayer insulating film; 62... auxiliary control electrode region; 63... surface control electrode region; 81... amplifier; 91... first base region; 92... second base region

**Claims**

1.  An acoustic element, **characterized in that** it comprises:

    a voltage generation part, having a vibrating body and a fixed potential electrode in contact with the receiving surface of the vibrating body, and at least a piezoelectric layer is provided at a stress concentration position, which is a part of the vibrating body, on the output surface side of the vibrating body opposite to the receiving surface;
    an impedance transformation element, which uses a specific local area corresponding to the stress concentration position of the piezoelectric layer as a potential transmission area, and operates with the potential of the potential transmission area as a control voltage;
    the pressure of ultrasonic waves applied to the vibrating body is used as the output signal of the impedance transformation element.

2.  The acoustic element according to claim 1, **characterized in that** the impedance conversion element comprises:

    a base region, consisting of a semiconductor region of the first conductivity type;
    first and second main electrode regions, consisting of semiconductor regions of the second conductivity type arranged above the base region and spaced apart from each other;
    and a potential transfer region bonded to the upper surface of the base region located between the first main electrode region and the second main electrode region, so that the potential of the potential transfer region controls the height of the potential barrier generated in the channel between the first main electrode region and the second main electrode region.

3.  The acoustic element according to claim 1, **characterized in that** the impedance transformation element comprises:

    a base region composed of a semiconductor region of a first conductivity type;
    first and second main electrode regions composed of semiconductor regions of a second conductivity type arranged above the base region and spaced apart from each other;
    a gate dielectric film in contact with the upper surface of the base region located between the first main electrode region and the second main electrode region, and having a wider bandgap than the base region;
    and a control electrode arranged on the gate dielectric film and connected to the potential transfer region, so that the potential of the potential transfer region controls the height of the potential barrier generated in the channel between the first main electrode region and the second main electrode region.

4.  The acoustic element according to claim 1, **characterized in that** the impedance transformation element comprises:

    a base region, composed of a semiconductor region of the first conductivity type;
    first and second main electrode regions, composed of semiconductor regions of the first conductivity type arranged in the base region and spaced apart from each other, with a higher impurity density than the base region;

a surface control electrode region, composed of a semiconductor region of the second conductivity type arranged above the base region between the first main electrode region and the second main electrode region, forming a p-n junction with the base region;

an auxiliary control electrode region, composed of a semiconductor region of the second conductivity type arranged below the surface control electrode region opposite the base region, defining a channel region between the first main electrode region and the second main electrode region sandwiched therebetween;

and a control electrode, metallurgically connected to the surface control electrode region and connected to the potential transfer region, so that the potential barrier height generated in the channel is controlled by the potential of the potential transfer region.

5. The acoustic element according to claim 1, **characterized in that** the impedance transformation element is a CMOS inverter, and the input electrode of the CMOS inverter is connected to the potential transfer region, whereby the potential barrier height generated in the respective channels of the p-type active element and n-type active element of the CMOS inverter is controlled by the potential of the potential transfer region.

6. The acoustic element according to claim 1, **characterized in that** the impedance transformation element is a semiconductor integrated circuit, and the potentials of a specific plurality of the potential transfer regions of the voltage generation section are independently transmitted as independent control voltages for a plurality of active elements included in the semiconductor integrated circuit, and the plurality of active elements are individually controlled.

Fig. 1A

Fig. 1B

Fig. 2

Fig. 3A

Fig. 3B

Fig. 4A

Fig. 4B

Fig. 4C

Fig. 4D

Fig. 4E

Fig. 4F

Fig. 5A

Fig. 5B

Fig. 5C

Fig. 5D

Fig. 5E

Fig. 5F

Fig. 6A

Fig. 6B

PZT
$t_{23}$=6.0 $\mu$ m
$t_{22a2}$=2.4 $\mu$ m

$d_{22a2}$=2.4 $\mu$ m

$d_{22a2}$=4.8 $\mu$ m

$d_{22a2}$=7.2 $\mu$ m
$d_{22a2}$=9.6 $\mu$ m

GENERATE VOLTAGE ( $\mu$ V)

THE DISTANCE FROM THE CENTER ( $\mu$ m)

Fig. 6C

Fig. 7A

Fig. 7B

Fig. 7C

Fig. 8A

Fig. 8B

Fig. 9A

Fig. 9B

Fig. 10A

Fig. 10B

Fig. 11A

Fig. 11B

Fig. 11C

Fig. 11D

Fig. 12

Fig. 13

Fig. 14

Fig. 15

Fig. 16A

Fig. 16B

Fig. 16C

EP 4 550 845 A1

Fig. 16D

Fig. 16E

Fig. 16F

Fig. 16G

84

Fig. 16H

Fig. 16I

Fig. 16J

Fig. 16K

Fig. 16L

Fig. 17

Fig. 18A

Fig. 18B

Fig. 18C

Fig. 18D

Fig. 19A

Fig. 19B

Fig. 19C

Fig. 19D

Fig. 19E

Fig. 19F

Fig. 19G

Fig. 19H

Fig. 19I

Fig. 19J

Fig. 19K

Fig. 20

Fig. 21A

Fig. 21B

Fig. 22

Fig. 23

Fig. 24

Fig. 25

Fig. 26

Fig. 27

Fig. 28A

Fig. 28B

Fig. 28C

Fig. 28D

Fig. 29

Fig. 30

Fig. 31

| INTERNATIONAL SEARCH REPORT | International application No. |
|---|---|
| | **PCT/JP2023/023809** |

**A. CLASSIFICATION OF SUBJECT MATTER**

*H04R 17/00*(2006.01)i; *H01L 29/84*(2006.01)i; *H10N 30/30*(2023.01)i
FI: H04R17/00 330H; H01L29/84 C; H01L29/84 J; H04R17/00 330A; H04R17/00 330Y; H04R17/00 330Z; H10N30/30

According to International Patent Classification (IPC) or to both national classification and IPC

**B. FIELDS SEARCHED**

Minimum documentation searched (classification system followed by classification symbols)

H04R17/00; H01L29/84; H10N30/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 52-134481 A (NIPPON MUSICAL INSTRUMENTS MFG) 10 November 1977 (1977-11-10) p. 604, upper right column, line 20 to p. 607, upper right column, line 12, p. 608, lower left column, line 13 to lower right column, line 2, fig. 1a-4 | 1-5 |
| Y | | 6 |
| Y | JP 2010-233224 A (KONICA MINOLTA MEDICAL & GRAPHIC INC) 14 October 2010 (2010-10-14) paragraphs [0001]-[0002], [0031], [0034], [0036], fig. 4, 6 | 6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/023809**

| Patent document cited in search report | | | Publication date (day/month/year) | Patent family member(s) | Publication date (day/month/year) |
|---|---|---|---|---|---|
| JP | 52-134481 | A | 10 November 1977 | (Family: none) | |
| JP | 2010-233224 | A | 14 October 2010 | US 2011/0198968 A1 paragraphs [0001]-[0002], [0042], [0045], [0047], fig. 4, 6 WO 2010/044312 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10562069 B
- JP 2019503095 A

- JP 2020535776 A

**Non-patent literature cited in the description**

- **D. JIAO et al.** High Fill Factor Array of Piezoelectric Micromachined Ultrasonic Transducers with Large Quality Factor. *Sensors and Materials*, 2020, vol. 32 (5), 1785-1795

- **HIROKI MAKINO et al.** Development of high-sensitive and wideband FET-based ultrasound receiver directly driven by piezoelectric effect. *International Ultrasonics Symposium Proceedings*, 2015